(19) Europäisches Patentamt
European Patent Office
Office européen des brevets

(11) **EP 4 701 109 A1**

(12) **EUROPEAN PATENT APPLICATION**
published in accordance with Art. 153(4) EPC

(43) Date of publication:
**25.02.2026 Bulletin 2026/09**

(21) Application number: **24802503.3**

(22) Date of filing: **05.01.2024**

(51) International Patent Classification (IPC):
**H04L 1/16** (2023.01)  **H04W 28/04** (2009.01)

(52) Cooperative Patent Classification (CPC):
**H04L 1/00; H04L 1/06; H04L 1/16; H04L 1/1812; H04L 5/00; H04W 28/04**

(86) International application number:
**PCT/CN2024/070834**

(87) International publication number:
**WO 2024/230214 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.05.2023 CN 202310497804**

(71) Applicant: **ZTE Corporation**
**Shenzhen, Guangdong 518057 (CN)**

(72) Inventors:
• **LIANG, Chulong**
**Shenzhen, Guangdong 518057 (CN)**
• **XU, Jin**
**Shenzhen, Guangdong 518057 (CN)**

• **YUAN, Zhifeng**
**Shenzhen, Guangdong 518057 (CN)**
• **ZHAO, Wei**
**Shenzhen, Guangdong 518057 (CN)**
• **LI, Liguang**
**Shenzhen, Guangdong 518057 (CN)**
• **YU, Guanghui**
**Shenzhen, Guangdong 518057 (CN)**
• **KANG, Jian**
**Shenzhen, Guangdong 518057 (CN)**
• **FU, Qiang**
**Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **INFORMATION TRANSMISSION METHOD, COMMUNICATION DEVICE, STORAGE MEDIUM, AND PROGRAM PRODUCT**

(57) An information transmission method, a communication device, and a storage medium are disclosed. The method includes: receiving a plurality of transport blocks sent by at least one second node, where the plurality of transport blocks form a transport block set; sending feedback information of the transport block set to the at least one second node. The feedback information represents a reception status of the transport blocks sent by the at least one second node, and includes at least two of: a prefix codeword, a padding bit sequence, or a compressed codeword.

FIG. 2

EP 4 701 109 A1

**Description**

**CROSS-REFERENCE TO RELATED APPLICATIONS**

This application is based on and claims the priority of Chinese patent application No. 2023104978046 filed on May 5, 2023, the disclosure of which is incorporated herein by reference in its entirety.

**Technical Field**

Embodiments of the present disclosure relate to the field of communication technologies, and in particular, to an information transmission method, a communication device, a storage medium, and a program product.

**BACKGROUND**

With the advancement of wireless communication technologies, each base station (BS) needs to support connections for tens of thousands of user equipment (UE). Taking the contention-based grant-free (CBGF) random access transmission scheme as an example, the base station does not need to schedule or allocate resources to UEs in advance for data transmission, nor can it pre-determine which UEs have data to send. This creates the possibility that multiple UEs may use the same time and frequency resources for transmission. To enable the base station to distinguish between different UEs during the reception and detection process, a UE transmitting data will randomly select a resource (also referred to as a signature) from the system-provided random access resource pool (such as spread spectrum sequences, pilot sequences, etc.) for data transmission.

Since the base station does not schedule UEs, it needs to provide acknowledgment signaling to each UE regarding whether the data packet was successfully received. However, a single base station must serve thousands or even tens of thousands of UEs simultaneously. If a 1-bit acknowledgment signal is fed back to each served UE, this would require transmitting thousands or tens of thousands of acknowledgment bits. Such excessive feedback overhead leads to a waste of spectrum resources.

**SUMMARY**

The embodiments of the present application provide an information transmission method, a communication device, a storage medium, and a program product, aiming to conserve spectrum resources and improve data transmission efficiency.

In a first aspect of the present application, an embodiment provides an information transmission method, including: receiving a plurality of transport blocks sent by at least one second node, where the plurality of transport blocks form a transport block set; transmitting feedback information of the transport block set to the at least one second node. The feedback information represents a reception status of the transport block sent by the at least one second node, and includes at least two of: a prefix codeword, a padding bit sequence, or a compressed codeword.

In a second aspect of the present application, an embodiment provides an information transmission method, including: sending a transport block to a first node; receiving feedback information sent by the first node according to the transport block. The feedback information represents a reception status of the transport block, and includes at least two of: a prefix codeword, a padding bit sequence, or a compressed codeword.

In a third aspect of the present application, an embodiment provides a communication device, characterized by including: at least one processor; and at least one memory, configured to store at least one program. The at least one program, when executed by the at least one processor, causes the at least one processor to perform the information transmission method as described in the first aspect or the second aspect.

In a fourth aspect of the present application, an embodiment provides a computer-readable medium, characterized by storing a processor-executable program. The processor-executable program, when executed by the processor, causes the processor to perform the information transmission method as described in the first aspect or the second aspect.

In a fifth aspect of the present application, an embodiment provides a computer program product including a computer program or computer instructions, characterized in that the computer program or the computer instructions are stored in a computer-readable storage medium, a processor of a communication device reads the computer program or the computer instructions from the computer-readable storage medium, and the processor executes the computer program or the computer instructions, causing the communication device to perform the information transmission method as described in the first aspect or the second aspect.

## DESCRIPTION OF DRAWINGS

Fig. 1 is a schematic diagram of an application scenario system architecture for an information transmission method provided by an embodiment of the present application.

Fig. 2 is a flowchart of an information transmission method provided by an embodiment of the present application.

Fig. 3 is a flowchart of an information transmission method provided by an embodiment of the present application.

Fig. 4 is a flowchart of a method for determining a transport block error pattern according to an embodiment of the present application.

Fig. 5 is a flowchart of a method for determining a transport block error pattern according to another embodiment of the present application.

Fig. 6 is a flowchart of determining a compressed codeword based on a set of transport block identifiers of a transport block subset according to an embodiment of the present application.

Fig. 7 is a pseudo program code for determining a compressed codeword based on a set of transport block identifiers of a transport block subset according to an embodiment of the present application.

Fig. 8 is a flowchart of determining a compressed codeword based on a transport block error pattern according to another embodiment of the present application.

Fig. 9 shows the pseudo program code for determining a compressed codeword based on a transport block error pattern according to another embodiment of the present application.

Fig. 10 is a schematic diagram of feedback information provided by an embodiment of the present application.

Fig. 11 is a schematic diagram illustrating the relationship between a second node, a transport block, and a user equipment identifier according to an example of the present application.

Fig. 12 is a schematic diagram illustrating the relationship between a second node, a transport block, a random access signature, and a signature index according to an example of the present application.

Fig. 13 is a schematic diagram illustrating the relationship between feedback information, a prefix code, a padding bit sequence, and a compressed codeword according to an example of the present application.

Fig. 14 is a schematic diagram illustrating a relationship between the second node, transport block, random access signature, and signature index according to an example of the present disclosure.

Fig. 15 is a schematic diagram illustrating the relationship between feedback information, prefix code, padding bit sequence, and compressed codeword according to an example of the present disclosure.

Fig. 16 is a schematic diagram illustrating the relationship between the second node, transport block, user equipment identifier, random access signature, and signature index according to an example of the present disclosure.

Fig. 17 is a schematic diagram illustrating the relationship between feedback information, padding bit sequence, compressed codeword, and prefix code according to an example of the present disclosure.

Fig. 18(a) is a schematic diagram illustrating the relationship between the second node, transport block, user equipment identifier, random access signature, and signature index according to an example of the present disclosure.

Fig. 18(b) is a schematic diagram illustrating the relationship between feedback information, prefix code, and padding bit sequence according to an example of the present disclosure.

Fig. 19 is a schematic diagram showing the relationship among feedback information, prefix code, and compressed codeword provided by an example of the present disclosure.

Fig. 20 is a mapping chart of transport block error pattern to compressed codeword according to an example of the present disclosure.

Fig. 21 is a schematic diagram depicting the relationship between feedback information, compressed codeword, and prefix code provided by an example of the present disclosure.

Fig. 22 is a schematic diagram illustrating the relationship among feedback information, prefix code, and compressed codeword provided by an example of the present disclosure.

Fig. 23 is a schematic diagram illustrating the mapping between transport block error pattern and compressed codeword according to an example of the present disclosure.

Fig. 24 is a schematic diagram showing the relationship between second node, transport block, random access signature, and signature index in an example of the present disclosure.

Fig. 25 is a schematic diagram depicting the relationship between feedback information, compressed codeword, and prefix code in an example of the present disclosure.

Fig. 26 is a schematic diagram illustrating the mapping between transport block error pattern and compressed codeword according to an example of the present disclosure.

Fig. 27 is a schematic diagram showing the relationship among feedback information, prefix code, and compressed codeword in an example of the present disclosure.

Fig. 28 is a schematic diagram illustrating the relationship between feedback information, prefix code, and compressed codeword according to an example of the present disclosure.

Fig. 29 is a flowchart of an information transmission method provided by an embodiment of the present disclosure.

Fig. 30 is a flowchart of a decoding result determination method provided by an embodiment of the present disclosure.

Fig. 31 is a structural schematic diagram of an information transmission device provided by an embodiment of the present disclosure.

Fig. 32 is a structural schematic diagram of an information transmission device provided by an embodiment of the present disclosure.

Fig. 33 is a schematic diagram of a base station structure provided by an embodiment of the present application.

Fig. 34 is a schematic diagram of a user equipment structure provided by an embodiment of the present application.

**Detailed Description**

To make the objectives, technical scheme, and advantages of the present disclosure clear, the following further describes the present disclosure in detail with reference to the accompanying drawings and embodiments. It should be understood that the specific embodiments described herein are merely illustrative of the application and are not intended to limit the application.

It should be noted that although functional module divisions are shown in the device schematic diagrams and logical sequences are illustrated in the flowcharts, in some cases, the steps shown or described may be executed in an order different from the module divisions in the devices or the sequences in the flowcharts. The terms "first," "second," etc., in the specification, claims, and the above-mentioned drawings are used to distinguish similar objects and are not necessarily used to describe a specific order or sequence.

In the description of the embodiments of the present disclosure, unless explicitly limited otherwise, terms such as "set," "install," and "connect" should be interpreted broadly. Those skilled in the art can reasonably determine the specific meanings of these terms in the embodiments of the present disclosure based on the detailed content of the technical solutions. In the embodiments of the present disclosure, terms such as "further," "exemplarily," or "optionally" are used to indicate examples, illustrations, or explanations and should not be interpreted as being more preferable or advantageous than other embodiments or design solutions. The use of terms such as "further," "exemplarily," or "optionally" is intended to present related concepts in a specific manner.

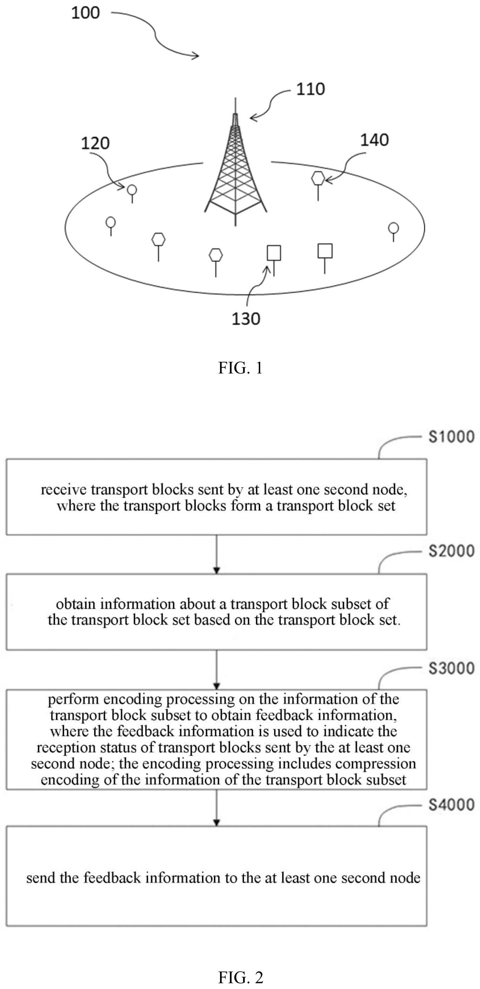

Fig. 1 is a schematic diagram of the application scenario system architecture for an information transmission method provided by an embodiment of the present disclosure. As shown in Fig. 1, in the wireless communication system 100, a base station 110 serves various types of user equipment (120, 130, 140). Each type of user equipment may include one or more devices, thus the base station 110 serves multiple user equipment.

The information transmission method provided by the present disclosure can be applied to various types of wireless communication systems, such as the Internet of Things (IoT), Narrowband Internet of Things (NB-IoT), Long-Term Evolution (LTE), fifth-generation (5G) communication systems, hybrid architectures of LTE and 5G, 5G New Radio (NR) systems, as well as new communication systems emerging in future communication developments. As long as there exists an entity in the communication system capable of receiving a transport block (TB) and transmitting feedback information regarding the reception status of the transport block, and another entity capable of transmitting the transport block and receiving the feedback information about the reception status of the transport block, the information transmission method provided by the embodiments of the present disclosure can be adopted.

The user equipment involved in the embodiments of the present disclosure refers to a device that provides voice and/or data connectivity to users, such as handheld devices or in-vehicle devices with wireless connectivity capabilities. The user equipment may also be other processing devices connected to a wireless modem. The user equipment can communicate with one or more core networks through a radio access network (RAN). The user equipment may also be referred to as a wireless terminal, subscriber unit, subscriber station, mobile station, mobile, remote station, access point, remote terminal, access terminal, user terminal, or user agent. The user equipment may be a mobile terminal, such as a mobile phone (or "cellular" phone) or a computer with a mobile terminal, for example, portable, pocket-sized, handheld, computer-integrated, or vehicle-mounted mobile devices that exchange voice and/or data with the radio access network. For example, the user equipment may also be a personal communication service (PCS) phone, cordless phone, session initiation protocol (SIP) phone, wireless local loop (WLL) station, personal digital assistant (PDA), or other similar devices. Common user equipment includes, but is not limited to, mobile phones, tablets, laptops, PDAs, mobile internet devices (MIDs), and wearable devices such as smartwatches, fitness trackers, pedometers, etc.

The base station involved in the embodiments of the present disclosure may be a Base Transceiver Station (BTS) in Global System for Mobile Communication (GSM) or Code Division Multiple Access (CDMA), a NodeB in Wideband Code Division Multiple Access (WCDMA), an evolved Node B (eNB or e-NodeB) in LTE, a New Radio Controller (NR controller), a gNode B (gNB) in 5G systems, a centralized network element, a new radio base station, a remote radio unit, a micro base station, a relay, a distributed network element, a Transmission Reception Point (TRP), a Transmission Point (TP), or any other wireless access device, but the embodiments are not limited thereto. The network device may cover one or more cells.

Taking the 5G Technical Specification (TS) of the 3rd Generation Partnership Project (3GPP) as an example, the transmission of the UE is scheduled by the base station, so no acknowledgment signaling is required for the downlink. In the uplink, upon receiving a transport block signal transmitted by the base station, the UE uses the Cyclic Redundancy Check (CRC) code of the transport block to determine whether the current transport block is correctly received. If a transport block passes the CRC check, it is considered correctly received, and the UE feeds back a positive acknowledgment (ACK) status (represented by the bit "1") to the base station on the specified time-frequency resources; otherwise, the UE feeds back a negative acknowledgment (NACK) status (represented by the bit "0") to the base station. Depending on the requirements of different scenarios, the acknowledgment status can be transmitted over the five Physical Uplink Control Channel (PUCCH) formats defined in the 5G standard. These five formats are: PUCCH Format 0, PUCCH Format 1, PUCCH Format 2, PUCCH Format 3, and PUCCH Format 4. Among them, PUCCH Formats 0-1 are used to transmit 1 or 2-bit Hybrid Automatic Repeat-reQuest (HARQ) acknowledgment (HARQ-ACK) information and Scheduling Requests, while PUCCH Formats 2-4 are used to transmit Channel State Information (CSI) reports or multi-bit HARQ-ACK information.

Table 1 Examples of resource quantities, transmitted bit counts, and purposes for different PUCCH formats

| PUCCH Format | Number of OFDM Symbols $N_{symb}$ | Number of RBs $N_{RB}$ | Number of REs $N_{RE}$ | Number of Loaded bits A | Purpose |
|---|---|---|---|---|---|
| 0 | 1~2 | 1 | 12 or 24 | $\leq 2$ | HARQ-ACK information feedback, scheduling request |
| 1 | 4~14 | 1 | 48~168 | $\leq 2$ | HARQ-ACK information feedback, scheduling request |
| 2 | 1~2 | >1 | $\geq 12$ | >2 | HARQ-ACK information feedback, scheduling request, CSI report |
| 3 | 4~14 | $\geq 1$ | $\geq 48$ | >2 | HARQ-ACK information feedback, scheduling request, CSI report |
| 4 | 4~14 | 1 | $\geq 48$ | >2 | HARQ-ACK information feedback, scheduling request, CSI report |

Table 1 illustrates the payload size, occupied resource quantity, and purpose under different PUCCH formats, where OFDM denotes Orthogonal Frequency-Division Multiplexing, RB stands for Resource Block, and RE represents Resource Element.

The payload size of PUCCH format 0 and format 1 does not exceed 2 bits. The payload is modulated using Phase-Shift Keying, then multiplied with sequences and spread to generate the transmitted signal. PUCCH formats 2 to 4 employ Channel Coding with polar codes and phase-shift keying to generate the transmitted signal.

As shown in Table 1, a minimum of 6 REs on average is required for transmitting 1 bit of acknowledgement signaling requires. For future large-scale grant-free systems, even if the base station serves only 1000 UEs, at least 6000 REs are needed for acknowledgment feedback (approximately 36 RBs, with each RB containing 12* 14=168 REs). This would occupy a significant amount of spectrum resource. However, in reality, the number of UEs with data transmission at any given time is far fewer than 1000 (often only a few dozen), resulting in low efficiency in acknowledgment signaling feedback.

Based on this, embodiments of the present application provide an information transmission method, communication device, storage medium, and program product. The acknowledgment signaling of multiple UEs that correctly or incorrectly received the data is compressed by performing compression encoding on the information of correctly or incorrectly received transport block sets. This significantly reduces or even minimizes the number of input bits for channel coding (in most cases, only 1 bit more than optimal compression). After channel coding and modulation, the signal is transmitted. Each UE decodes and decompresses the received acknowledgment signaling to extract the corresponding acknowledgment, thereby achieving the goal of conserving spectrum resources and improving data transmission efficiency.

It should be noted that in all embodiments of the present disclosure, $\lceil x \rceil$ represents the smallest integer greater than or equal to x, $\lfloor x \rfloor$ represents the largest integer less than or equal to x, $\binom{x}{y}$ represents the combination number of x

choose y, $log_2 x$ represents the base-2 logarithm of x, max denotes the maximum function, and mod denotes the modulo function. For example: 0 mod 2 = 0, 1 mod 2 = 1, 3 mod 2 = 1, 5 mod 3 = 2, or mod(x, y) represents the remainder of x divided by y, such as mod(0, 2) = 0, mod(1, 2) = 1, mod(3, 2) = 1, mod(5, 3) = 2. These will not be reiterated in the following text.

Fig. 2 is a flowchart of an information transmission method provided by an embodiment of the present disclosure. As shown in Fig. 2, the information transmission method provided by the embodiments of the present disclosure can be applied to any network element with data reception and signaling transmission capabilities, such as base stations, relays, or terminal devices, and includes but is not limited to steps S1000, S2000, S3000, and S4000.

At the step S1000, a plurality of transport blocks sent by at least one second node are received. The transport blocks form a transport block set.

In some embodiments, a first node receives a signal containing a transport block sent by a second node. The second node may send one or more transport blocks to the first node, and the one or more transport blocks sent form a transport block set.

In other embodiments, the first node receives signals containing transport blocks sent by multiple second nodes. The multiple second nodes form a sequence of second nodes, and each of the multiple second nodes may send one or more transport blocks to the first node. All transport blocks sent by the multiple second nodes form a transport block set. The second node sequence includes Nu second nodes, and the transport block set includes NT transport blocks; where Nu and NT are positive integers, and Nu is less than or equal to NT. It is to be understood that "multiple" refers to two or more.

In some embodiments, a transport block in the transport block set includes a transport block identifier which is an element of an ordered set of transport block identifiers. The ordered set of transport block identifiers includes Na transport block identifiers I(1), 1(2), ..., I(Na), where Na is the size of the ordered set of transport block identifiers; for i = 1, 2, ..., Na, the i-th element of the ordered set of transport block identifiers is I(i); where the i-th element I(i) of the ordered set of transport block identifiers is an integer. In some examples, the i-th element I(i) of the ordered set of transport block identifiers may be the integer i or the integer i-1.

In some embodiments, the transport block is indicated by the transport block identifier.

In some embodiments, the transport block identifier may be one of the following: a user equipment identifier (UE identifier), an index value of the UE identifier, or a signature index.

In some embodiments, the UE identifier is an UE identifier of a second node in a second node sequence, where the UE identifiers of two different second nodes in the second node sequence are distinct. The UE identifier may be used by the first node to distinguish different transport blocks within a transport block set in a signal containing the transport block set, where the UE identifier is an integer.

It should be noted that the UE identifier may be a Subscription Permanent Identifier (SUPI), Generic Public Subscription Identifier (GPSI), Permanent Equipment Identifier (PEI), Network Access Identifier (NAI), Subscription Concealed Identifier (SUCI), Globally Unique Temporary Identity (GUTI), Radio Network Temporary Identifier (RNTI), System Information RNTI (SI-RNTI), Paging RNTI (P-RNTI), Random Access RNTI (RA-RNTI), Temporary Cell RNTI (TC-RNTI), Cell RNTI (C-RNTI), Transmit Power Control-PUCCH RNTI (TPC-PUCCH-RNTI), Transmit Power Control-PUSCH RNTI (TPC-PUSCH-RNTI), Transmit Power Control-Sounding Reference Symbols RNTI (TPC-SRS-RNTI), Interruption RNTI (INT-RNTI), Modulation Coding Scheme Cell RNTI (MCS-C-RNTI), Configured Scheduling RNTI (CS-RNTI), Slot Format Indication RNTI (SFI-RNTI), Semi-Persistent CSI RNTI (SP-CSI-RNTI), etc.

In some embodiments, the transport block identifier is the UE identifier, and the element of the ordered set of transport block identifiers is the UE identifier.

In some examples, the ordered set of transport block identifiers I = <1(1), I(2), I(3), I(4), I(5)> = <0, 1, 2, 3, 4>; where the size of the ordered set of transport block identifiers is Na = 5, and the UE identifier corresponding to the second element I(2) in the ordered set of transport block identifiers is 1. In some examples, the ordered set of transport block identifiers I = <1(1), 1(2), 1(3), 1(4), 1(5)> = <1, 2, 3, 4, 5>; where the size of the ordered set of transport block identifiers is Na = 5, and the UE identifier corresponding to the second element I(2) in the ordered set of transport block identifiers is 2. In some examples, the ordered set of transport block identifiers I = <1(1), I(2), I(3), I(4)> = <0, 11, 20, 30>; where the size of the ordered set of transport block identifiers is Na = 4, and the UE identifier corresponding to the second element I(2) in the ordered set of transport block identifiers is 11.

In some embodiments, the index value of the UE identifier refers to an index k of the element I(k) in the ordered set of transport block identifiers I = <1(1), I(2), ..., I(Na)>, where k = 1, 2, ..., Na, and the index value of the UE identifier is an integer.

In some embodiments, the transport block identifier is the index value of the UE identifier. The UE identifier is an element in the ordered set of UE identifiers, and the ordered set of UE identifiers includes Na UE identifiers ID(1), ID(2), ..., ID(Na); where, Na is the size of the ordered set of UE identifiers and also the size of the ordered set of transport block identifiers, k = 1, 2, ..., Na. The index value of the k-th UE identifier ID(k) in the ordered set of UE identifiers corresponds to the k-th element I(k) in the ordered set of transport block identifiers. In some examples, the ordered set of UE identifiers ID = <ID(1), ID(2), ID(3), ID(4)> = <0, 11, 20, 30>, and the corresponding ordered set of transport block identifiers I = <I(1), 1(2), I(3), I(4)> = <0, 1, 2, 3>; where, the size of the ordered set of UE identifiers and the size of the ordered set of transport block identifiers are both Na = 4, and the index value of the UE identifier for the element ID(2) = 11 in the ordered set of UE identifiers is the element I(2) = 1 in the ordered set of transport block identifiers. In some examples, the ordered set of UE identifiers ID = <ID(1), ID(2), ID(3), ID(4)> = <11, 0, 20, 30>, and the corresponding ordered set of transport block identifiers I = <1(1), I(2), I(3), I(4)> = <0, 1, 2, 3>; where, the size of the ordered set of UE identifiers and the size of the ordered set of transport block identifiers are both Na = 4, and the index value of the UE identifier for the element ID(2) = 0 in the ordered set of UE identifiers is the element I(2) = 1 in the ordered set of transport block identifiers. In some examples, the ordered set of UE identifiers ID = <ID(1), ID(2), ID(3), ID(4)>=<11, 0, 20, 30>, and the corresponding ordered set of transport block identifiers I = <1(1), 1(2), I(3), I(4)> = <1, 2, 3, 4>; where, the size of the ordered set of UE identifiers and the size of the ordered set of transport block identifiers are both Na = 4, and the index value of the UE identifier for the element ID(2) = 0 in the ordered set of UE identifiers is the element I(2) = 2 in the ordered set of transport block identifiers.

In some embodiments, the transport block identifier is a signature index which is the signature index of a random access signature, i.e., a transport block in the transport block set includes a random access signature which is an element in the ordered set of random access signatures, and the ordered set of random access signatures includes Na random access signatures r(1), r(2), ..., r(Na); where, Na is the size of the ordered set of random access signatures and also the size of the ordered set of transport block identifiers, i = 1, 2, ..., Na, and the signature index of the i-th random access signature r(i) in the ordered set of random access signatures is the i-th element I(i) in the ordered set of transport block identifiers, where the i-th element I(i) in the ordered set of transport block identifiers may be the integer i or the integer i-1.

It should be noted that the random access signature may be a Pilot, Reference Signal, Preamble, Spread Spectrum Sequence, Interleaver, Interleaver Pattern, Interleaver Sequence, Scrambling Sequence, Sparse Code Sequence, etc.

In some embodiments, the second node determines a random access signature of a transport block as the random access signature included in a transport block within the transport block set based on an UE identifier of the second node. These random access signatures can be used by the first node to distinguish different transport blocks within the transport block set in a signal containing the transport block set.

In some embodiments, the second node determines a random access signature included in a transport block as the random access signature included in a transport block within the transport block set based on higher layer parameters. These random access signatures can be used by the first node to distinguish different transport blocks within the transport block set in a signal containing the transport block set.

It should be noted that the first node and the second node can be any network elements with data reception and signaling transmission capabilities, such as base stations, relays, or terminal devices.

At the step S2000, information about a transport block subset of the transport block set is obtained based on the transport block set.

It should be noted that the transport block subset is a set composed of correct transport blocks or erroneous transport blocks within the transport block set.

In some embodiments, the information of the transport block subset includes a set of transport block identifiers of the transport block subset, a maximum number of transport blocks Pmax of the transport block subset, the number of transport blocks P of the transport block subset, the ordered set of transport block identifiers, a size of ordered set of transport block identifiers Na, a length of feedback information Nf, and a transport block error pattern a. It should be noted that the feedback information can be obtained based on one or more of the aforementioned information of the transport block subset, meaning that not all the above information is necessarily required to generate the feedback information.

In some embodiments, when the transport block subset is a set composed of correct transport blocks from the transport block set, the set of transport block identifiers of the transport block subset is a set of correct transport block identifiers. The maximum number of transport blocks of the transport block subset is the maximum number of correct transport blocks Pmax, and the number of transport blocks of the transport block subset is the number of correct transport blocks p.

In some examples, when the transport block subset is a set composed of correct transport blocks from the transport block set, the information of the transport block subset is the information of the set of correct transport blocks. Here, the information of the set of correct transport blocks includes the maximum number of correct transport blocks Pmax, the ordered set of transport block identifiers, the size of ordered set of transport block identifiers Na, the set of correct transport block identifiers, the number of correct transport blocks p, the transport block error pattern a, and the length of feedback information f Nf. It should be noted that the feedback information can be obtained based on the information of one or more correct transport blocks mentioned above, i.e., the generation of feedback information does not necessarily require all the aforementioned information.

In some embodiments, when the transport block subset is a set composed of erroneous transport blocks from the transport block set, the transport block identifier set of the transport block subset is a set of erroneous transport block identifiers. The maximum number of transport blocks in the transport block subset is the maximum number of erroneous transport blocks Pmax, and the number of transport blocks in the transport block subset is the number of erroneous transport blocks P.

In some examples, when the transport block subset is a set composed of erroneous transport blocks from the transport block set, the information of the transport block subset is the information of the set of erroneous transport blocks. Here, the information of the set of erroneous transport blocks includes the maximum number of erroneous transport blocks Pmax, the ordered set of transport block identifiers, the size of the ordered set of transport block identifiers Na, the set of erroneous transport block identifiers, the number of erroneous transport blocks P, the transport block error pattern a, and the length of feedback information f Nf. It should be noted that the feedback information can be obtained based on one or more pieces of information about the erroneous transport blocks mentioned above, i.e., the generation of feedback information does not necessarily require all the aforementioned information.

In some embodiments, the maximum number of transport blocks Pmax of the transport block subset is equal to the size of the ordered set of transport block identifiers Na. In other embodiments, the maximum number of transport blocks Pmax of the transport block subset is configured by the first node. In yet other embodiments, the maximum number of transport blocks Pmax of the transport block subset is preconfigured by higher layer parameters. In still other embodiments, the maximum number of transport blocks Pmax of the transport block subset is less than or equal to $\frac{Na+1}{3}$, where Na is the size of the ordered set of transport block identifiers.

In some embodiments, the transport block subset is the set of correct transport blocks, and the information of the set of correct transport blocks includes the set of correct transport block identifiers, which is the set of UE identifiers included in the correctly received transport blocks within the transport block set. A correctly received transport block refers to a transport block whose acknowledgment status is a positive acknowledgment (ACK). A UE identifier belonging to the set of correct transport block identifiers indicates that the acknowledgment status of the transport block corresponding to that UE identifier is a positive acknowledgment (ACK), while a UE identifier not belonging to the set of correct transport block identifiers indicates that the acknowledgment status of the transport block corresponding to that UE identifier is a negative acknowledgment (NACK).

In other embodiments, the transport block subset is the set of erroneous transport blocks, and the information of the set of erroneous transport blocks includes the set of erroneous transport block identifiers, which is the set of UE identifiers included in the erroneously received transport blocks within the transport block set. An erroneously received transport block refers to a transport block whose acknowledgment status is a negative acknowledgment (NACK). A UE identifier belonging to the set of erroneous transport block identifiers indicates that the acknowledgment status of the transport block corresponding to that UE identifier is a negative acknowledgment (NACK), while a UE identifier not belonging to the set of erroneous transport block identifiers indicates that the acknowledgment status of the transport block corresponding to that UE identifier is a positive acknowledgment (ACK).

In some embodiments, the transport block subset is the set of correct transport blocks, and the information of the correct transport block set includes the set of correct transport block identifiers. The set of correct transport block identifiers is a collection of index values of UE identifiers included in the correctly received transport blocks within the transport block set. A correctly received transport block refers to a transport block whose acknowledgment status is a positive acknowledgment (ACK). An index value of a UE identifier belonging to the set of correct transport block identifiers is used to indicate that the acknowledgment status of the transport block corresponding to that index value of the UE identifier is ACK, while an index value of a UE identifier not belonging to the set of correct transport block identifiers is used to indicate that the acknowledgment status of the transport block corresponding to that index value of the UE identifier is NACK.

In other embodiments, the transport block subset is the set of erroneous transport blocks, and the information of the erroneous transport block set includes the set of erroneous transport block identifiers. The set of erroneous transport block identifiers is a collection of index values of UE identifiers included in the erroneously received transport blocks within the transport block set. An erroneously received transport block refers to a transport block whose acknowledgment status is a negative acknowledgment (NACK). An index value of a UE identifier belonging to the set of erroneous transport block identifiers is used to indicate that the acknowledgment status of the transport block corresponding to that index value of the UE identifier is NACK, while an index value of a UE identifier not belonging to the set of erroneous transport block identifiers is used to indicate that the acknowledgment status of the transport block corresponding to that index value of the UE identifier is ACK.

In some embodiments, the transport block subset is the set of correct transport blocks, and the information of the correct transport block set includes the set of correct transport block identifiers. The set of correct transport block identifiers is a collection of signature indices of random access signatures corresponding to the correctly received transport blocks within the transport block set. A correctly received transport block refers to a transport block whose acknowledgment status is positive acknowledgment (ACK). A signature index of a random access signature belonging to the set of correct transport block identifiers indicates that the acknowledgment status of the transport block corresponding to that random access signature is positive acknowledgment (ACK). A signature index of a random access signature not belonging to the set of correct transport block identifiers indicates that the acknowledgment status of the transport block corresponding to that random access signature is negative acknowledgment (NACK).

In other embodiments, the transport block subset is the set of erroneous transport blocks, and the information of the erroneous transport block set includes the set of erroneous transport block identifiers. The set of erroneous transport block identifiers is a collection of signature indices of random access signatures corresponding to erroneously received transport blocks in the transport block set. An erroneously received transport block refers to a transport block whose acknowledgment status is negative acknowledgment (NACK). A signature index of a random access signature belonging to the set of erroneous transport block identifiers indicates that the acknowledgment status of the transport block corresponding to that signature index is negative acknowledgment (NACK). A signature index of a random access signature not belonging to the set of erroneous transport block identifiers indicates that the acknowledgment status of the transport block corresponding to that signature index is positive acknowledgment (ACK).

At the step S3000, encoding processing is performed on the information of the transport block subset to obtain feedback information which characterizes the reception status of transport blocks sent by the at least one second node. The encoding processing includes compression encoding of the information of the transport block subset.

It is understandable that compression encoding may include at least one of the following source coding algorithms: arithmetic coding, Huffman coding, or Shannon-Fano coding.

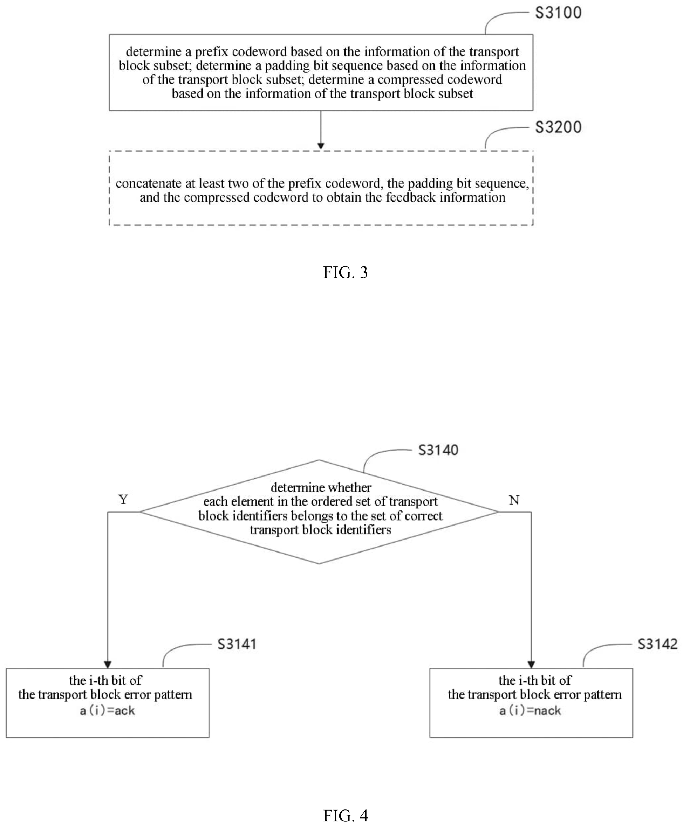

Fig. 3 is a flowchart illustrating "encoding information of a transport block subset to obtain feedback information" according to an embodiment of the present application. As shown in Fig. 3, the encoding of the information of the transport block subset to obtain feedback information includes a following step S3100.

At the step S3100, a prefix codeword is determine based on the information of the transport block subset, a padding bit sequence is determine based on the information of the transport block subset, and a compressed codeword is determine based on the information of the transport block subset.

In some embodiments, determining the prefix codeword based on the information of the transport block subset includes: determining the number of prefix codeword bits Np based on the information of the transport block subset; then determining the prefix codeword based on the number of prefix codeword bits Np.

In some embodiments, the number of prefix codeword bits Np is determined based on the maximum number of transport blocks Pmax of the transport block subset and the number of transport blocks P of the transport block subset.

In some examples, the number of prefix codeword bits Np = Pmax - P + 1.

In some embodiments, the transport block subset is the set of correct transport blocks, and the number of prefix codeword bits Np is determined based on the maximum number of correct transport blocks Pmax and the size of the set of correct transport block identifiers, where $P_{ACK}$ is the size of the set of correct transport block identifiers.

In some examples, the number of prefix codeword bits Np = Pmax - $P_{ACK}$ + 1.

In other embodiments, the transport block subset is the set of erroneous transport blocks, and the number of prefix codeword bits Np is determined based on the maximum number of erroneous transport blocks Pmax and the size of the set of erroneous transport block identifiers, where $P_{NACK}$ is the size of the set of erroneous transport block identifiers.

In some examples, the number of prefix codeword bits Np = Pmax - $P_{NACK}$ + 1.

In some embodiments, the number of prefix codeword bits Np is determined based on at least one of the following parameters: the maximum number of transport blocks Pmax in the transport block subset, the number of transport blocks P in the transport block subset, the size of the ordered set of transport block identifiers Na, and the length of feedback information f Nf.

In some examples, the number of prefix codeword bits $Np = 1 + \left\lceil log_2 \binom{Na}{Pmax} \right\rceil - \left\lceil log_2 \binom{Na}{P} \right\rceil$; or the number of prefix codeword bits $Np = \max_{x=0,1,\cdots,Pmax} \left( Pmax\text{-}x + 1 + \left\lceil log_2 \binom{Na}{x} \right\rceil \right) - \left\lceil log_2 \binom{Na}{P} \right\rceil$; or the number of prefix codeword bits $Np = Pmax - \left\lfloor \frac{Na+1}{3} \right\rfloor + 1 + \left\lceil log_2 \binom{Na}{\lfloor \frac{Na+1}{3} \rfloor} \right\rceil - \left\lceil log_2 \binom{Na}{P} \right\rceil$; or the number of prefix codeword bits $Np = Nf - \left\lceil log_2 \binom{Na}{P} \right\rceil$.

In some embodiments, determining the prefix codeword based on the number of prefix codeword bits Np includes: determining the first Np - 1 bits of the prefix codeword as "1", and the last bit of the prefix codeword as "0".

In some examples, the number of prefix codeword bits Np = 1, and the prefix codeword is [0]; the number of prefix codeword bits Np = 4, and the prefix codeword is [1, 1, 1, 0]; the number of prefix codeword bits Np = 9, and the prefix codeword is [1, 1, 1, 1, 1, 1, 1, 1, 0].

In other embodiments, determining the prefix codeword based on the number of prefix codeword bits Np includes: determining the first Np - 1 bits of the prefix codeword as "0", and the last bit of the prefix codeword as "1".

In some examples, the number of prefix codeword bits Np = 1, and the prefix codeword is [1]; the number of prefix codeword bits Np = 4, and the prefix codeword is [0, 0, 0, 1]; the number of prefix codeword bits Np = 9, and the prefix codeword is [0, 0, 0, 0, 0, 0, 0, 0, 1].

In other embodiments, determining the prefix codeword based on the number of prefix codeword bits Np includes: determining the first bit of the prefix codeword as "0", and the remaining Np - 1 bits of the prefix codeword as "1".

In some examples, the number of prefix codeword bits Np = 1, and the prefix codeword is [0]; the number of prefix codeword bits Np = 4, and the prefix codeword is [1, 0, 0, 0]; the number of prefix codeword bits Np = 9, and the prefix codeword is [1, 0, 0, 0, 0, 0, 0, 0, 0].

In other embodiments, determining the prefix codeword based on the number of prefix codeword bits Np includes: setting the first bit of the prefix codeword to "1" and setting the remaining Np - 1 bits of the prefix codeword to "0".

In some examples, the number of prefix codeword bits Np = 1, and the prefix codeword is [1]; the number of prefix codeword bits Np = 4, and the prefix codeword is [0, 1, 1, 1]; the number of prefix codeword bits Np = 9, and the prefix codeword is [0, 1, 1, 1, 1, 1, 1, 1, 1].

It should be noted that a purpose of the prefix code is to indicate either the number of transport blocks P in the transport block subset or the size of the set of transport block identifiers in the transport block subset. The advantage of the prefix code is that when receiving feedback information, the number of correct or erroneous transport blocks P can be determined simply by counting consecutive "0"s or "1"s.

In some embodiments, determining the padding bit sequence based on the information of the transport block subset includes: the padding bit sequence being a Null sequence, i.e., there is no padding bit sequence.

In some embodiments, determining the padding bit sequence based on the information of the transport block subset includes: determining a length of the padding bit sequence Nfb based on the information of the transport block subset; then determining the padding bit sequence based on the length of the padding bit sequence length Nfb.

In some embodiments, the length of the padding bit sequence Nfb is determined based on the size of the ordered set of transport block identifiers Na, the maximum number of transport blocks Pmax in the transport block subset, and the number of transport blocks P in the transport block subset.

In some examples, the length of the padding bit sequence

$$\text{Nfb} = 1 + \left\lceil log_2 \binom{Na}{Pmax} \right\rceil - \left\lceil log_2 \binom{Na}{P} \right\rceil - (Pmax - P + 1) = \left\lceil log_2 \binom{Na}{Pmax} \right\rceil - \left\lceil log_2 \binom{Na}{P} \right\rceil - Pmax + P$$

; or the length of the padding bit sequence $\text{Nfb} = N' - (Pmax - P + 1) - \left\lceil log_2 \binom{Na}{P} \right\rceil$, where

$$N' = \max_{x=0,1,\cdots,Pmax} \left( Pmax - x + 1 + \left\lceil log_2 \binom{Na}{x} \right\rceil \right)$$

; or the length of the padding bit sequence

$$\text{Nfb} = Nf - (Pmax - P + 1) - \left\lceil log_2 \binom{Na}{P} \right\rceil$$, where Nf is the length of feedback information; or the length of the

padding bit sequence $\text{Nfb} = Pmax - \left\lfloor \frac{Na+1}{3} \right\rfloor + 1 + \left\lceil log_2 \binom{Na}{\lfloor \frac{Na+1}{3} \rfloor} \right\rceil - (Pmax - P + 1) - \left\lceil log_2 \binom{Na}{P} \right\rceil$, i.e.,

$$\text{Nfb} = P - \left\lfloor \frac{Na+1}{3} \right\rfloor + \left\lceil log_2 \binom{Na}{\lfloor \frac{Na+1}{3} \rfloor} \right\rceil - \left\lceil log_2 \binom{Na}{P} \right\rceil .$$

In some embodiments, the length of the padding bit sequence Nfb is determined based on the length of feedback information Nf, the length of the prefix codeword Np, the size of the ordered set of transport block identifiers Na, and the number of transport blocks P in the transport block subset.

In some examples, the length of the padding bit sequence $\text{Nfb} = Nf - Np - \left\lceil log_2 \binom{Na}{P} \right\rceil .$

In some embodiments, the length of the padding bit sequence Nfb is determined based on at least one of the following parameters: the length of feedback information Nf, the length of the prefix codeword Np, the size of the ordered set of transport block identifiers Na, the maximum number of transport blocks Pmax in the transport block subset, and the number of transport blocks P in the transport block subset.

In some examples, the length of the padding bit sequence $\text{Nfb} = Nf - (Pmax - P + 1) - \left\lceil log_2 \binom{Na}{P} \right\rceil$; or

the length of the padding bit sequence $\text{Nfb} = 1 + \left\lceil log_2 \binom{Na}{Pmax} \right\rceil - Np - \left\lceil log_2 \binom{Na}{P} \right\rceil$; or the length of the

padding bit sequence $\text{Nfb} = N' - Np - \left\lceil log_2 \binom{Na}{P} \right\rceil$, where

$$N' = \max_{x=0,1,\cdots,Pmax} \left( Pmax - x + 1 + \left\lceil log_2 \binom{Na}{x} \right\rceil \right)$$; or the length of the padding bit sequence

$$Nfb = Pmax - \left\lfloor \frac{Na+1}{3} \right\rfloor + 1 + \left\lceil log_2 \left( \left\lfloor \frac{Na}{\left\lfloor \frac{Na+1}{3} \right\rfloor} \right\rfloor \right) \right\rceil - Np - \left\lceil log_2 \binom{Na}{P} \right\rceil .$$

In some embodiments, determining the padding bit sequence method based on the length of the padding bit sequence Nfb includes: determining the padding bit sequence as an all-zero sequence [0, ..., 0] of length Nfb.

In other embodiments, determining the padding bit sequence method based on the length of the padding bit sequence Nfb includes: determining the padding bit sequence as an all-one sequence [1, ..., 1] of length Nfb.

In other embodiments, determining the padding bit sequence method based on the length of the padding bit sequence Nfb includes: determining the padding bit sequence as a pseudo-random sequence of length Nfb.

In other embodiments, determining the padding bit sequence method based on the length of the padding bit sequence Nfb includes: determining the padding bit sequence as a predefined sequence of length Nfb known to both the first node and the second node.

In other embodiments, determining the padding bit sequence method based on the length of the padding bit sequence Nfb includes: determining the padding bit sequence as a Null sequence when the length of the padding bit sequence Nfb is 0.

A purpose of the padding bit sequence is to ensure that the length of feedback information remains consistent across different numbers of transport blocks P in transport block subsets, thereby eliminating the need for the second node to perform blind detection to determine the length of feedback information, and reducing decoding complexity.

In some embodiments, the compressed codeword is directly determined based on the information of the transport block subset, where the compressed codeword is a bit sequence of length Nc. The information of the transport block subset includes at least one of the following: the maximum number of transport blocks Pmax of the transport block subset, the ordered set of transport block identifiers, the size of the ordered set of transport block identifiers Na, the set of transport block identifiers of the transport block subset, the number of transport blocks P of the transport block subset, or the transport block error pattern a.

In some embodiments, when the information of the transport block subset includes the set of transport block identifiers of the transport block subset, compression encoding is performed on the set of transport block identifiers to determine the compressed codeword.

In some embodiments, when the information of the transport block subset includes the transport block error pattern a, the compressed codeword can be determined based on the transport block error pattern a.

It should be noted that the transport block error pattern a is determined based on at least one of the following: the ordered set of transport block identifiers, the size of the ordered set of transport block identifiers Na, the set of transport block identifiers of the transport block subset, or the number of transport blocks P of the transport block subset.

Fig. 4 is a flowchart illustrating a method for determining the transport block error pattern a according to an embodiment of the present application. As shown in Fig. 4, the transport block error pattern a is determined through following steps S3140, S3141, and S3142. In some examples, the set of transport block identifiers for the transport block subset in this embodiment is the set of correct transport block identifiers.

At the step S3140, it is determined whether each element in the ordered set of transport block identifiers belongs to the set of correct transport block identifiers.

At the step S3141, if the i-th element in the ordered set of transport block identifiers belongs to the set of correct transport block identifiers, then the i-th bit a(i) of the transport block error pattern is set to ack.

At the step S3142, if the i-th element in the ordered set of transport block identifiers does not belong to the set of correct transport block identifiers, the i-th bit a(i) of the transport block error pattern is set to nack.

It can be understood that the "ack" bit is used to indicate that the acknowledgment status of the transport block is a positive acknowledgment (ACK), and the "nack" bit is used to indicate that the acknowledgment status of the transport block is a negative acknowledgment (NACK). That is, for a(i)=ack, it indicates that the acknowledgment status of the transport block corresponding to the i-th element in the ordered set of transport block identifiers is a positive acknowledgment (ACK), and for a(i)=nack, it indicates that the acknowledgment status of the transport block corresponding to the i-th element in the ordered set of transport block identifiers is a negative acknowledgment (NACK).

In some embodiments, the "ack" bit is bit "1", and the "nack" bit is bit "0".

In some embodiments, the "ack" bit is bit "0", and the "nack" bit is bit "1".

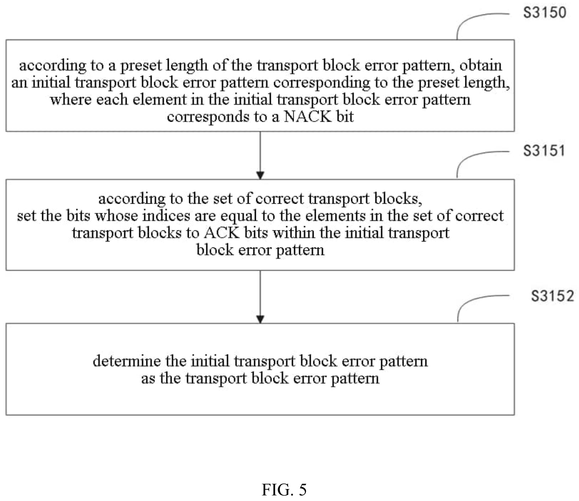

Fig. 5 is a flowchart of a method for determining the transport block error pattern a according to another embodiment of the present disclosure. As shown in Fig. 5, the transport block error pattern a is determined through following steps S3150, S3151, and S3152. In some examples, the transport block subset in this embodiment is the set of correct transport blocks.

At the step S3150, obtain the initial pattern of the transport block error pattern corresponding to the preset length is obtained according to the preset length of the transport block error pattern, where each element in the initial pattern of the transport block error pattern corresponds to a nack bit.

In some embodiments, the transport block error pattern is a sequence of length Na where each element is a nack bit, where Na is the size of the ordered set of transport block identifiers.

At the step S3151 the bits in the initial pattern of the transport block error pattern whose sequence numbers equal the elements in the set of correct transport blocks is set to be ack bits according to the set of correct transport blocks.

At the step S3152, the initial pattern of the transport block error pattern is determined as the transport block error pattern.

In some embodiments, based on the set of correct transport blocks BI = {BI(1), B(2), ..., BI(P)}, for i=1, 2, ..., P, the BI(i)-th bit in the initial pattern of the transport block error pattern is set to be a(B1(i))=ack, and the updated initial pattern of the transport block error pattern becomes the transport block error pattern, where P is the number of correct transport blocks.

It should be understood that the ack bit is used to indicate the acknowledgment status of a transport block as a positive acknowledgment (ACK), and the nack bit is used to indicate the acknowledgment status of a transport block as a negative acknowledgment (NACK). That is, for a(i)=ACK, it indicates that the acknowledgment status of the transport block corresponding to the i-th element in the ordered set of transport block identifiers is a positive acknowledgment (ACK); for a(i)=NACK, it indicates that the acknowledgment status of the transport block corresponding to the i-th element in the ordered set of transport block identifiers is a negative acknowledgment (NACK).

In some embodiments, the ack bit is bit "1", and the nack bit is bit "0".

In some embodiments, the ack bit is bit "0", and the nack bit is bit "1".

In some embodiments, a length of the compressed codeword is determined based on the size of the ordered set of transport block identifiers and the number of transport blocks in the transport block subset.

In some examples, the length Nc of the compressed codeword is equal to $\left\lceil log_2 \binom{Na}{P} \right\rceil$, where Na represents the size of the ordered set of transport block identifiers, and P denotes the number of correct transport blocks. The compressed codeword is obtained by mapping $\binom{Na}{P}$ bit sequences of length Na containing P ack bits to a bit sequence of length $\left\lceil log_2 \binom{Na}{P} \right\rceil$ through arithmetic coding.

In some embodiments, the length of the compressed codeword is determined based on the length of the transport block error pattern and the number of correct transport blocks.

In some examples, the length Nc of the compressed codeword equals $\left\lceil log_2 \binom{Na}{P} \right\rceil$, where Na represents the length of the transport block error pattern a, and P indicates the number of correct transport blocks.

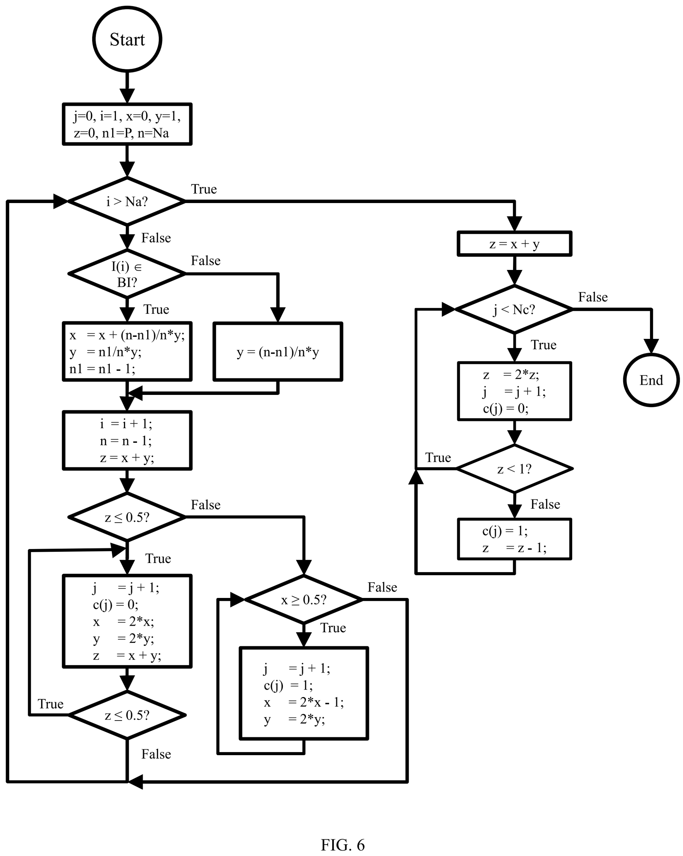

Fig. 6 is a flowchart illustrating the determination of the compressed codeword based on the set of transport block identifiers of the transport block subset according to an embodiment of the present application. As shown in Fig. 6, BI is the set of transport block identifiers of the transport block subset, P is the number of transport blocks in the transport block subset, I(1), 1(2), ..., I(Na) are the Na elements included in the ordered set of transport block identifiers, and Na is the size of the ordered set of transport block identifiers. The method flowchart ultimately outputs a bit representation of the compressed codeword with a length of $\left\lceil log_2 \binom{Na}{P} \right\rceil$. In some examples, the transport block subset in this embodiment is the set of correct transport blocks.

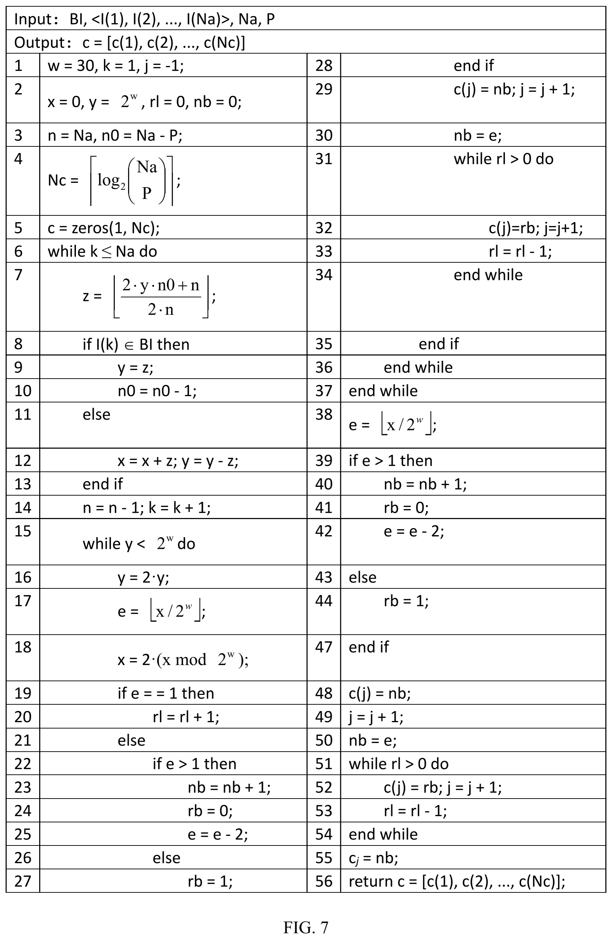

Fig. 7 is a pseudo program code illustrating the determination of the compressed codeword based on the set of transport block identifiers of the transport block subset according to an embodiment of the present application. As shown in Fig. 7, BI is the set of transport block identifiers of the transport block subset, P is the number of transport blocks in the transport block subset, 1(1), 1(2), ..., I(Na) are the Na elements included in the ordered set of transport block identifiers, and Na is the size of the ordered set of transport block identifiers. The method code ultimately outputs a bit representation of the compressed codeword c = [c(1), c(2), ..., c(Nc)] with a length of $Nc = \left\lceil log_2 \binom{Na}{P} \right\rceil$.

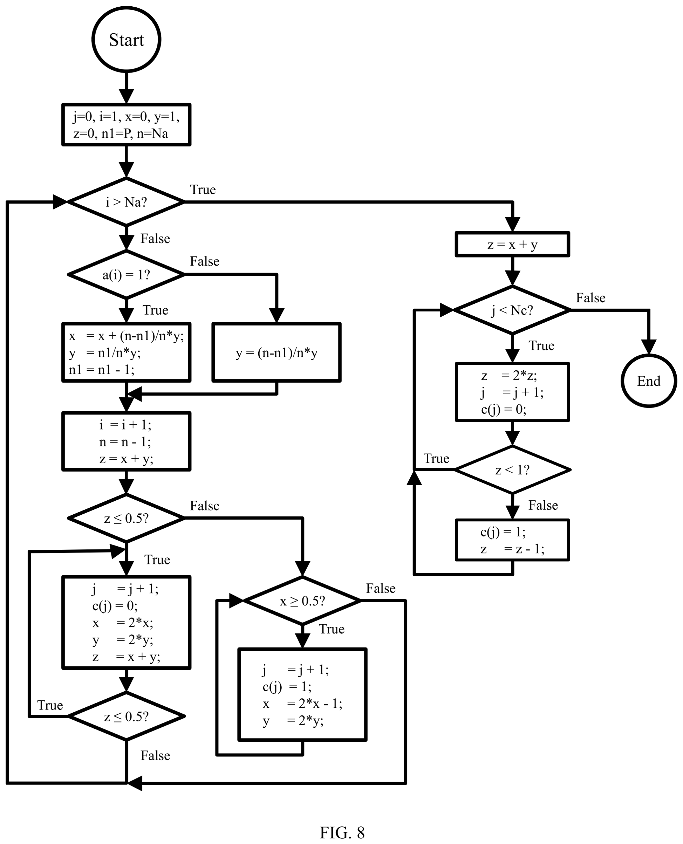

Fig. 8 is a flowchart of determining the compressed codeword based on the transport block error pattern according to another embodiment of the present application. As shown in Fig. 8, Na is the length of transport block error pattern a, and P is the number of transport blocks in the transport block subset. The flowchart of this method ultimately outputs the bit representation of the compressed codeword with length $\left\lceil log_2 \binom{Na}{P} \right\rceil$. In some examples, the transport block subset in this embodiment is the set of correct transport blocks.

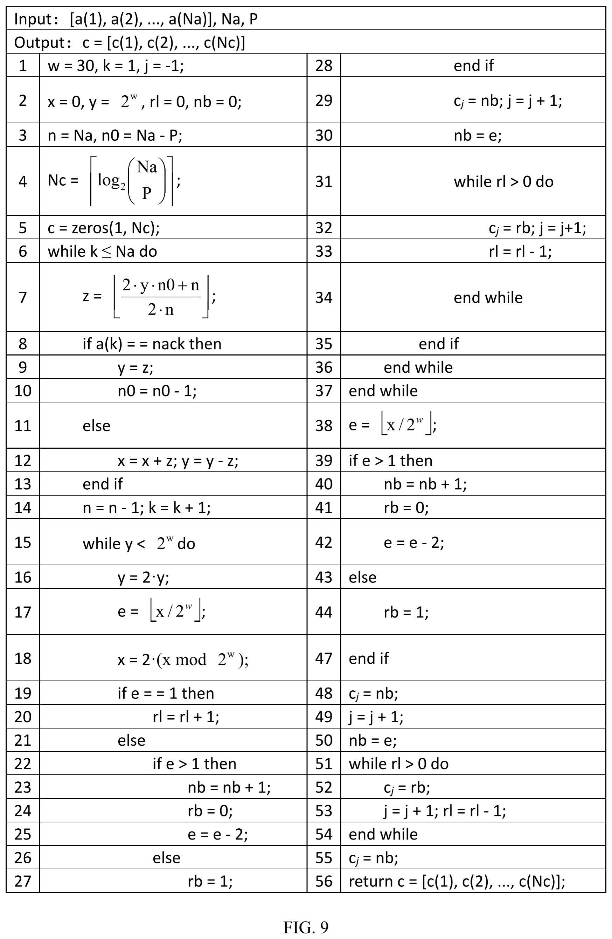

Fig. 9 shows the pseudo program code for determining a compressed codeword based on a transport block error pattern according to another embodiment of the present application. As shown in Fig. 9, Na is the length of transport block error pattern a, P is the number of transport blocks in the transport block subset, and "nack" represents the bit where the acknowledgment status of the corresponding transport block is negative acknowledgment (NACK). The method program code ultimately outputs the bit representation of the compressed codeword c = [c(1), c(2), ..., c(Nc)] with a length of

$$\left\lceil log_2 \binom{Na}{P} \right\rceil$$ . In some examples, the transport block subset in this embodiment is the set of correct transport blocks.

In some embodiments, as shown in Fig. 3, "encoding the information of the transport block subset to obtain feedback information" may further include a following step S3200.

At the step S3200, at least two of the prefix codeword, the padding bit sequence, and the compressed codeword are concatenated to obtain the feedback information.

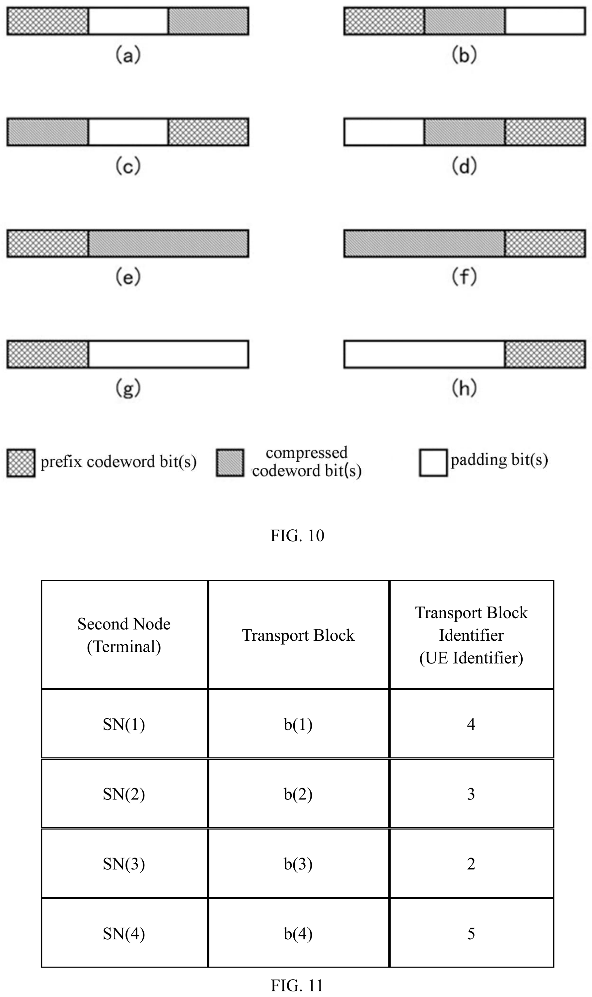

Fig. 10 provides a schematic diagram illustrating the concatenation of the prefix codeword, the padding bit sequence, and the compressed codeword to obtain the feedback information.

The prefix codeword of length Np is denoted as $[p_1, p_2, \cdots, p_{Np}]$, the padding bit sequence of length Nfb is denoted as $[fb_1, fb_2, \cdots, fb_{Nfb}]$, and the compressed codeword of length Nc is denoted as c = $[c_1, c_2, \cdots, c_{Nc}]$.

In some embodiments, the feedback information f is $[p_1, p_2, \cdots, p_{Np}, fb_1, fb_2, \cdots, fb_{Nfb}, c_1, c_2, \cdots, c_{Nc}]$, as shown in the schematic diagram of Fig. 10(a).

In some embodiments, the feedback information f is $[p_1, p_2, \cdots, p_{Np}, c_1, c_2, \cdots, c_{Nc} fb_1, fb_2, \cdots, fb_{Nfb}]$, as shown in the schematic diagram of Fig. 10(b).

In some embodiments, the feedback information f is $[c_1, c_2, \cdots, c_{Nc}, fb_1, fb_2, \cdots, fb_{Nfb}, p_1, p_2, \cdots, p_{Np}]$, as shown in the schematic diagram of Fig. 10(c).

In some embodiments, the feedback information f is $[fb_1, fb_2, \cdots, fb_{Nfb}, c_1, c_2, \cdots, c_{Nc}, p_1, p_2, \cdots, p_{Np}]$, as shown in the schematic diagram of Fig. 10(d).

In some embodiments, the feedback information f includes the prefix codeword.

In some embodiments, the feedback information f includes the compressed codeword.

In some embodiments, the feedback information f includes the padding bit sequence.

In some embodiments, when the length of the padding bit sequence is 0, the feedback information f only includes the prefix codeword and the compressed codeword. In some examples, the feedback information f is $[p_1, p_2, p_{Np}, c_1, c_2, \cdots, c_{Nc}]$, as shown in the schematic diagram of Fig. 10(e); or the feedback information f is $[c_1, c_2, \cdots, c_{Nc}, p_1, p_2, \cdots, p_{Np}]$, as shown in the schematic diagram of Fig. 10(f).

In some embodiments, when the length of the compressed codeword is 0, the feedback information f only includes the prefix codeword and the padding bit sequence. In some examples, the feedback information f is $[p_1, p_2, \cdots, p_{Np}, fb_1, fb_2, \cdots, fb_{Nfb}]$, as shown in the schematic diagram Fig. 10(g); or the feedback information f is $[fb_1, fb_2, \cdots, fb_{Nfb}, p_1, p_2, \cdots, p_{Np}]$, as shown in the schematic diagram Fig. 10(h).

In some embodiments, the feedback information f includes Pmax - P + 1 bits to indicate the number of transport blocks P in the transport block subset.

In some embodiments, the feedback information f includes a prefix codeword of Pmax - P + 1 bits.

In some embodiments, the feedback information f includes a padding bit sequence of length

$$\left\lceil log_2 \binom{Na}{Pmax} \right\rceil - \left\lceil log_2 \binom{Na}{P} \right\rceil - Pmax + P \ .$$

In some embodiments, the feedback information f includes a padding bit sequence of length

$$Nf - \left\lceil log_2 \binom{Na}{P} \right\rceil - (Pmax\text{-}P + 1) \ , \text{where Nf is the length of feedback information f.}$$

In some embodiments, the length Nf of feedback information f is determined based on at least one of the following parameters: the maximum number of transport blocks in the transport block subset, the number of transport blocks in the transport block subset, the size of the ordered set of transport block identifiers, or the length of the transport block error pattern.

In some embodiments, the length of feedback information f is $$1 + \left\lceil log_2 \binom{Na}{Pmax} \right\rceil .$$

In some embodiments, the length of feedback information f is greater than $$1 + \left\lceil log_2 \binom{Na}{Pmax} \right\rceil .$$

In some embodiments, the length of feedback information f is $$\max_{x=0,1,\cdots,Pmax} \left( Pmax\text{-}x + 1 + \left\lceil log_2 \binom{Na}{x} \right\rceil \right) \ .$$

In some embodiments, the length of the feedback information f is $$Pmax - \left\lceil \frac{Na+1}{3} \right\rceil + 1 + \left\lceil log_2 \binom{Na}{\lfloor \frac{Na+1}{3} \rfloor} \right\rceil .$$

In some embodiments, the length of the feedback information f is $Pmax - P + 1 + Nfb + \left\lceil log_2 \binom{Na}{P} \right\rceil$, where

Nfb is the length of the padding bit sequence.

In some embodiments, the length of the feedback information f is $\text{Pmax} - P + 1 + \left\lceil log_2 \binom{Na}{P} \right\rceil$ .

In some embodiments, the length of the feedback information f is Pmax - P + 1 + Nfb, where Nfb is the length of the padding bit sequence.

At a step S4000, the feedback information is sent to the at least one second node.

In some embodiments, the first node sends feedback information to one or more second node sequences, where the feedback information can characterize the reception status of transport blocks sent by the at least one second node at the first node.

When $\text{Pmax} \leq \frac{Na+1}{3}$ , the information transmission method provided by the aforementioned embodiments ensures that the length of feedback information is at most only 1 bit more than the optimal value, i.e., the number of input bits for channel coding is at most only 1 bit more than the optimal value, thereby achieving the goal of conserving spectrum resources and improving data transmission efficiency. Even in the case of $\text{Pmax} > \frac{Na+1}{3}$ , the aforementioned embodiments generally only exceed the minimized length by 2 or 3 bits and feature low decoding complexity (linear complexity).

In some embodiments, the transport block subset is the set of correct transport blocks. When the first node has not correctly received any transport block, and the set of correct transport block identifiers is an empty set, i.e., P = 0, the first node determines the length of feedback information f Nf = 0, i.e., the feedback information f is a Null sequence. The first node determines that the signal containing feedback information f, which is a Null sequence, is a Null signal, i.e., the first node determines that the signal containing feedback information f is a zero-power signal.

In the information transmission method provided by the aforementioned embodiments, since the first node transmits a zero-power signal, the energy overhead is reduced. However, a second node in the second node sequence will fail to successfully receive the signal containing feedback information f (i.e., the zero-power signal). Therefore, the second node in the second node sequence can determine that the feedback information is a negative acknowledgment (NACK).

In some embodiments, channel coding is applied to the feedback information to obtain a first encoded sequence.

It should be noted that the channel coding may include, but is not limited to, Polar coding, Low-density parity-check (LDPC) coding, Convolutional coding, Turbo coding, Reed-Muller (RM) coding, Reed-Solomon (RS) coding, Bose-Chaudhuri-Hocquenghem (BCH) coding, Concatenated coding, Cyclic coding, Block coding, Hamming coding, Golay coding, Repetition coding, Single parity-check coding, Cyclic redundancy check (CRC) coding, Superposition coding, Sparse superposition coding, Sparse regression coding, Lattice coding, Algebraic geometry coding, Goppa coding, Polarization-adjusted convolutional coding, Pre-transformed polar coding, and Parity-check polar coding.

Example 1

In this example, the first node is a base station, and the second node is a terminal device. This example involves multiple terminal devices, which form the second node sequence. The transport block identifier is the UE identifier. The following example describes the specific process where the transport block subset is the set of correct transport blocks, the maximum number of transport blocks in the transport block subset is the maximum number of correct transport blocks, the number of transport blocks in the transport block subset is the number of correct transport blocks, and feedback information f is not transmitted in response to the number of correct transport blocks p being 0.

Fig. 11 is a schematic diagram illustrating the relationship between the second node, transport blocks, and UE identifiers provided in the example of the present disclosure. As shown in Fig. 11, the base station receives a signal containing transport block set B transmitted by the terminal sequence, where the terminal sequence includes Nu = 4 terminal devices SN(1), SN(2), SN(3), SN(4), and transport block set B includes NT = 4 transport blocks b(1), b(2), b(3), b(4). Furthermore, the signal containing transport block set B includes the signal containing transport block b(1), the signal containing transport block b(2), the signal containing transport block b(3), and the signal containing transport block b(4).

In this example, for t = 1, 2, 3, 4, transport block b(t) in transport block set B is transmitted by terminal SN(t) in the terminal sequence to the base station, where transport block b(t) in transport block set B corresponds to the UE identifier of terminal SN(t), and the UE identifier of terminal SN(t) is the Random Access RNTI (RA-RNTI). The UE identifiers of terminal devices SN(1), SN(2), SN(3), SN(4) are 4, 3, 2, 5, respectively, where UE identifiers 4, 3, 2, 5 are elements of the ordered set of transport block identifiers. The ordered set of transport block identifiers includes Na = 8 UE identifiers 0, 1, 2, 3, 4, 5, 6, 7.

In this example, the maximum number of correct transport blocks Pmax = 3 is configured by the base station. The set of correct transport block identifiers is the set of UE identifiers included in the correctly received transport blocks within the transport block set. In this example, the base station determines that the set of correct transport block identifiers is an

empty set $\Phi$ based on the signal containing transport block set B, i.e., the number of correct transport blocks P = 0. Consequently, the base station determines that the length of the feedback information f is Nf = 0 and the feedback information f is a Null sequence. Correspondingly, the base station determines that the signal containing feedback information f is a zero-power signal.

Subsequently, the base station transmits the zero-power signal containing feedback information f to the terminal sequence SN(1), SN(2), SN(3), SN(4) which receives the zero-power signal containing feedback information f. Those having ordinary skill in the art will understand that for t = 1, 2, 3, 4, the terminal SN(t) experiences a decoding failure and determines that the acknowledgment for transport block b(t) is a negative acknowledgment (NACK).

Example 2:

The difference between this example and Example 1 lies in that, in this example, the transport block identifier is the index value of the UE identifier. The ordered set of UE identifiers ID = <ID(1), ID(2), ID(3), ID(4)> = <0, 11, 20, 30>, and the corresponding ordered set of transport block identifiers I = <1(1), I(2), I(3), I(4)> = <0, 1, 2, 3>. The index value of the UE identifier for the element ID(1) = 0 in the ordered set of UE identifiers is the element I(1) = 0 in the ordered set of transport block identifiers. The index value of the UE identifier for the element ID(2) = 11 in the ordered set of UE identifiers is the element I(2) = 1 in the ordered set of transport block identifiers. The index value of the UE identifier for the element ID(3) = 20 in the ordered set of UE identifiers is the element I(3) = 2 in the ordered set of transport block identifiers. The index value of the UE identifier for the element ID(4) = 30 in the ordered set of UE identifiers is the element I(4) = 3 in the ordered set of transport block identifiers. Here, the size of the ordered set of transport block identifiers is Na = 4.

Another difference between this example and Example 1 lies in that, in this example, the UE identifiers of terminal devices SN(1), SN(2), SN(3), SN(4) are 0, 11, 20, 30, respectively, where the UE identifiers 0, 11, 20, 30 are the elements of the ordered set of UE identifiers ID.

Example 3:

The difference between this example and Example 1 lies in that, in this example, the transport block identifier is the signature index which is an element of the ordered set of transport block identifiers. The ordered set of transport block identifiers includes Na = 6 signature indices 0, 1, 2, 3, 4, 5. The set of correct transport block identifiers is a set of signature indices of the random access signatures included in the correctly received transport blocks within the transport block set.

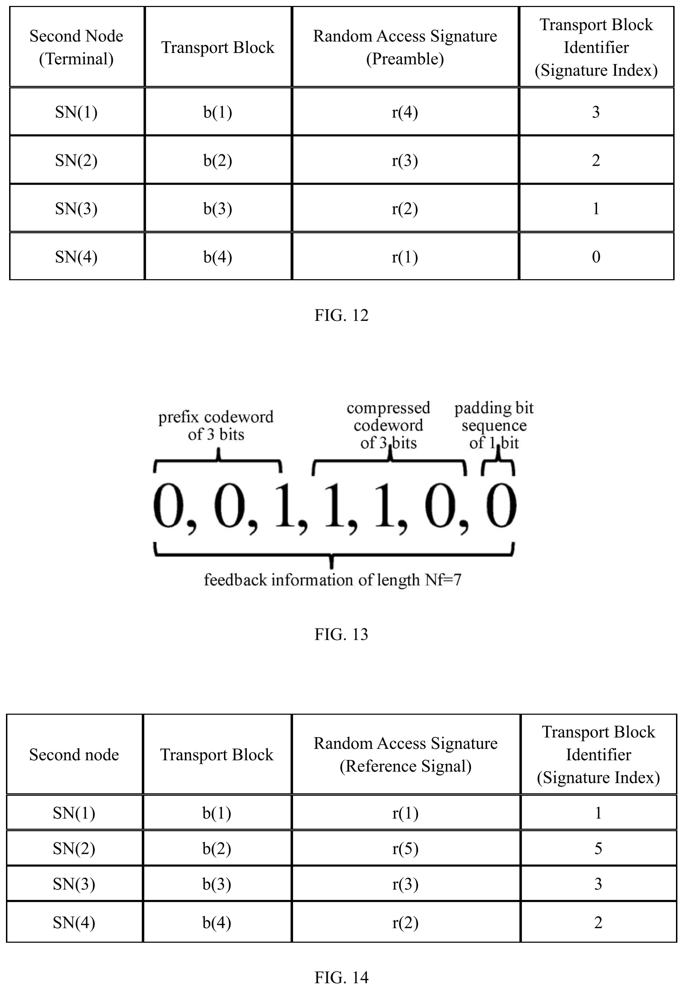

Fig. 12 is a schematic diagram showing a relationship between second node, transport block, random access signature, and signature index in an example of the present disclosure. Another distinction of this example from Example 1 lies in that, as illustrated in Fig. 12, for t=1, 2, 3, 4, the transport block b(t) in the transport block set B includes a random access signature which is a preamble. The random access signatures included in transport blocks b(1), b(2), b(3), b(4) are the preambles r(4), r(3), r(2), r(1) determined by the terminal SN(1), SN(2), SN(3), SN(4) based on higher layer parameters, respectively. Herein, the preambles r(4), r(3), r(2), r(1) are the elements of the ordered set of random access signatures. The ordered set of random access signatures includes Na = 6 preambles r(1), r(2), r(3), r(4), r(5), r(6), where the signature indices of preambles r(1), r(2), r(3), r(4), r(5), r(6) are the Na = 6 signature indices 0, 1, 2, 3, 4, 5 included in the ordered set of transport block identifiers, respectively.

Example 4:

The difference between this example and Example 1 lies in that, in this example, for t = 1, 2, 3, 4, the UE identifier of the terminal SN(t) is the Temporary Cell RNTI (TC-RNTI), and the ordered set of transport block identifiers includes Na = 7 UE identifiers 1, 2, 3, 4, 5, 6, 7, i.e., the ordered set of transport block identifiers I = <1(1), I(2), I(3), I(4), I(5), I(6), 1(7)> = <1, 2, 3, 4, 5, 6, 7>.

Another difference between this example and Example 1 is that, in this example, the base station determines, based on the signal containing the transport block set B, that the set of correct transport block identifiers is the set BI = {2} and the number of correct transport blocks P = 1.

A further difference between this example and Example 1 is that, in this example, the feedback information f is determined by the base station based on the following parameters: the set of correct transport block identifiers BI = {2}, the number of correct transport blocks P = 1, the size of the ordered set of transport block identifiers Na = 7, and the maximum number of correct transport blocks Pmax = 3.

Fig. 13 is a schematic diagram illustrating the feedback information, the prefix code, the padding bit sequence, and the compressed codeword provided in the example of the present disclosure. As shown in Fig. 13, the specific method for determining the feedback information f is as follows.

The base station encodes the information of the set of correct transport blocks according to the following method to obtain the feedback information.

Based on the size $P_{ACK} = 1$ of the set of correct transport block identifiers BI = {2} and the maximum number of correct transport blocks Pmax = 3, the base station determines the number of prefix codeword bits Np = Pmax - $P_{ACK}$ + 1 = 3 - 1 + 1 = 3. Based on the number of prefix codeword bits Np = 3, the base station determines that the first Np - 1 = 3 - 1 = 2 bits of the prefix codeword are "0" and the last bit of the prefix codeword is "1", i.e., the prefix codeword is $[p_1, p_2, p_3]$ = [0, 0, 1];

Based on the size of the ordered set of transport block identifiers Na = 7, the maximum number of correct transport blocks Pmax = 3, and the number of correct transport blocks P = 1, the base station determines the length of the padding bit sequence $Nfb = Pmax - \left\lceil \frac{Na+1}{3} \right\rceil + 1 + \left\lceil log_2 \left( \left\lceil \frac{Na}{\left\lceil \frac{Na+1}{3} \right\rceil} \right\rceil \right) \right\rceil - (Pmax -$

$p + 1) - \left\lceil log_2 \binom{Na}{P} \right\rceil = p + \left\lceil log_2 \left( \left\lceil \frac{Na}{\left\lceil \frac{Na+1}{3} \right\rceil} \right\rceil \right) \right\rceil - \left\lceil \frac{Na+1}{3} \right\rceil - \left\lceil log_2 \binom{Na}{P} \right\rceil = 1 + \left\lceil log_2 \left( \left\lceil \frac{7}{\left\lceil \frac{7+1}{3} \right\rceil} \right\rceil \right) \right\rceil - \left\lceil \frac{7+1}{3} \right\rceil -$

$\left\lceil log_2 \binom{7}{1} \right\rceil = 1 + 5 - 2 - 3 = 1$. According to the length of the padding bit sequence Nfb = 1, the padding bit sequence is determined to be an all-zero sequence $[fb_1]$ = [0];

The base station performs compression encoding on the set of correct transport block identifiers according to the following method to determine the compressed codeword c.

The base station determines the feedback information f according to the set of correct transport block identifiers BI = {2}, the ordered set of transport block identifiers I, and the size of ordered set of transport block identifiers Na = 7 using the following method:

The base station determines the length of the compressed codeword Nc as $\left\lceil log_2 \binom{Na}{P} \right\rceil = \left\lceil log_2 \binom{7}{1} \right\rceil = 3$ based on P = 1 and the set of correct transport block identifiers BI = {2}.

According to the length of the compressed codeword Nc = 3 and the set of correct transport block identifiers BI = {2}, the base station maps $\binom{Na}{P} = \binom{7}{1} = 7$ possible sets of correct transport block identifiers with size 1 to the arithmetic coding of a $\left\lceil log_2 \binom{Na}{P} \right\rceil = \left\lceil log_2 \binom{7}{1} \right\rceil = 3$ -bit sequence to obtain the compressed codeword c = $[c_1, c_2, \cdots, c_{Nc}]$ = $[c_1, c_2, c_3]$ = [1, 1, 0], following the algorithm flowchart in Fig. 6.

As shown in Fig. 10(b), the base station concatenates the prefix codeword $[p_1, p_2, p_3]$ = [0, 0, 1], the padding bit sequence $[fb_1]$ = [0], and the compressed codeword c = $[c_1, c_2, \cdots, c_{Nc}]$=$[c_1, c_2, c_3]$= [1, 1, 0] to form the feedback information f = $[p_1, p_2, p_3, c_1, c_2, c_3, fb_1]$ = [0, 0, 1, 1, 1, 0, 0], where the length of feedback information f is

$$Nf = Pmax - \left\lceil \frac{Na+1}{3} \right\rceil + 1 + \left\lceil log_2 \left( \left\lceil \frac{Na}{\left\lceil \frac{Na+1}{3} \right\rceil} \right\rceil \right) \right\rceil = 3 - \left\lceil \frac{7+1}{3} \right\rceil + 1 + \left\lceil log_2 \left( \left\lceil \frac{7}{\left\lceil \frac{7+1}{3} \right\rceil} \right\rceil \right) \right\rceil = 7.$$

In this example, the base station transmits a signal containing the feedback information f = [0, 0, 1, 1, 1, 0, 0] to the terminal sequence <SN(1), SN(2), SN(3), SN(4)>. The terminal sequence <SN(1), SN(2), SN(3), SN(4)> receives the signal containing feedback information f. Terminal devices SN(1), SN(2), SN(3), and SN(4) decode the signal containing feedback information f respectively, and determine the acknowledgment for transport blocks b(1), b(2), b(3), and b(4) using the following method.

If terminal SN(1) fails in decoding, it determines the acknowledgment for transport block b(1) as a negative acknowledgment (NACK). If terminal SN(1) succeeds in decoding and obtains feedback information f, it counts the number of consecutive "0" bits N0 starting from the first bit in the decoded feedback information f and the maximum number of correct transport blocks Pmax = 3, then determines the estimated number of correct transport blocks P' = Pmax - N0. Based on the size of ordered set of transport block identifiers Na = 7 and the estimated number of correct transport blocks P', it determines the length of the compressed codeword as $\left\lceil log_2 \binom{Na}{P'} \right\rceil$, then extracts $\left\lceil log_2 \binom{Na}{P'} \right\rceil$ bits from positions N0 + 2 to $N0 + 1 + \left\lceil log_2 \binom{Na}{P'} \right\rceil$ of feedback information f, along with the estimated number of correct transport blocks P' and the size of ordered set of transport block identifiers Na = 7, as inputs for arithmetic decoding to obtain the set of correct transport block identifiers BI. Since the UE identifier of terminal SN(1) is 4, which does not belong to BI, terminal SN(1) determines the acknowledgment for transport block b(1) as a negative acknowledgment (NACK).

If terminal SN(2) fails in decoding, it determines the acknowledgment for transport block b(2) as a negative acknowledgment (NACK). If terminal SN(2) succeeds in decoding and obtains feedback information f, it counts the number of consecutive "0" bits N0 starting from the first bit in the decoded feedback information f and the maximum number of correct transport blocks Pmax = 3, then determines the estimated number of correct transport blocks P' = Pmax - N0. Based on the size of ordered set of transport block identifiers Na = 7 and the estimated number of correct transport blocks p', it determines the length of the compressed codeword as $\left\lceil log_2 \binom{Na}{P'} \right\rceil$, then extracts $\left\lceil log_2 \binom{Na}{P'} \right\rceil$ bits from positions N0 + 2 to $N0 + 1 + \left\lceil log_2 \binom{Na}{P'} \right\rceil$ of feedback information f, along with the estimated number of correct transport blocks P' and the size of ordered set of transport block identifiers Na = 7, as inputs for arithmetic decoding to obtain the set of correct transport block identifiers BI. Since the UE identifier of terminal SN(2) is 3, which does not belong to BI, terminal SN(2) determines the acknowledgment for transport block b(2) as a negative acknowledgment (NACK).

If terminal SN(3) fails in decoding, it determines the acknowledgment for transport block b(3) as a negative acknowledgment (NACK). If terminal SN(3) succeeds in decoding and obtains feedback information f, it counts the number of consecutive "0" bits N0 starting from the first bit in the decoded feedback information f and the maximum number of correct transport blocks Pmax = 3, then determines the estimated number of correct transport blocks P' = Pmax - N0. Based on the size of ordered set of transport block identifiers Na = 7 and the estimated number of correct transport blocks P', it determines the length of the compressed codeword as $\left\lceil log_2 \binom{Na}{P'} \right\rceil$, then extracts $\left\lceil log_2 \binom{Na}{P'} \right\rceil$ bits from positions N0 + 2 to $N0 + 1 + \left\lceil log_2 \binom{Na}{P'} \right\rceil$ of feedback information f, along with the estimated number of correct transport blocks p' and the size of ordered set of transport block identifiers Na = 7, as inputs for arithmetic decoding to obtain the set of correct transport block identifiers BI. Since the UE identifier of terminal SN(3) is 2, which belongs to BI, terminal SN(3) determines the acknowledgment for transport block b(3) as a positive acknowledgment (ACK).

If terminal SN(4) fails in decoding, it determines the acknowledgment for transport block b(4) as a negative acknowledgment (NACK). If terminal SN(4) succeeds in decoding and obtains feedback information f, it counts the number of consecutive "0" bits N0 starting from the first bit in the decoded feedback information f and the maximum number of correct transport blocks Pmax = 3, then determines the estimated number of correct transport blocks P' = Pmax - N0. Based on the size of ordered set of transport block identifiers Na = 7 and the estimated number of correct transport blocks p', it determines the length of the compressed codeword as $\left\lceil log_2 \binom{Na}{P'} \right\rceil$, then extracts $\left\lceil log_2 \binom{Na}{P'} \right\rceil$ bits from positions N0 + 2 to $N0 + 1 + \left\lceil log_2 \binom{Na}{P'} \right\rceil$ of feedback information f, along with the estimated number of correct transport blocks P' and the size of ordered set of transport block identifiers Na = 7, as inputs for arithmetic decoding to obtain the set of correct transport block identifiers BI. Since the UE identifier of terminal SN(4) is 5, which does not belong to BI, terminal SN(4) determines the acknowledgment for transport block b(4) as a negative acknowledgment (NACK).

Example 5:

The difference between this example and Example 4 lies in that, in this example, the transport block identifier is a signature index which is an element of the ordered set of transport block identifiers. The ordered set of transport block identifiers includes Na = 7 signature indices 1, 2, 3, 4, 5, 6, 7, i.e., the ordered set of transport block identifiers I = <1(1), I(2), I(3), 1(4), 1(5), I(6), 1(7)> = < 1, 2, 3, 4, 5, 6, 7>.

Fig. 14 is a schematic diagram illustrating the relationship between the second node, transport blocks, random access signatures, and signature indices provided in this example of the application. As shown in Fig. 14, another difference between this example and Example 4 is that, in this example, for t = 1, 2, 3, 4, the transport block b(t) in the transport block set B includes a random access signature which is a reference signal (Reference Signal). The random access signatures included in transport blocks b(1), b(2), b(3), b(4) are the reference signals r(1), r(5), r(3), r(2) determined by the terminal devices SN(1), SN(2), SN(3), SN(4) based on higher layer parameters, respectively, where the reference signals r(1), r(5), r(3), r(2) are the elements of the ordered set of random access signatures. The ordered set of random access signatures includes Na = 7 reference signals r(1), r(2), r(3), r(4), r(5), r(6), r(7), where the signature indices of the reference signals r(1), r(2), r(3), r(4), r(5), r(6), r(7) are the Na = 7 signature indices 1, 2, 3, 4, 5, 6, 7 included in the ordered set of transport block identifiers.

Another difference from Example 4 in this example lies in that, in this example, the set of correct transport block identifiers refers to the collection of signature indices from the random access signatures included in the correctly received transport blocks within the transport block set.

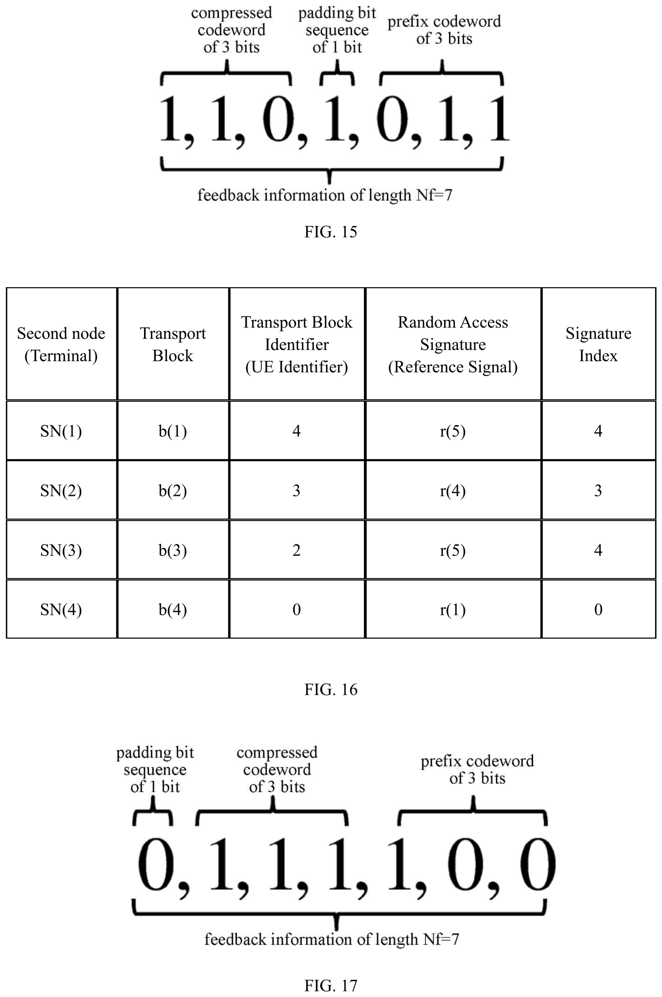

Fig. 15 is a schematic diagram illustrating the feedback information, the prefix code, the padding bit sequence, and the compressed codeword provided in the example of the present disclosure. The method for determining the feedback information f with length Nf = 7 is as follows.

The base station encodes the information of the set of correct transport blocks according to the following method to obtain the feedback information.

Based on the number of correct transport blocks P = 1 and the maximum number of correct transport blocks Pmax = 3, the base station determines the number of prefix codeword bits Np = Pmax - P + 1 = 3 - 1 + 1 = 3. According to the number of prefix codeword bits Np = 3, the base station sets the first bit of the prefix codeword as "0" and the remaining Np - 1 = 3 - 1 = 2 bits as "1", resulting in the prefix codeword $[p_1, p_2, p_3]$ = [0, 1, 1].

Based on the size of ordered set of transport block identifiers Na = 7, the maximum number of correct transport blocks Pmax = 3, the number of correct transport blocks P = 1, and the length of feedback information f Nf = 7, the base station determines the length of the padding bit sequence

$$\text{Nfb} = \text{Nf} - (\text{Pmax} - \text{P} + 1) - \left\lceil log_2 \binom{\text{Na}}{P} \right\rceil = 7 - (3 - 1 + 1) - \left\lceil log_2 \binom{7}{1} \right\rceil = 1$$

. According to the length of the padding bit sequence Nfb = 1, the padding bit sequence is determined as an all-one sequence $[fb_1]$ = [1].

The base station performs compression encoding on the set of correct transport block identifiers to determine the compressed codeword as follows.

The base station determines the length of the compressed codeword Nc as $\left\lceil log_2 \binom{\text{Na}}{P} \right\rceil = \left\lceil log_2 \binom{7}{1} \right\rceil = 3$ based on P = 1 and the set of correct transport block identifiers BI = {2}.

According to the length of the compressed codeword Nc = 3 and the set of correct transport block identifiers BI = {2}, the base station maps $\binom{\text{Na}}{P} = \binom{7}{1} = 7$ possible sets of correct transport block identifiers with size 1 to the arithmetic coding of a $\left\lceil log_2 \binom{\text{Na}}{P} \right\rceil = \left\lceil log_2 \binom{7}{1} \right\rceil = 3$ -long bit sequence to obtain the compressed codeword c = $[c_1, c_2, \cdots, c_{Nc}]$ = $[c_1, c_2, c_3]$ = [1, 1, 0], following the algorithm flowchart in Fig. 7.

As shown in Fig. 10(c), the base station concatenates the prefix codeword $[p_1, p_2, p_3]$ = [0, 1, 1], the padding bit sequence $[fb_1]$ = [1], and the compressed codeword c = $[c_1, c_2, \cdots, c_{Nc}]$ = $[c_1, c_2, c_3]$ = [1, 1, 0] to obtain the feedback information f = $[c_1, c_2, c_3, fb_1, p_1, p_2, p_3]$ = [1, 1, 0, 1, 0, 1, 1].

In this example, the base station transmits a signal containing feedback information f = [1, 1, 0, 1, 0, 1, 1] to the terminal sequence <SN(1), SN(2), SN(3), SN(4)>. The terminal sequence <SN(1), SN(2), SN(3), SN(4)> receives the signal containing feedback information f. Terminal devices SN(1), SN(2), SN(3), and SN(4) decode the signal containing feedback information f respectively and determine the acknowledgment for transport blocks b(1), b(2), b(3), and b(4) using a following method.

If terminal SN(1) fails to decode, it determines the acknowledgment for transport block b(1) as a negative acknowledgment (NACK). If terminal SN(1) successfully decodes and obtains feedback information f, it counts the number of consecutive "1" bits N1 starting from the last bit and the maximum number of correct transport blocks Pmax = 3, then determines the estimated number of correct transport blocks P' = Pmax - N1. Based on the size of the ordered set of transport block identifiers Na = 7 and the estimated number of correct transport blocks P', it determines the length of the compressed codeword as $\left\lceil log_2 \binom{\text{Na}}{\text{P'}} \right\rceil$. Subsequently, it extracts the first $\left\lceil log_2 \binom{\text{Na}}{\text{P'}} \right\rceil$ bits of feedback information f (totaling $\left\lceil log_2 \binom{\text{Na}}{\text{P'}} \right\rceil$ bits) along with the estimated number of correct transport blocks P' and the size of the ordered set of transport block identifiers Na = 7 as inputs for arithmetic decoding. After arithmetic decoding, it obtains the set of correct transport block identifiers BI. Since the set of correct transport block identifiers BI does not include the signature index 1 of the random access signature contained in transport block b(1), terminal SN(1) determines the acknowledgment for transport block b(1) as a negative acknowledgment (NACK).

If the terminal SN(2) experiences a decoding failure, then the terminal SN(2) determines the acknowledgment for transport block b(2) as a negative acknowledgment (NACK). If the terminal SN(2) decodes successfully and obtains feedback information f, the terminal SN(2) counts the number of consecutive "1" bits N1 from the last bit backward in the decoded feedback information f and the maximum number of correct transport blocks Pmax = 3, determines the estimated number of correct transport blocks P' = Pmax - N1, then determines the length of the compressed codeword as $\left\lceil log_2 \binom{\text{Na}}{\text{P'}} \right\rceil$ based on the size of the ordered set of transport block identifiers Na = 7 and the estimated number of correct transport blocks P'. Subsequently, it extracts the first to the $\left\lceil log_2 \binom{Na}{P'} \right\rceil$ positions of feedback information f,

totaling $\left\lceil log_2 \binom{Na}{P'} \right\rceil$ bits, along with the estimated number of correct transport blocks P' and the size of the ordered set of transport block identifiers Na = 7 as inputs for arithmetic decoding to obtain the set of correct transport block identifiers BI. Since the set of correct transport block identifiers BI does not include the signature index 5 of the random access signature included in transport block b(2), the terminal SN(2) determines the acknowledgment for transport block b(2) as a negative acknowledgment (NACK).

If the terminal SN(3) experiences a decoding failure, then the terminal SN(3) determines the acknowledgment for transport block b(3) as a negative acknowledgment (NACK). If the terminal SN(3) decodes successfully and obtains feedback information f, the terminal SN(3) counts the number of consecutive "1" bits N1 from the last bit backward in the decoded feedback information f and the maximum number of correct transport blocks Pmax = 3, determines the estimated number of correct transport blocks P' = Pmax - N1, then determines the length of the compressed codeword as

$\left\lceil log_2 \binom{Na}{P'} \right\rceil$ based on the size of the ordered set of transport block identifiers Na = 7 and the estimated number of correct transport blocks P'. Subsequently, it extracts the first to the $\left\lceil log_2 \binom{Na}{P'} \right\rceil$ positions of feedback information f,

totaling $\left\lceil log_2 \binom{Na}{P'} \right\rceil$ bits, along with the estimated number of correct transport blocks P' and the size of the ordered set of transport block identifiers Na = 7 as inputs for arithmetic decoding to obtain the set of correct transport block identifiers BI. Since the set of correct transport block identifiers BI does not include the signature index 3 of the random access signature included in transport block b(3), the terminal SN(3) determines the acknowledgment for transport block b(3) as a negative acknowledgment (NACK).

If the terminal SN(4) experiences a decoding failure, then the terminal SN(4) determines the acknowledgment for transport block b(4) as a negative acknowledgment (NACK). If the terminal SN(4) decodes successfully and obtains feedback information f, the terminal SN(4) counts the number of consecutive "1" bits N1 from the last bit backward in the decoded feedback information f and the maximum number of correct transport blocks Pmax = 3, determines the estimated number of correct transport blocks P' = Pmax - N1, then determines the length of the compressed codeword as

$\left\lceil log_2 \binom{Na}{P'} \right\rceil$ based on the size of the ordered set of transport block identifiers Na = 7 and the estimated number of correct transport blocks P'. Subsequently, it extracts the first to the $\left\lceil log_2 \binom{Na}{P'} \right\rceil$ positions of feedback information f,

totaling $\left\lceil log_2 \binom{Na}{P'} \right\rceil$ bits, along with the estimated number of correct transport blocks P' and the size of the ordered set of transport block identifiers Na = 7 as inputs for arithmetic decoding to obtain the set of correct transport block identifiers BI. Since the set of correct transport block identifiers BI includes the signature index 2 of the random access signature included in transport block b(4), the terminal SN(4) determines the acknowledgment for transport block b(4) as a positive acknowledgment (ACK).

Example 6:

In this example, the first node is a relay, and the second node is a terminal device. This example includes multiple terminal devices, which form a second node sequence. The transport block identifier is the UE identifier. It should be noted that this example describes a scenario where the transport block subset is the set of correct transport blocks, the maximum number of transport blocks in the transport block subset is the maximum number of correct transport blocks, and the number of transport blocks in the transport block subset equals the number of correct transport blocks.

Fig. 16 is a schematic diagram illustrating the relationship between the second node, transport blocks, UE identifiers, random access signatures, and signature indices as provided in the examples of the present disclosure. As shown in Fig. 16, the relay receives a signal containing transport block set B transmitted by the terminal sequence, where the terminal sequence includes Nu = 4 terminal devices SN(1), SN(2), SN(3), SN(4), and transport block set B includes NT = 4 transport blocks b(1), b(2), b(3), b(4). Furthermore, the signal containing transport block set B includes the signal containing transport block b(1), the signal containing transport block b(2), the signal containing transport block b(3), and the signal containing transport block b(4).

For t = 1, 2, 3, 4, the transport block b(t) in transport block set B is transmitted by terminal SN(t) in the terminal sequence to the relay, where the transport block b(t) in transport block set B includes a random access signature and the UE identifier of terminal SN(t), and the UE identifier of terminal SN(t) is the Cell RNTI (C-RNTI). The UE identifiers of terminal devices SN(1), SN(2), SN(3), SN(4) are 4, 3, 2, 0, respectively, where the UE identifiers 4, 3, 2, 0 are elements of the ordered set of transport block identifiers. The ordered set of transport block identifiers includes Na = 8 UE identifiers 0, 1, 2, 3, 4, 5, 6, 7, i.e., the ordered set of transport block identifiers I = <1(1), I(2), I(3), 1(4), I(5), 1(6), I(7), I(8)> = <0, 1, 2, 3, 4, 5, 6, 7>. For t = 1, 2, 3, 4, the random access signature included in transport block b(t) is a spread spectrum sequence, where the spread spectrum sequence is an element of the ordered set of random access signatures. The ordered set of random access signatures includes 6 spread spectrum sequences r(1), r(2), r(3), r(4), r(5), r(6), where the signature indices of the spread spectrum sequences r(1), r(2), r(3), r(4), r(5), r(6) are 0, 1, 2, 3, 4, 5, respectively. The random access signatures included in transport blocks b(1), b(2), b(3), b(4) are determined by terminal SN(1), SN(2), SN(3), SN(4) respectively, based on the UE identifiers 4, 3, 2, 0 of terminal SN(1), SN(2), SN(3), SN(4), according to a following formula.

The signature index of the spread spectrum sequence included in transport block b(t) = a remainder of the square of the UE identifier of terminal SN(t) divided by 6.

The UE identifiers 4, 3, 2, 0 of terminal SN(1), SN(2), SN(3), SN(4) is substituted into the above formula to obtain the spread spectrum sequences r(5), r(4), r(5), r(1) for terminal SN(1), SN(2), SN(3), SN(4), respectively.

In this example, the maximum number of correct transport blocks Pmax = 3 is configured by the higher layer parameters. In this example, the set of correct transport block identifiers refers to the set of UE identifiers included in the correctly received transport blocks within the transport block set. In this example, the relay determines based on the signal containing transport block set B: the set of correct transport block identifiers BI = {0} and the number of correct transport blocks P = 1. The feedback information f is determined by the relay based on the following parameters: the set of correct transport block identifiers BI = {0}, the number of correct transport blocks P = 1, the size of ordered set of transport block identifiers Na = 8, and the ordered set of transport block identifiers I = <I(1), I(2), I(3), I(4), I(5), I(6), I(7), I(8)> = <0, 1, 2, 3, 4, 5, 6, 7>.

Fig. 17 is a schematic diagram illustrating the relationship between the feedback information, the padding bit sequence, the compressed codeword, and the prefix code in the example provided by the present disclosure. The specific method for determining the feedback information f is as follows.

The base station encodes the information of the set of correct transport blocks according to a following method to obtain the feedback information.

Based on the number of correct transport blocks P = 1 and the maximum number of correct transport blocks Pmax = 3, the base station determines the number of prefix codeword bits Np = Pmax - P + 1 = 3 - 1 + 1 = 3. Based on the number of prefix codeword bits Np = 3, the base station sets the first bit of the prefix codeword as "1" and the remaining Np - 1 = 3 - 1 = 2 bits as "0", i.e., the prefix codeword is $[p_1, p_2, p_3] = [1, 0, 0]$;

Based on the size of the ordered set of transport block identifiers Na = 8, the maximum number of correct transport blocks Pmax = 3, and the number of correct transport blocks P = 1, the base station determines the length of the padding bit sequence

$$\text{Nfb} = \max_{x=0,1,\cdots,\text{Pmax}} \left( \text{Pmax-}x + 1 + \left\lceil log_2 \binom{\text{Na}}{x} \right\rceil \right) -$$

$$(\text{Pmax} - P + 1) - \left\lceil log_2 \binom{\text{Na}}{P} \right\rceil = \max_{x=0,1,2,3} \left( 3\text{-}x + 1 + \left\lceil log_2 \binom{8}{x} \right\rceil \right) - (3 - 1 + 1) - \left\lceil log_2 \binom{8}{1} \right\rceil = 1$$

. According to the length of the padding bit sequence Nfb = 1, the padding bit sequence is determined as $[fb_1] = [q(1), q(2), ..., q(\text{Nfb})] = [0]$, where q(p) is an output sequence of a pseudo-random number generator for a length-31 Gold sequence which is defined as follows:

$$q(n+1) = \left( x_1(n+Nd) + x_2(n+Nd) \right) \bmod 2$$

$$x_1(n+31) = \left( x_1(n+3) + x_1(n) \right) \bmod 2$$

$$x_2(n+31) = \left( x_2(n+3) + x_2(n+2) + x_2(n+1) + x_2(n) \right) \bmod 2$$

where n = 0, 1, 2, ..., Nfb-1, mod is the modulo function, Nd = 1600, and the first m-sequence $x_1(n)$ is initialized as $x_1(0) = 1$, $x_1(n) = 0$, n = 1, 2,...,30, while an initialization of the second m-sequence $x_2(n)$ satisfies $\text{Nfb} = \sum_{i=0}^{30} x_2(i) \cdot 2^i$. The initialization of the second m-sequence $x_2(n)$ satisfies $\text{Nfb} = \sum_{i=0}^{30} x_2(i) \cdot 2^i$, i.e., Nfb is set as part of a seed for the pseudorandom sequence generator that produces a Gold sequence of length 31.

The base station determines the compressed codeword by performing compression encoding on the set of correct transport block identifiers as follows.

The base station determines the length of the compressed codeword Nc as $\left\lceil log_2 \binom{Na}{P} \right\rceil = \left\lceil log_2 \binom{8}{1} \right\rceil = 3$ based on P = 1 and the set of correct transport block identifiers BI = {0}.

According to the length of the compressed codeword Nc = 3 and the set of correct transport block identifiers BI = {0}, the base station maps $\binom{Na}{P} = \binom{8}{1} = 8$ possible sets of correct transport block identifiers with size 1 to the arithmetic coding of a $\left\lceil log_2 \binom{Na}{P} \right\rceil = \left\lceil log_2 \binom{7}{1} \right\rceil = 3\text{-long}$ bit sequence to obtain the compressed codeword c = [$c_1$, $c_2$, $\cdots$, $c_{Nc}$] = [$c_1$, $c_2$, $c_3$] = [1, 1, 1], following the algorithm flowchart in Fig. 7.

As shown in Fig. 10(d), the base station concatenates the padding bit sequence [$fb_1$] = [0], the prefix codeword [$p_1$, $p_2$, $p_3$] = [0, 1, 1], and the compressed codeword c=[$c_1$, $c_2$, $\cdots$, $c_{Nc}$]=[$c_1$, $c_2$, $c_3$]= [1, 1, 1] to obtain the feedback information f = [$fb_1$, $c_1$, $c_2$, $c_3$, $p_1$, $p_2$, $p_3$] = [0, 1, 1, 1, 1, 0, 0].

The relay transmits a signal containing the feedback information f = [0, 1, 1, 1, 1, 0, 0] to the terminal sequence <SN(1), SN(2), SN(3), SN(4)>. The terminal sequence <SN(1), SN(2), SN(3), SN(4)> receives the signal containing feedback information f. Terminal devices SN(1), SN(2), SN(3), and SN(4) decode the signal containing feedback information f respectively and determine the acknowledgment for transport blocks b(1), b(2), b(3), and b(4) using a following method.

If terminal SN(1) fails to decode, it determines the acknowledgment for transport block b(1) as a negative acknowledgment (NACK). If terminal SN(1) successfully decodes and obtains the feedback information f, it counts the number of consecutive "0" bits N0 = 2 starting from the last bit and the maximum number of correct transport blocks Pmax = 3, estimates the number of correct transport blocks P' = Pmax - N0 = 1, then determines the length of the compressed codeword as $\left\lceil log_2 \binom{Na}{P'} \right\rceil$ based on the size of the ordered set of transport block identifiers Na = 8 and the estimated number of correct transport blocks P'. Subsequently, it extracts the $\left\lceil log_2 \binom{Na}{P'} \right\rceil$ bits from the $(P' + 1 + \left\lceil log_2 \binom{Na}{P'} \right\rceil)$th to the (P' + 2)th positions from the end of feedback information f, along with the estimated number of correct transport blocks P' and the size of the ordered set of transport block identifiers Na = 8, as inputs for arithmetic decoding. After arithmetic decoding, it obtains the set of correct transport block identifiers BI. If the set of correct transport block identifiers BI does not include the UE identifier 4 of terminal SN(1), terminal SN(1) determines the acknowledgment for transport block b(1) as a negative acknowledgment (NACK).

If the terminal SN(2) experiences a decoding failure, then terminal SN(2) determines the acknowledgment for transport block b(2) as a negative acknowledgment (NACK); if terminal SN(2) succeeds in decoding and obtains feedback information f, terminal SN(2) counts the number of consecutive "0" bits N0 = 2 from the last bit in reverse order and the maximum number of correct transport blocks Pmax = 3 in the decoded feedback information f, estimates the number of correct transport blocks P' = Pmax - N0 = 1, then determines the length of the compressed codeword as $\left\lceil log_2 \binom{Na}{P'} \right\rceil$ based on the size of ordered set of transport block identifiers Na = 8 and the estimated number of correct transport blocks P', subsequently extracts $\left\lceil log_2 \binom{Na}{P'} \right\rceil$ bits from the $(P' + 1 + \left\lceil log_2 \binom{Na}{P'} \right\rceil)$th to the (P' + 2)th position in reverse order in feedback information f, and uses the estimated number of correct transport blocks P', the size of ordered set of transport block identifiers Na = 8 as inputs for arithmetic decoding to obtain the set of correct transport block identifiers BI. If the set of correct transport block identifiers BI does not include the UE identifier 3 of terminal SN(2), terminal SN(2) determines the acknowledgment for transport block b(2) as a negative acknowledgment (NACK).

If the terminal SN(3) experiences a decoding failure, then terminal SN(3) determines the acknowledgment for transport block b(3) as a negative acknowledgment (NACK); if terminal SN(3) succeeds in decoding and obtains feedback information f, terminal SN(3) counts the number of consecutive "0" bits N0 = 2 from the last bit in reverse order and the maximum number of correct transport blocks Pmax = 3 in the decoded feedback information f, estimates the number of correct transport blocks P' = Pmax - N0 = 1, then determines the length of the compressed codeword as $\left\lceil log_2 \binom{Na}{P'} \right\rceil$ based on the size of ordered set of transport block identifiers Na = 8 and the estimated number of correct transport blocks P', subsequently extracts $\left\lceil log_2 \binom{Na}{P'} \right\rceil$ bits from the $\left(P' + 1 + \left\lceil log_2 \binom{Na}{P'} \right\rceil\right)$th to the (P' + 2)th position in reverse order in feedback information f, and uses the estimated number of correct transport blocks P', the size of ordered set of transport block identifiers Na = 8 as inputs for arithmetic decoding to obtain the set of correct transport block identifiers BI. If the set of correct transport block identifiers BI does not include the UE identifier 2 of terminal SN(3), terminal SN(3) determines the acknowledgment for transport block b(3) as a negative acknowledgment (NACK).

If the terminal SN(4) experiences a decoding failure, then terminal SN(4) determines the acknowledgment for transport block b(4) as a negative acknowledgment (NACK); if terminal SN(4) succeeds in decoding and obtains feedback information f, terminal SN(4) counts the number of consecutive "0" bits N0 = 2 from the last bit in reverse order and the maximum number of correct transport blocks Pmax = 3 in the decoded feedback information f, estimates the number of correct transport blocks P' = Pmax - N0 = 1, then determines the length of the compressed codeword as $\left\lceil log_2 \binom{Na}{P'} \right\rceil$ based on the size of ordered set of transport block identifiers Na = 8 and the estimated number of correct transport blocks P', subsequently extracts $\left\lceil log_2 \binom{Na}{P'} \right\rceil$ bits from the $\left(P' + 1 + \left\lceil log_2 \binom{Na}{P'} \right\rceil\right)$th to the (P' + 2)th position in reverse order in feedback information f, and uses the estimated number of correct transport blocks P' = 1, the size of ordered set of transport block identifiers Na = 8 as inputs for arithmetic decoding to obtain the set of correct transport block identifiers BI. If the set of correct transport block identifiers BI includes the UE identifier 0 of terminal SN(4), terminal SN(4) determines the acknowledgment for transport block b(4) as a positive acknowledgment (ACK).

Example 7:

The difference between this example and Example 6 lies in that, in this example, the transport block identifier is the signature index which is an element of the ordered set of transport block identifiers, and the ordered set of transport block identifiers includes Na = 6 transport block identifiers: 0, 1, 2, 3, 4, 5.

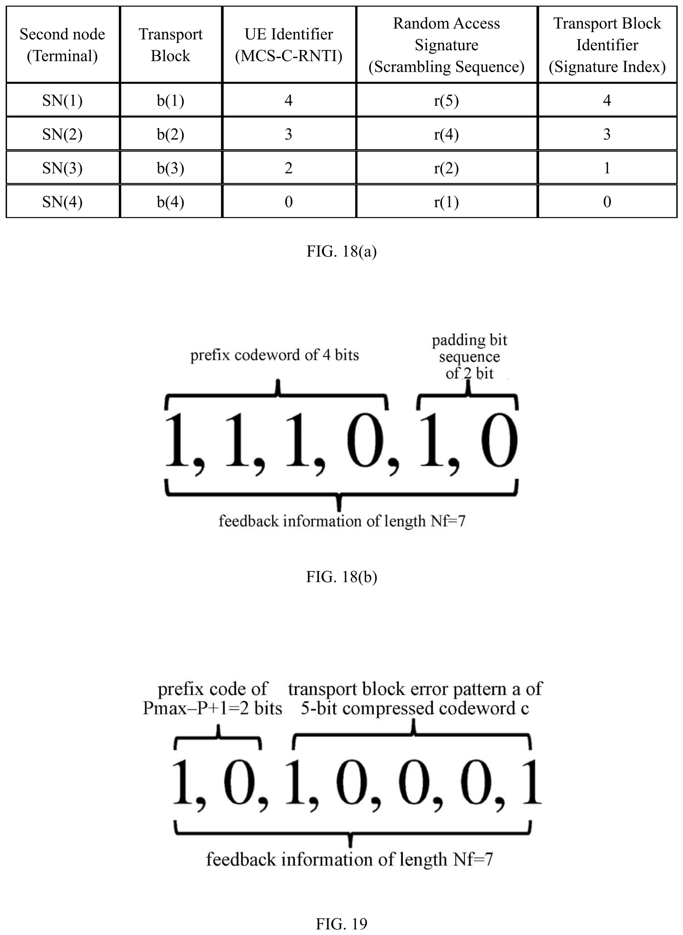

Fig. 18(a) is a schematic diagram illustrating the relationship among the second node, the transport block, the UE identifier, the random access signature, and the signature index provided in the example of the present disclosure. Another difference between this example and Example 6 is that, as shown in Fig. 18, for t = 1, 2, 3, 4, the UE identifier of terminal SN(t) is the Modulation Coding Scheme Cell RNTI (MCS-C-RNTI). The random access signature included in transport block b(t) is a scrambling sequence which is an element of the ordered set of random access signatures. The ordered set of random access signatures includes Na = 6 scrambling sequences r(1), r(2), r(3), r(4), r(5), r(6), where the signature indices of scrambling sequences r(1), r(2), r(3), r(4), r(5), r(6) correspond to transport block identifiers 0, 1, 2, 3, 4, 5 in the ordered set of transport block identifiers, respectively. Furthermore, the random access signatures included in transport blocks b(1), b(2), b(3), b(4) are scrambling sequences determined based on the UE identifier of terminal SN(t) using a following method.

Terminal SN(1), SN(2), SN(3), and SN(4) use their respective UE identifiers 4, 3, 2, and 0 as part of the random seed for the Pseudo-Random Sequence Generator to obtain the signature indices of their random access signatures as 4, 3, 1, and 0, respectively. The transport blocks b(1), b(2), b(3), and b(4) include the random access signatures r(5), r(4), r(2), and r(1), respectively.

Another difference between this example and Example 6 is that, in this example, the set of correct transport block identifiers refers to the set of signature indices of the random access signatures included in the correctly received transport blocks within the transport block set. In this example, the relay determines, based on the signal containing transport block set B, the set of correct transport block identifiers is the empty set Φ and the number of correct transport blocks P = 0. The feedback information f is determined by the relay based on the following parameters: the set of correct transport block identifiers which is the empty set Φ, the number of correct transport blocks P = 0, the size of the ordered set of transport block identifiers Na = 6, and the maximum number of correct transport blocks Pmax = 3.

Fig. 18(b) is a schematic diagram illustrating the relationship between the feedback information, the prefix code, and the padding bit sequence provided in the example of the present disclosure. As shown in Fig. 18(b), the specific method for determining the feedback information f is as follows.

The base station encodes the information of the set of correct transport blocks according to a following method to obtain the feedback information.

Based on the number of correct transport blocks P = 0 and the maximum number of correct transport blocks Pmax = 3, the base station determines the number of prefix codeword bits Np = Pmax - P + 1 = 3 - 0 + 1 = 4. According to the number of prefix codeword bits Np = 4, the base station determines that the first Np - 1 = 3 bits of the prefix codeword are "1" and the last bit of the prefix codeword is "0", i.e., the prefix codeword is [p$_1$, p$_2$, p$_3$, p$_4$] = [1, 1, 1, 0].

Based on the size of the ordered set of transport block identifiers Na = 6, the maximum number of correct transport blocks Pmax = 3, and the number of correct transport blocks P = 0, the base station determines the length of the padding bit sequence
$$Nfb = \max_{x=0,1,\cdots,Pmax} \left( Pmax\text{-}x + 1 + \left\lceil log_2 \binom{Na}{x} \right\rceil \right) -$$

$$(Pmax - P + 1) - \left\lceil log_2 \binom{Na}{P} \right\rceil = \max_{x=0,1,2,3} \left( 3\text{-}x + 1 + \left\lceil log_2 \binom{6}{x} \right\rceil \right) - (3 - 0 + 1) - \left\lceil log_2 \binom{6}{0} \right\rceil = 2.$$

. According to the length of the padding bit sequence Nfb = 2, the padding bit sequence is determined as the first Nfb = 2 bits of the predefined sequence [q(1), q(2), ..., q(Nq)], i.e., $[fb_1, fb_2]$ = [q(1), q(2)]. A specific example is: the q-th bit of the predefined sequence is q(p) = p mod 2, i.e., $[fb_1, fb_2]$ = [1, 0].

The base station determines the compressed codeword by performing compression encoding on the set of correct transport block identifiers according to a following method.

The base station determines the length of the compressed codeword Nc as $\left\lceil log_2 \binom{Na}{P} \right\rceil = \left\lceil log_2 \binom{6}{0} \right\rceil = 0$

based on P = 0 or the set of correct transport block identifiers which is an empty set Φ.

The base station determines the compressed codeword c as a Null sequence [] based on the length of the compressed codeword Nc = 0.

As shown in Fig. 10(g), the base station concatenates the prefix codeword $[p_1, p_2, p_3, p_4]$ = [1, 1, 1, 0] and the padding bit sequence $[fb_1, fb_2]$ = [q(1), q(2)] = [1, 0] to obtain the feedback information f = $[p_1, p_2, p_3, p_4, fb_1, fb_2]$ = [1, 1, 1, 0, 1, 0], where the length of the feedback information f

$$Nf = Np + Nfb + Nc = \max_{x=0,1,\cdots,Pmax} \left( Pmax\text{-}x + 1 + \left\lceil log_2 \binom{Na}{x} \right\rceil \right).$$

Another difference between this example and Example 6 is that, in this example, the relay sends a signal containing the feedback information f = [1, 1, 1, 0, 1, 0] to the terminal sequence <SN(1), SN(2), SN(3), SN(4)>. Terminal devices SN(1), SN(2), SN(3), and SN(4) receive signals containing feedback information f and perform decoding, determining the acknowledgment for transport blocks b(1), b(2), b(3), and b(4) as follows.

If terminal SN(1) fails in decoding, it determines the acknowledgment for transport block b(1) as a negative acknowledgment (NACK). If terminal SN(1) succeeds in decoding and obtains feedback information f, it counts the number of consecutive "1" bits N1 = 3 starting from the first bit in the decoded feedback information f and the maximum number of correct transport blocks Pmax = 3, then estimates the number of correct transport blocks P' = Pmax - N1 = 0. Based on the number of correct transport blocks P' = 0, it determines the set of correct transport block identifiers as an empty set Φ. Since the set of correct transport block identifiers does not include the signature index 4 of the random access signature r(5) included in transport block b(1), terminal SN(1) determines the acknowledgment for transport block b(1) as a negative acknowledgment (NACK).

If terminal SN(2) fails in decoding, it determines the acknowledgment for transport block b(2) as a negative acknowledgment (NACK). If terminal SN(2) succeeds in decoding and obtains feedback information f, it counts the number of consecutive "1" bits N1 = 3 starting from the first bit in the decoded feedback information f and the maximum number of correct transport blocks Pmax = 3, then estimates the number of correct transport blocks P' = Pmax - N1 = 0. Based on the number of correct transport blocks P' = 0, it determines the set of correct transport block identifiers as an empty set Φ. Since the set of correct transport block identifiers does not include the signature index 3 of the random access signature r(4) included in transport block b(2), terminal SN(2) determines the acknowledgment for transport block b(2) as a negative acknowledgment (NACK).

If terminal SN(3) fails in decoding, it determines the acknowledgment for transport block b(3) as a negative acknowledgment (NACK). If terminal SN(3) succeeds in decoding and obtains feedback information f, it counts the number of consecutive "1" bits N1 = 3 starting from the first bit in the decoded feedback information f and the maximum number of correct transport blocks Pmax = 3, then estimates the number of correct transport blocks P' = Pmax - N1 = 0. Based on the number of correct transport blocks P' = 0, it determines the set of correct transport block identifiers as an empty set Φ. Since the set of correct transport block identifiers does not include the signature index 1 of the random access signature r(2) included in transport block b(3), terminal SN(3) determines the acknowledgment for transport block b(3) as a negative acknowledgment (NACK).

If terminal SN(4) fails in decoding, it determines the acknowledgment for transport block b(4) as a negative acknowledgment (NACK). If terminal SN(4) succeeds in decoding and obtains feedback information f, it counts the number of consecutive "1" bits N1 = 3 starting from the first bit in the decoded feedback information f and the maximum number of correct transport blocks Pmax = 3, then estimates the number of correct transport blocks P' = Pmax - N1 = 0. Based on the number of correct transport blocks P' = 0, it determines the set of correct transport block identifiers as an empty set Φ. Since the set of correct transport block identifiers does not include the signature index 0 of the random access signature r(1) included in transport block b(4), terminal SN(4) determines the acknowledgment for transport block b(4) as a negative acknowledgment (NACK).

It should be noted that although in this example the length Nf of feedback information f is the same as the size Na = 6 of the ordered set of transport block identifiers, in practical applications, when the size Na of the ordered set of transport block identifiers is large, the length Nf of feedback information f will be shorter than Na. For example, when Na=100 and Pmax=4, the length Nf of feedback information f is $\max\limits_{x=0,1,2,3,4}\left(\text{Pmax-}x+1+\left\lceil log_2\binom{\text{Na}}{x}\right\rceil\right)=23$, which is significantly shorter than Na = 100, and only one bit longer than the optimal compressed length below:

$$\left\lceil log_2\sum_{P=0}^{\text{Pmax}}\binom{\text{Na}}{P}\right\rceil=\left\lceil log_2\left(\binom{100}{0}+\binom{100}{1}+\binom{100}{2}+\binom{100}{3}+\binom{100}{4}\right)\right\rceil=22。$$

Example 8:

In this example, the first node is a base station, the second node is a terminal device, and there are multiple terminal devices forming a terminal sequence, with the transport block identifier being the UE identifier. It should be noted that the transport block subset in this example is the set of correct transport blocks, the maximum number of transport blocks in the transport block subset is the maximum number of correct transport blocks, and the number of transport blocks in the transport block subset is the number of correct transport blocks.

As shown in Fig. 11, the base station receives the signal containing transport block set B transmitted by the terminal sequence, where the terminal sequence includes Nu = 4 terminal devices SN(1), SN(2), SN(3), SN(4), and transport block set B includes NT = 4 transport blocks b(1), b(2), b(3), b(4). The signal containing transport block set B includes the signal containing transport block b(1), the signal containing transport block b(2), the signal containing transport block b(3), and the signal containing transport block b(4).

In this example, for t = 1, 2, 3, 4, the transport block b(t) in transport block set B is transmitted by terminal SN(t) in the terminal sequence to the base station, where the transport block b(t) in transport block set B includes the UE identifier of terminal SN(t), and the UE identifier of terminal SN(t) is the Configured Scheduling RNTI (CS-RNTI). The UE identifiers of terminal devices SN(1), SN(2), SN(3), SN(4) are 4, 3, 2, 5, respectively, where the UE identifiers 4, 3, 2, 5 are elements of the ordered set of transport block identifiers I = <1(1), I(2), I(3), I(4), I(5), 1(6), I(7), 1(8)> = <0, 1, 2, 3, 4, 5, 6, 7>. The ordered set of transport block identifiers includes Na UE identifiers 0, 1, 2, 3, 4, 5, 6, 7.

In this example, the maximum number of correct transport blocks Pmax = 3 is configured by the base station. The set of correct transport block identifiers refers to the set of UE identifiers corresponding to the correctly received transport blocks in the transport block set. The base station determines, based on the signal containing transport block set B, the set of correct transport block identifiers is BI = {2, 3} and the number of correct transport blocks P = 2.

In this example, the feedback information f is determined by the base station based on the following parameters: the set of correct transport block identifiers BI, the number of correct transport blocks P = 2, the ordered set of transport block identifiers I, the size of ordered set of transport block identifiers Na = 8, the maximum number of correct transport blocks Pmax = 3, and the transport block error pattern a. Herein, the transport block error pattern a is determined by the base station based on the following parameters: the set of correct transport block identifiers BI, the ordered set of transport block identifiers 1, and the size of ordered set of transport block identifiers Na.

In this example, the bit "ack" for positive acknowledgment (ACK) is bit "1", and the bit "nack" for negative acknowledgment (NACK) is "0". The base station encodes the information of the set of correct transport blocks according to a following method to obtain the feedback information.

Based on the number of correct transport blocks P = 2 and the maximum number of correct transport blocks Pmax = 3, the base station determines the number of prefix codeword bits Np = Pmax - P + 1 = 3 - 2 + 1 = 2. Based on the number of prefix codeword bits Np = 2, the base station determines that the first Np - 1 = 2 - 1 = 1 bits of the prefix codeword are " 1 ", and the last bit of the prefix codeword is "0", i.e., the prefix codeword is [$p_1$, $p_2$] = [1, 0].

Based on the size of ordered set of transport block identifiers Na = 8, the maximum number of correct transport blocks Pmax = 3, and the number of correct transport blocks P = 2, the base station determines the length of the padding bit sequence

$$\text{Nfb} = 1 + \left\lceil log_2\binom{\text{Na}}{\text{Pmax}}\right\rceil - \left\lceil log_2\binom{\text{Na}}{P}\right\rceil - (\text{Pmax} - P + 1) =$$

$$\left\lceil log_2\binom{\text{Na}}{\text{Pmax}}\right\rceil - \left\lceil log_2\binom{\text{Na}}{P}\right\rceil - \text{Pmax} + P = \left\lceil log_2\binom{8}{3}\right\rceil - \left\lceil log_2\binom{8}{2}\right\rceil - 3 + 2 = 6 - 5 - 3 + 2 = 0 .$$

Based on the length of the padding bit sequence Nfb = 0, it is determined that the padding bit sequence is a null sequence [].

The base station performs compression encoding on the set of correct transport block identifiers according to a following method to determine the compressed codeword c.

The base station determines the transport block error pattern a = [0, 0, 1, 1, 0, 0, 0, 0] based on the set of correct transport block identifiers BI = {2, 3}, the ordered set of transport block identifiers 1, and the size of ordered set of transport block identifiers Na = 8.

Fig. 19 is a schematic diagram illustrating the relationship between feedback information, prefix code, and compressed codeword provided in the examples of the present disclosure. As shown in Fig. 19, the base station determines the feedback information f for the transport block error pattern a = [0, 0, 1, 1, 0, 0, 0, 0] according to a following method.

The base station determines the length of the compressed codeword as $\left\lceil log_2 \binom{Na}{P} \right\rceil = \left\lceil log_2 \binom{8}{2} \right\rceil = 5$ based on P = 2 and the transport block error pattern a = [0, 0, 1, 1, 0, 0, 0, 0].

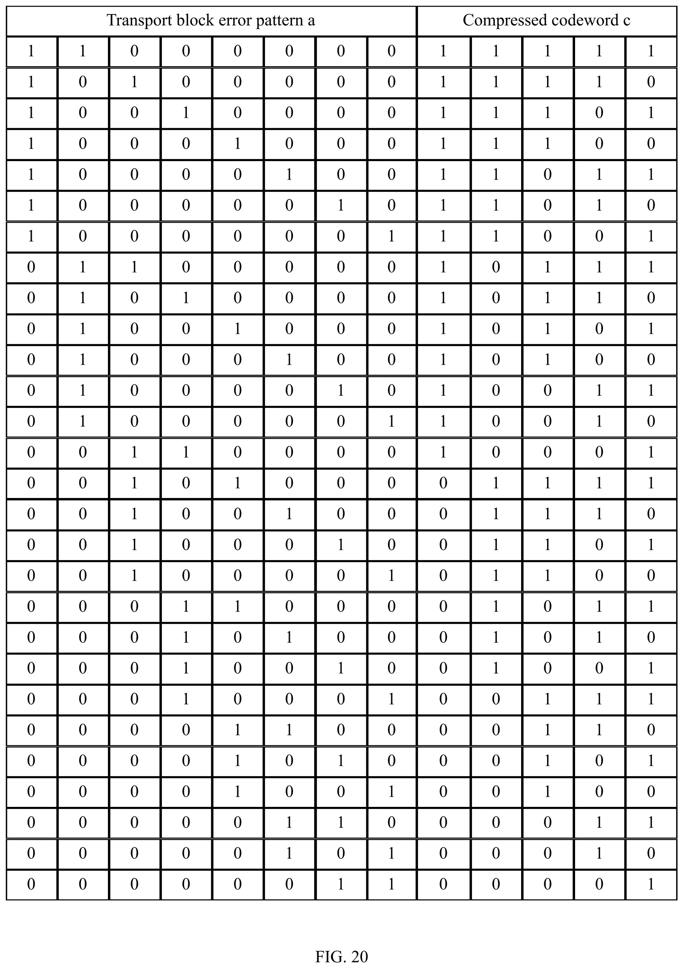

Fig. 20 illustrates a mapping chart between the transport block error patterns and the compressed codewords provided in the example of the present disclosure. As shown in Fig. 20, $\binom{Na}{P} = \binom{8}{2} = 28$ sequences of length Na = 8 containing P = 2 ack bits = 1 are mapped to arithmetic coding of a bit sequence of length $\left\lceil log_2 \binom{Na}{P} \right\rceil = \left\lceil log_2 \binom{8}{2} \right\rceil = 5$ to obtain the compressed codeword c = [$c_1$, $c_2$, $\cdots$, $c_{Nc}$] = [$c_1$, $c_2$, $c_3$, $c_4$, $c_5$] = [1, 0, 0, 0, 1].

As depicted in Fig. 10(e), the base station concatenates the prefix codeword [$p_1$, $p_2$] = [1, 0] and the compressed codeword c = [$c_1$, $c_2$, $\cdots$, $c_{Nc}$] = [1, 0, 0, 0, 1] to obtain the feedback information f = [$p_1$, $p_2$, $c_1$, $c_2$, $c_3$, $c_4$, $c_5$] = [1, 0, 1, 0, 0, 0, 1], where the length of feedback information f is $Nf = 1 + \left\lceil log_2 \binom{Na}{Pmax} \right\rceil = 7$.

In this example, the base station transmits a signal containing feedback information f = [1, 0, 1, 0, 0, 0, 1] to the terminal sequence <SN(1), SN(2), SN(3), SN(4)>. The terminal sequence <SN(1), SN(2), SN(3), SN(4)> receives the signal containing feedback information f. Terminal devices SN(1), SN(2), SN(3), and SN(4) decode the signal containing feedback information f respectively, and determine the acknowledgment for transport blocks b(1), b(2), b(3), and b(4) using a following method.

If the terminal SN(1) experiences a decoding failure, then terminal SN(1) determines the acknowledgment for transport block b(1) as a negative acknowledgment (NACK). If terminal SN(1) decodes successfully, obtaining feedback information f, it counts the number of consecutive "1" bits N1 starting from the first bit and the maximum number of correct transport blocks Pmax = 3, determines the estimated number of correct transport blocks P' = Pmax - N1, then calculates the length of the compressed codeword as $\left\lceil log_2 \binom{Na}{P'} \right\rceil$ based on the size of ordered set of transport block identifiers Na = 8 and the estimated number of correct transport blocks P'. Subsequently, it extracts the last $\left\lceil log_2 \binom{Na}{P'} \right\rceil$ bits of feedback information f along with the estimated number of correct transport blocks P' and the size of ordered set of transport block identifiers Na = 8 as inputs for arithmetic decoding to obtain transport block error pattern a. Since the UE identifier of terminal SN(1) is 4 and a(5) = 0, terminal SN(1) determines the acknowledgment for transport block b(1) as a negative acknowledgment (NACK).

If the terminal SN(2) experiences a decoding failure, then terminal SN(2) determines the acknowledgment for transport block b(2) as a negative acknowledgment (NACK). If terminal SN(2) decodes successfully, obtaining feedback information f, it counts the number of consecutive "1" bits N1 starting from the first bit and the maximum number of correct transport blocks Pmax = 3, determines the estimated number of correct transport blocks P' = Pmax - N1, then calculates the length of the compressed codeword as $\left\lceil log_2 \binom{Na}{P'} \right\rceil$ based on the size of ordered set of transport block identifiers Na = 8 and the estimated number of correct transport blocks P'. Subsequently, it extracts the last $\left\lceil log_2 \binom{Na}{P'} \right\rceil$ bits of feedback information f along with the estimated number of correct transport blocks P' and the size of ordered set of transport block identifiers Na = 8 as inputs for arithmetic decoding to obtain transport block error pattern a. Since the UE identifier of terminal SN(2) is 3 and a(4) = 1, terminal SN(2) determines the acknowledgment for transport block b(2) as a positive acknowledgment (ACK).

If the terminal SN(3) experiences a decoding failure, then terminal SN(3) determines the acknowledgment for transport block b(3) as a negative acknowledgment (NACK). If terminal SN(3) decodes successfully, obtaining feedback information f, it counts the number of consecutive "1" bits N1 starting from the first bit and the maximum number of correct transport blocks Pmax = 3, determines the estimated number of correct transport blocks P' = Pmax - N1, then calculates the length of the compressed codeword as $\left\lceil log_2 \binom{\text{Na}}{\text{P'}} \right\rceil$ based on the size of ordered set of transport block identifiers Na = 8 and the estimated number of correct transport blocks P'. Subsequently, it extracts the last $\left\lceil log_2 \binom{\text{Na}}{\text{P'}} \right\rceil$ bits of feedback information f along with the estimated number of correct transport blocks P' and the size of ordered set of transport block identifiers Na = 8 as inputs for arithmetic decoding to obtain transport block error pattern a. Since the UE identifier of terminal SN(3) is 2 and a(3) = 1, terminal SN(3) determines the acknowledgment for transport block b(3) as a positive acknowledgment (ACK).

If the terminal SN(4) experiences a decoding failure, then terminal SN(4) determines the acknowledgment for transport block b(4) as a negative acknowledgment (NACK). If terminal SN(4) decodes successfully, obtaining feedback information f, it counts the number of consecutive "1" bits N1 starting from the first bit and the maximum number of correct transport blocks Pmax = 3, determines the estimated number of correct transport blocks P' = Pmax - N1, then calculates the length of the compressed codeword as $\left\lceil log_2 \binom{\text{Na}}{\text{P'}} \right\rceil$ based on the size of ordered set of transport block identifiers Na = 8 and the estimated number of correct transport blocks P'. Subsequently, it extracts the last $\left\lceil log_2 \binom{\text{Na}}{\text{P'}} \right\rceil$ bits of feedback information f along with the estimated number of correct transport blocks P' and the size of ordered set of transport block identifiers Na = 8 as inputs for arithmetic decoding to obtain transport block error pattern a. Since the UE identifier of terminal SN(4) is 5 and a(6) = 0, terminal SN(4) determines the acknowledgment for transport block b(4) as a negative acknowledgment (NACK).

The information transmission method provided in this example converts the set of correct transport block identifiers BI into transport block error pattern a, obtains compressed codeword c through arithmetic coding, generates prefix codes of varying lengths based on the number of correct transport blocks P, and adds padding bits of different lengths to ensure the length of feedback information f remains unchanged regardless of the size of the set of correct transport block identifiers BI, thereby reducing decoding complexity. It should be noted that although in this example the feedback information f is only 1 bit shorter than transport block error pattern a, in practical applications, the length Na of transport block error pattern a is significantly large, and the feedback information f will be much shorter than the length of transport block error pattern a. For instance, when Na=100 and Pmax=4, the length Nf of feedback information f is

$$1 + \left\lceil log_2 \binom{\text{Na}}{\text{Pmax}} \right\rceil = 1 + \left\lceil log_2 \binom{100}{4} \right\rceil = 1+22 = 23 \text{, which is far less than the length Na = 100, and only}$$

one bit longer than the optimal compression length below while maintaining simple decoding (with a linear relationship to the length of transport block error pattern a):

$$\left\lceil log_2 \sum_{P=0}^{\text{Pmax}} \binom{\text{Na}}{P} \right\rceil = \left\lceil log_2 \left( \binom{100}{0} + \binom{100}{1} + \binom{100}{2} + \binom{100}{3} + \binom{100}{4} \right) \right\rceil = 22 \text{。}$$

Therefore, under the same resource conditions, the solution provided in this example achieves a lower Channel Coding rate as compared to directly transmitting transport block error pattern a, thereby enabling the terminal to operate at a lower received signal-to-noise ratio and enhancing coverage.

Example 9:

The difference between this example and Example 8 lies in that, in this example, the maximum number of correct transport blocks Pmax = 4 is configured by the base station.

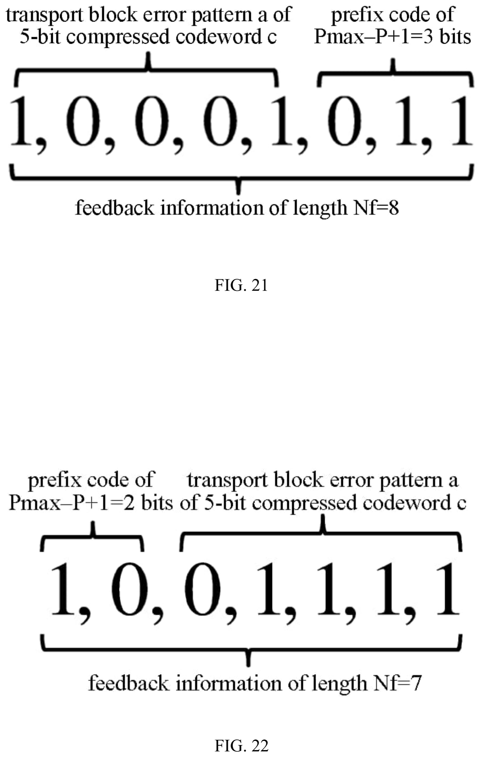

Fig. 21 is a schematic diagram illustrating the relationship between the feedback information, the compressed codeword, and the prefix code provided by the example of the present disclosure. As shown in Fig. 21, the base station performs encoding processing on the information of the set of correct transport blocks according to a following method to obtain the feedback information.

Based on the number of correct transport blocks P = 2 and the maximum number of correct transport blocks Pmax = 4, the base station determines the number of prefix codeword bits Np = Pmax - P + 1 = 4 - 2 + 1 = 3. Based on the number of prefix codeword bits Np = 3, the base station determines that the last Np - 1 = 3 - 1 = 2 bits of the prefix codeword are "1", and the first bit of the prefix codeword is "0", i.e., the prefix codeword is $[p_1, p_2, p_3] = [0, 1, 1]$.

Based on the size of ordered set of transport block identifiers Na = 8, the maximum number of correct transport blocks Pmax = 4, and the number of correct transport blocks P = 2, the base station determines the length of the padding bit

sequence $Nfb = N' - (Pmax - P + 1) - \left\lceil log_2 \binom{Na}{P} \right\rceil = 8 - (4-2+1) - \left\lceil log_2 \binom{8}{2} \right\rceil = 0$ , where

$N' = \max_{x=0,1,\cdots,\ Pmax} \left( Pmax-x + 1 + \left\lceil log_2 \binom{Na}{x} \right\rceil \right) = 8$ . According to the length of the padding bit sequence Nfb = 0, it is determined that the padding bit sequence is a Null sequence [].

The base station determines the feedback information for transport block error pattern a = [0, 0, 1, 1, 0, 0, 0, 0] using a following method.

Based on P = 2 and transport block error pattern a = [0, 0, 1, 1, 0, 0, 0, 0], the base station determines the length of the compressed codeword c as $\left\lceil log_2 \binom{Na}{P} \right\rceil = \left\lceil log_2 \binom{8}{2} \right\rceil = 5$ .

As shown in Fig. 20, $\binom{Na}{P} = \binom{8}{2} = 28$ sequences of length Na = 8 containing P = 2 ack bits = 1 are mapped to

a $\left\lceil log_2 \binom{Na}{P} \right\rceil = \left\lceil log_2 \binom{8}{2} \right\rceil = 5$ -long bit sequence arithmetic coding to obtain the compressed codeword c = [$c_1$, $c_2$, $\cdots$ , $c_{Nc}$] = [$c_1$, $c_2$, $c_3$, $c_4$, $c_5$] = [1, 0, 0, 0, 1].

As illustrated in Fig. 10(f), the base station concatenates the prefix codeword [$p_1$, $p_2$, $p_3$] = [0, 0, 1] and the compressed codeword c = [$c_1$, $c_2$,$\cdots$, $c_{Nc}$] = [1, 0, 0, 0, 1] to obtain the feedback information f = [$c_1$, $c_2$, $c_3$, $c_4$, $c_5$, $p_1$, $p_2$, $p_3$] = [1, 0, 0, 0, 1, 0, 1, 1], where the length of feedback information f is

$Nf = \max_{x=0,1,\cdots,\ Pmax} \left( Pmax-x + 1 + \left\lceil log_2 \binom{Na}{x} \right\rceil \right) = 8$ .

In this example, the base station transmits a signal containing feedback information f = [1, 0, 0, 0, 1, 0, 1, 1] to the terminal sequence <SN(1), SN(2), SN(3), SN(4)>. The terminal sequence <SN(1), SN(2), SN(3), SN(4)> receives the signal containing feedback information f. Terminal devices SN(1), SN(2), SN(3), and SN(4) decode the signal containing feedback information f respectively, and determine the acknowledgment for transport blocks b(1), b(2), b(3), and b(4) using a following method.

If terminal SN(1) experiences a decoding failure, it determines the acknowledgment for transport block b(1) as a negative acknowledgment (NACK). If terminal SN(1) achieves decoding success, obtaining feedback information f, it counts the number of consecutive "1" bits N1 from the last bit backward in the decoded feedback information f and the maximum number of correct transport blocks Pmax = 4, then determines the estimated number of correct transport blocks P' = Pmax - N1. Subsequently, based on the size of ordered set of transport block identifiers Na = 8 and the estimated number of correct transport blocks P', it determines the length of the compressed codeword as $\left\lceil log_2 \binom{Na}{P'} \right\rceil$ , then

extracts the first $\left\lceil log_2 \binom{Na}{P'} \right\rceil$ bits of feedback information f along with the estimated number of correct transport blocks P' and the size of ordered set of transport block identifiers Na = 8 as inputs for arithmetic decoding to obtain transport block error pattern a. Since the UE identifier of terminal SN(1) is 4 and a(5) = 0, terminal SN(1) determines the acknowledgment for transport block b(1) as a negative acknowledgment (NACK).

If terminal SN(2) experiences a decoding failure, it determines the acknowledgment for transport block b(2) as a negative acknowledgment (NACK). If terminal SN(2) achieves decoding success, obtaining feedback information f, it counts the number of consecutive "1" bits N1 from the last bit backward in the decoded feedback information f and the maximum number of correct transport blocks Pmax = 4, then determines the estimated number of correct transport blocks P' = Pmax - N1. Subsequently, based on the size of ordered set of transport block identifiers Na = 8 and the estimated number of correct transport blocks P', it determines the length of the compressed codeword as $\left\lceil log_2 \binom{Na}{P'} \right\rceil$ , then

extracts the first $\left\lceil log_2 \binom{Na}{P'} \right\rceil$ bits of feedback information f along with the estimated number of correct transport blocks P' and the size of ordered set of transport block identifiers Na = 8 as inputs for arithmetic decoding to obtain transport block error pattern a. Since the UE identifier of terminal SN(2) is 3 and a(4) = 1, terminal SN(2) determines the acknowledgment for transport block b(2) as a positive acknowledgment (ACK).

If terminal SN(3) experiences a decoding failure, it determines the acknowledgment for transport block b(3) as a negative acknowledgment (NACK). If terminal SN(3) achieves decoding success, obtaining feedback information f, it counts the number of consecutive "1" bits N1 from the last bit backward in the decoded feedback information f and the maximum number of correct transport blocks Pmax = 4, then determines the estimated number of correct transport blocks P' = Pmax - N1. Subsequently, based on the size of ordered set of transport block identifiers Na = 8 and the estimated number of correct transport blocks P', it determines the length of the compressed codeword as $\left\lceil log_2 \binom{Na}{P'} \right\rceil$, then extracts the first $\left\lceil log_2 \binom{Na}{P'} \right\rceil$ bits of feedback information f along with the estimated number of correct transport blocks P' and the size of ordered set of transport block identifiers Na = 8 as inputs for arithmetic decoding to obtain transport block error pattern a. Since the UE identifier of terminal SN(3) is 2 and a(3) = 1, terminal SN(3) determines the acknowledgment for transport block b(3) as a positive acknowledgment (ACK).

If the terminal SN(4) experiences a decoding failure, then the terminal SN(4) determines that the acknowledgment for transport block b(4) is a negative acknowledgment (NACK); if the terminal SN(4) achieves decoding success and obtains feedback information f, the terminal SN(4) counts the number of consecutive bits "1" from the last bit backward, denoted as N1, and the maximum number of correct transport blocks Pmax = 4, then determines the estimated number of correct transport blocks P' = Pmax - N1. Subsequently, based on the size of the ordered set of transport block identifiers Na = 8 and the estimated number of correct transport blocks P', the length of the compressed codeword is determined as

$$\left\lceil log_2 \binom{Na}{P'} \right\rceil .$$

Then, the first $\left\lceil log_2 \binom{Na}{P'} \right\rceil$ bits of the feedback information f, along with the estimated number of correct transport blocks P' and the size of the ordered set of transport block identifiers Na = 8, are taken as inputs for arithmetic decoding to obtain the transport block error pattern a. Since the UE identifier of terminal SN(4) is 5 and a(6) = 0, the terminal SN(4) determines that the acknowledgment for transport block b(4) is a negative acknowledgment (NACK).

Example 10:

The difference between this example and Example 8 lies in the fact that, in this example, the bit ack for a positive acknowledgment (ACK) is "0", and the bit nack for a negative acknowledgment (NACK) is "1". The base station determines the transport block error pattern a = [1, 1, 0, 0, 1, 1, 1, 1] based on the set of correct transport block identifiers BI = {2, 3}, the ordered set of transport block identifiers I, and the size of the ordered set of transport block identifiers Na.

Fig. 22 is a schematic diagram illustrating the relationship between the compressed codeword, the prefix code, and the feedback information provided in the example of the present disclosure. As shown in Fig. 22, the base station encodes the information of the set of correct transport blocks using a following method to obtain the feedback information.

Based on the number of correct transport blocks P = 2 and the maximum number of correct transport blocks Pmax = 3, the base station determines the number of prefix codeword bits Np = Pmax - P + 1 = 3 - 2 + 1 = 2. Based on the number of prefix codeword bits Np = 2, the base station determines that the first Np - 1 = 2 - 1 = 1 bits of the prefix codeword are "1" and the last bit of the prefix codeword is "0," i.e., the prefix codeword is $[p_1, p_2] = [1, 0]$.

Based on the size of the ordered set of transport block identifiers Na = 8, the maximum number of correct transport blocks Pmax = 3, and the number of correct transport blocks P = 2, the base station determines the length of the padding bit sequence $Nfb = 1 + \left\lceil log_2 \binom{Na}{Pmax} \right\rceil - \left\lceil log_2 \binom{Na}{P} \right\rceil - (Pmax - P + 1) = \left\lceil log_2 \binom{Na}{Pmax} \right\rceil - \left\lceil log_2 \binom{Na}{P} \right\rceil - Pmax + P = \left\lceil log_2 \binom{8}{3} \right\rceil - \left\lceil log_2 \binom{8}{2} \right\rceil - 3 + 2 = 6 - 5 - 3 + 2 = 0.$ According to the length of the padding bit sequence Nfb = 0, the padding bit sequence is determined to be a Null sequence [].

The base station determines the compressed codeword for the transport block error pattern a = [1, 1, 0, 0, 1, 1, 1, 1] using a following method.

The base station determines the transport block error pattern a = [1, 1, 0, 0, 1, 1, 1, 1] based on the set of correct transport block identifiers BI = {2, 3}, the ordered set of transport block identifiers I, and the size of the ordered set of transport block identifiers Na = 8.

The base station determines the length of the compressed codeword c as $\left\lceil log_2 \binom{Na}{P} \right\rceil = \left\lceil log_2 \binom{8}{2} \right\rceil = 5$ based on P = 2 and the transport block error pattern length Na = 8.

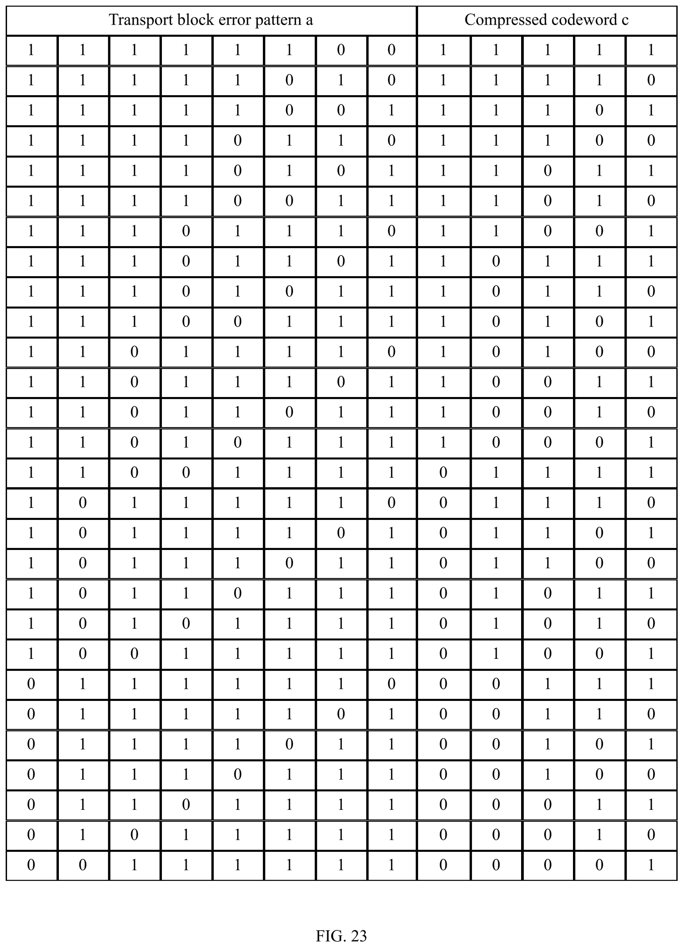

Fig. 23 illustrates a mapping chart between the transport block error pattern and the compressed codeword provided in the example of the present disclosure. As shown in Fig. 23, $\binom{Na}{P} = \binom{8}{2} = 28$ sequences of length Na = 8 containing P = 2 ack bits = 0 are mapped to the arithmetic coding of a bit sequence of length

$\left\lceil log_2 \binom{Na}{P} \right\rceil = \left\lceil log_2 \binom{8}{2} \right\rceil = 5$ to obtain the compressed codeword c = [0, 1, 1, 1, 1].

As depicted in Fig. 10(e), the base station concatenates the prefix codeword $[p_1, p_2] = [1, 0]$ and the compressed codeword $c = [c_1, c_2, \cdots, c_{Nc}] = [0, 1, 1, 1, 1]$ to obtain the feedback information $f = [p_1, p_2, c_1, c_2, c_3, c_4, c_5] = [1, 0, 0, 1, 1, 1, 1]$,

where the length of the feedback information f is $Nf = 1 + \left\lceil log_2 \binom{Na}{Pmax} \right\rceil = 7$ .

In this example, the base station transmits a signal containing the feedback information f = [1, 0, 0, 1, 1, 1, 1] to the terminal sequence <SN(1), SN(2), SN(3), SN(4)>. The terminal sequence <SN(1), SN(2), SN(3), SN(4)> receives the signal containing feedback information f. Terminal devices SN(1), SN(2), SN(3), and SN(4) decode the signal containing feedback information f respectively, and determine the acknowledgment for transport blocks b(1), b(2), b(3), and b(4) using a following method.

If terminal SN(1) experiences a decoding failure, then terminal SN(1) determines the acknowledgment for transport block b(1) as a negative acknowledgment (NACK). If terminal SN(1) decodes successfully to obtain feedback information f, terminal SN(1) counts the number of consecutive "1" bits N1 starting from the first bit in the decoded feedback information f and the maximum number of correct transport blocks Pmax = 3, determines the estimated number of correct transport blocks P' = Pmax - N1 = 3 - 1 = 2, then based on the size of ordered set of transport block identifiers Na = 8 and the estimated number of correct transport blocks P' = 2, determines the length of the compressed codeword as

$\left\lceil log_2 \binom{Na}{P'} \right\rceil = 5$, subsequently extracts the last $\left\lceil log_2 \binom{Na}{P'} \right\rceil$ bits of feedback information f along with the estimated number of correct transport blocks P' = 2 and the size of ordered set of transport block identifiers Na = 8 as inputs for arithmetic decoding to obtain transport block error pattern a. Since terminal SN(1)'s UE identifier is 4 and a(5) = 1, terminal SN(1) determines the acknowledgment for transport block b(1) as a negative acknowledgment (NACK).

If terminal SN(2) experiences a decoding failure, then terminal SN(2) determines the acknowledgment for transport block b(2) as a negative acknowledgment (NACK). If terminal SN(2) decodes successfully to obtain feedback information f, terminal SN(2) counts the number of consecutive "1" bits N1 starting from the first bit in the decoded feedback information f and the maximum number of correct transport blocks Pmax = 3, determines the estimated number of correct transport blocks P' = Pmax - N1 = 3 - 1 = 2, then based on the size of ordered set of transport block identifiers Na = 8 and the estimated number of correct transport blocks P' = 2, determines the length of the compressed codeword as

$\left\lceil log_2 \binom{Na}{P'} \right\rceil = 5$, subsequently extracts the last $\left\lceil log_2 \binom{Na}{P'} \right\rceil$ bits of feedback information f along with the estimated number of correct transport blocks P' = 2 and the size of ordered set of transport block identifiers Na = 8 as inputs for arithmetic decoding to obtain transport block error pattern a. Since terminal SN(2)'s UE identifier is 3 and a(4) = 0, terminal SN(2) determines the acknowledgment for transport block b(2) as a positive acknowledgment (ACK).

If terminal SN(3) experiences a decoding failure, then terminal SN(3) determines the acknowledgment for transport block b(3) as a negative acknowledgment (NACK). If terminal SN(3) decodes successfully to obtain feedback information f, terminal SN(3) counts the number of consecutive "1" bits N1 starting from the first bit in the decoded feedback information f and the maximum number of correct transport blocks Pmax = 3, determines the estimated number of correct transport blocks P' = Pmax - N1 = 3 - 1 = 2, then based on the size of ordered set of transport block identifiers Na = 8 and the estimated number of correct transport blocks P' = 2, determines the length of the compressed codeword as

$\left\lceil log_2 \binom{Na}{P'} \right\rceil = 5$, subsequently extracts the last $\left\lceil log_2 \binom{Na}{P'} \right\rceil$ bits of feedback information f along with the estimated number of correct transport blocks P' = 2 and the size of ordered set of transport block identifiers Na = 8 as inputs for arithmetic decoding to obtain transport block error pattern a. Since terminal SN(3)'s UE identifier is 2 and a(3) = 0, terminal SN(3) determines the acknowledgment for transport block b(3) as a positive acknowledgment (ACK).

If terminal SN(4) experiences a decoding failure, then terminal SN(4) determines the acknowledgment for transport block b(4) as a negative acknowledgment (NACK). If terminal SN(4) decodes successfully to obtain feedback information f, terminal SN(4) counts the number of consecutive "1" bits N1 starting from the first bit in the decoded feedback information f and the maximum number of correct transport blocks Pmax = 3, determines the estimated number of correct transport blocks P' = Pmax - N1 = 3 - 1 = 2, then based on the size of ordered set of transport block identifiers Na = 8 and the estimated number of correct transport blocks P' = 2, determines the length of the compressed codeword as

$$\left\lceil log_2 \binom{Na}{P'} \right\rceil = 5$$ , subsequently extracts the last $\left\lceil log_2 \binom{Na}{P'} \right\rceil$ bits of feedback information f along with the estimated number of correct transport blocks P' = 2 and the size of ordered set of transport block identifiers Na = 8 as inputs for arithmetic decoding to obtain transport block error pattern a. Since terminal SN(4)'s UE identifier is 5 and a(6) = 1, terminal SN(4) determines the acknowledgment for transport block b(4) as a negative acknowledgment (NACK).

Example 11:

In this example, the first node is a base station, and the second node is a terminal device. In this example, there are multiple terminal devices forming a terminal sequence. The transport block identifier is the signature index. It should be noted that the transport block subset in this example is the set of correct transport blocks, the maximum number of transport blocks in the transport block subset is the maximum number of correct transport blocks, and the number of transport blocks in the transport block subset is the number of correct transport blocks.

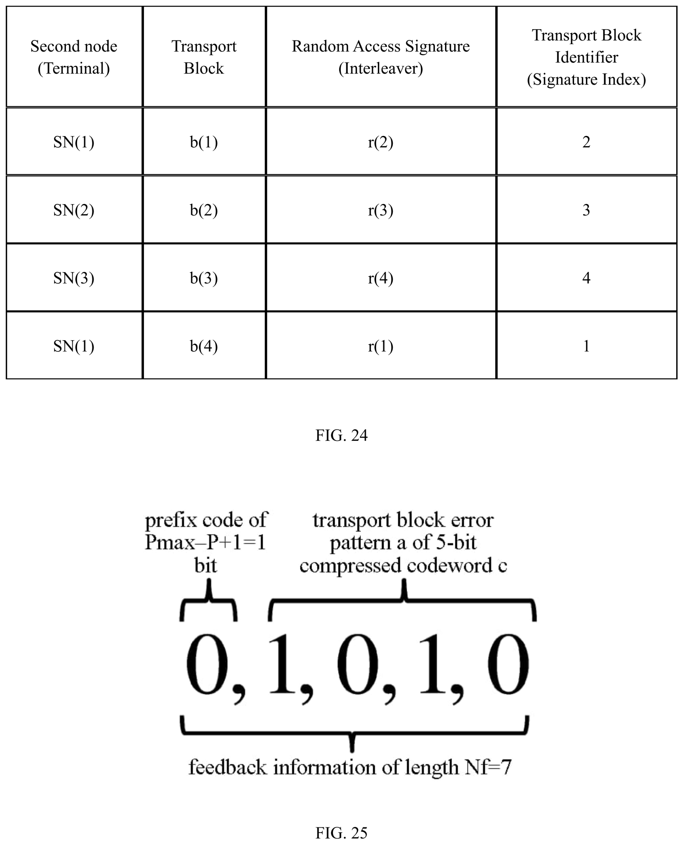

Fig. 24 is a schematic diagram illustrating the relationship between the second node, the transport blocks, the random access signatures, and the signature indices in this example. As shown in Fig. 24, the base station receives a signal containing transport block set B transmitted by the terminal sequence, where the terminal sequence includes Nu = 3 terminal devices SN(1), SN(2), SN(3), and transport block set B includes NT = 4 transport blocks b(1), b(2), b(3), b(4). Furthermore, the signal containing transport block set B includes the signal containing transport block b(1), the signal containing transport block b(2), the signal containing transport block b(3), and the signal containing transport block b(4).

In this example, for t = 1, 2, 3, the transport block b(t) in transport block set B is transmitted by terminal SN(t) to the base station. The transport block b(4) in the transport block set B is also transmitted by terminal SN(1) to the base station.

For t = 1, 2, 3, 4, the transport block b(t) in the transport block set B corresponds to a random access signature which is an interleaver. The random access signatures corresponding to transport blocks b(1), b(2), b(3), b(4) are terminal SN(1), SN(2), SN(3), SN(1) determined by higher layer parameters as random access signatures r(2), r(3), r(4), r(1), respectively, which are elements of the ordered set of random access signatures. The ordered set of random access signatures includes Na = 6 interleavers r(1), r(2), r(3), r(4), r(5), r(6), where the signature indices of interleavers r(1), r(2), r(3), r(4), r(5), r(6) are the Na = 6 signature indices 1, 2, 3, 4, 5, 6 included in the ordered set of transport block identifiers. The ordered set of transport block identifiers I = <I(1), I(2), I(3), 1(4), I(5), I(6)> = <1, 2, 3, 4, 5, 6>.

In this example, the maximum number of correct transport blocks Pmax = 2 is configured by the base station. The set of correct transport block identifiers refers to the set of signature indices of the random access signatures included in the correctly received transport blocks within the transport block set. The base station determines, based on the signal containing transport block set B, the set of correct transport block identifiers is BI = {2, 3} and the number of correct transport blocks P = 2. The feedback information f is determined by the base station based on the following parameters: the set of correct transport block identifiers BI, the number of correct transport blocks P = 2, the ordered set of transport block identifiers I, the size of ordered set of transport block identifiers Na = 6, the maximum number of correct transport blocks Pmax = 2, and the transport block error pattern a.

In this example, the bit "ack" for a positive acknowledgment (ACK) is bit "1", and the bit "nack" for a negative acknowledgment (NACK) is "0". In this example, the base station determines the feedback information f according to a following method.

Fig. 25 is a schematic diagram illustrating the relationship between the compressed codeword, the prefix code, and the feedback information provided by an example of the present disclosure. The base station encodes the information of the set of correct transport blocks according to a following method to obtain the feedback information.

Based on the number of correct transport blocks P = 2 and the maximum number of correct transport blocks Pmax = 2, the base station determines the number of prefix codeword bits Np = Pmax - P + 1 = 2 - 2 + 1 = 1. Based on the number of prefix codeword bits Np = 1, the base station determines that the first Np - 1 = 1 - 1 = 0 bits of the prefix codeword are "1" and the last bit of the prefix codeword is "0," i.e., the prefix codeword is $[p_1] = [0]$.

Based on the size of the ordered set of transport block identifiers Na = 6, the maximum number of correct transport blocks Pmax = 2, and the number of correct transport blocks P = 2, the base station determines the length of the padding bit sequence

$$Nfb = 1 + \left\lceil log_2 \binom{Na}{Pmax} \right\rceil - \left\lceil log_2 \binom{Na}{P} \right\rceil - (Pmax - P + 1) = \left\lceil log_2 \binom{Na}{Pmax} \right\rceil - \left\lceil log_2 \binom{Na}{P} \right\rceil - Pmax + P = \left\lceil log_2 \binom{6}{2} \right\rceil - \left\lceil log_2 \binom{6}{2} \right\rceil - 2 + 2 = 4 - 4 - 2 + 2 = 0$$

. Based on the length of the padding bit sequence Nfb = 0, it is determined that the padding bit sequence is a Null sequence.

The base station determines the transport block error pattern a as a = [0, 1, 1, 0, 0, 0] according to the set of correct transport block identifiers BI = {2, 3} and the size of ordered set of transport block identifiers Na = 6.

The base station determines the compressed codeword based on the transport block error pattern a = [0, 1, 1, 0, 0, 0] using a following method.

The base station determines the transport block error pattern a = [0, 1, 1, 0, 0, 0] based on the set of correct transport block identifiers BI = {2, 3}, the ordered set of transport block identifiers I, and the size of ordered set of transport block identifiers Na = 6.

The base station determines the length of the compressed codeword c as $\left\lceil log_2 \binom{Na}{P} \right\rceil = \left\lceil log_2 \binom{6}{2} \right\rceil = 4$ based on P = 2 and the transport block error pattern length Na = 6.

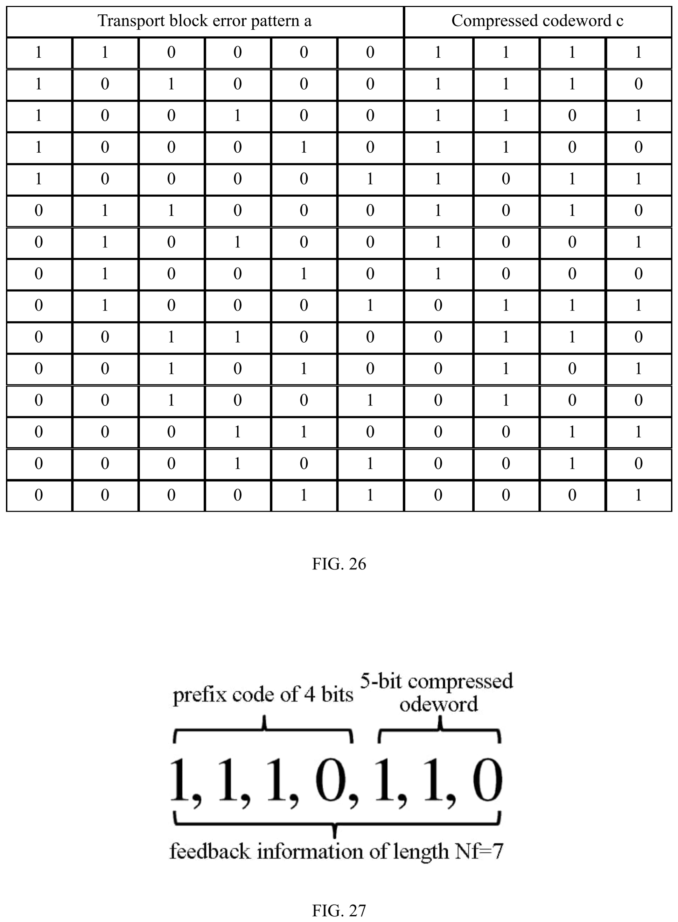

Fig. 26 is a mapping diagram of transport block error pattern to compressed codeword provided in an example of the present disclosure. As shown in Fig. 26, $\binom{Na}{P} = \binom{6}{2} = 15$ sequences of Na = 6 length containing P = 2 ack bits = 1 are mapped to the arithmetic coding of a bit sequence of length $\left\lceil log_2 \binom{Na}{P} \right\rceil = \left\lceil log_2 \binom{6}{2} \right\rceil = 4$ to generate the compressed codeword c = [1, 0, 1, 0].

As shown in Fig. 10(e), the base station concatenates the prefix codeword $[p_1] = [0]$ and the compressed codeword c = $[c_1, c_2, \cdots, c_{Nc}]$ = [1, 0, 1, 0] to obtain the feedback information f = $[p_1, c_1, c_2, c_3, c_4]$ = [0, 1, 0, 1, 0], where the length of feedback information f is $Nf = 1 + \left\lceil log_2 \binom{Na}{Pmax} \right\rceil = 5$.

In this example, the base station transmits a signal containing the feedback information f = [0, 1, 0, 1, 0] to the terminal sequence <SN(1), SN(2), SN(3)>. The terminal sequence <SN(1), SN(2), SN(3)> receives and performs decoding on the signal containing feedback information f to determine the acknowledgment for transport blocks b(1), b(2), b(3), b(4) as follows.

If terminal SN(1) experiences a decoding failure, it determines that the acknowledgments for both transport block b(1) and transport block b(4) are NACK. If terminal SN(1) successfully decodes and obtains the feedback information f, it counts the number of consecutive '1' bits starting from the first bit in the decoded feedback information f, yielding N1 = 0 and the maximum number of correct transport blocks Pmax = 2. It then estimates the number of correct transport blocks P' = Pmax - N1 = 2 - 0 = 2. Based on the size of ordered set of transport block identifiers Na = 6 and the estimated number of correct transport blocks P' = 2, it determines the length of the compressed codeword as $\left\lceil log_2 \binom{Na}{P'} \right\rceil = 4$.

Subsequently, it extracts the last $\left\lceil log_2 \binom{Na}{P'} \right\rceil$ bits of feedback information f and uses the estimated number of correct transport blocks P' = 2 and the size of ordered set of transport block identifiers Na = 6 as inputs for arithmetic decoding to obtain the transport block error pattern a. Since the signature index of the random access signature corresponding to transport block b(1) is 2 and a(2) = 1, terminal SN(1) determines the acknowledgment for transport block b(1) as ACK. Since the signature index of the random access signature corresponding to transport block b(4) is 1 and a(1) = 0, terminal SN(1) determines the acknowledgment for transport block b(4) as NACK.

If the terminal SN(2) experiences a decoding failure, it determines the acknowledgment for transport block b(2) as a negative acknowledgment (NACK). If the terminal SN(2) decodes successfully and obtains feedback information f, it counts the number of consecutive "1" bits starting from the first bit, yielding N1 = 0, and the maximum number of correct transport blocks Pmax = 2. It then estimates the number of correct transport blocks P' = Pmax - N1 = 2 - 0 = 2. Based on the size of the ordered set of transport block identifiers Na = 6 and the estimated number of correct transport blocks P' = 2, it determines the length of the compressed codeword as $\left\lceil log_2 \binom{Na}{P'} \right\rceil = 4$. Subsequently, it extracts the last $\left\lceil log_2 \binom{Na}{P'} \right\rceil$ bits of feedback information f, along with the estimated number of correct transport blocks P' = 2 and the size of the ordered set of transport block identifiers Na = 6, as inputs for arithmetic decoding to obtain the transport block error pattern a. Since the signature index of the random access signature corresponding to transport block b(2) is 3 and a(3) = 1, the terminal SN(2) determines the acknowledgment for transport block b(2) as a positive acknowledgment (ACK).

If the terminal SN(3) experiences a decoding failure, it determines the acknowledgment for transport block b(3) as a negative acknowledgment (NACK). If the terminal SN(3) decodes successfully and obtains feedback information f, it counts the number of consecutive "1" bits starting from the first bit, yielding N1 = 0, and the maximum number of correct transport blocks Pmax = 2. It then estimates the number of correct transport blocks P' = Pmax - N1 = 2 - 0 = 2. Based on the size of the ordered set of transport block identifiers Na = 6 and the estimated number of correct transport blocks P' = 2, it determines the length of the compressed codeword as $\left\lceil log_2 \binom{\text{Na}}{\text{P'}} \right\rceil = 4$. Subsequently, it extracts the last

$\left\lceil log_2 \binom{\text{Na}}{\text{P'}} \right\rceil$ bits of feedback information f, along with the estimated number of correct transport blocks P' = 2 and the size of the ordered set of transport block identifiers Na = 6, as inputs for arithmetic decoding to obtain the transport block error pattern a. Since the signature index of the random access signature corresponding to transport block b(3) is 4 and a(4) = 0, the terminal SN(3) determines the acknowledgment for transport block b(3) as a negative acknowledgment (NACK).

In the information transmission method provided in this example, the terminal SN(1) transmits two transport blocks, b(1) and b(4), but selects different random access signatures. The base station determines the feedback information f based on the signature indices of the random access signatures corresponding to correctly decoded transport blocks, enabling the terminal SN(1) to distinguish whether the two transport blocks b(1) and b(4) were correctly received. At the same time, since the size of the ordered set of random access signatures is generally smaller than that of the ordered set of UE identifiers, the length of feedback information f is reduced, thereby minimizing control signaling overhead and improving information transmission efficiency.

Example 12:

The difference between this example and Example 5 lies in that, in this example, the feedback information includes the prefix code and the compressed codeword. Fig. 27 is a schematic diagram of the feedback information, the prefix code, and the compressed codeword provided in the example of the present disclosure. The method for determining the feedback information f is as follows.

The base station encodes the information of the set of correct transport blocks according to a following method to obtain the feedback information.

Based on the number of correct transport blocks P = 1, the maximum number of correct transport blocks Pmax = 3, and the size of the ordered set of transport block identifiers Na = 7, the base station determines the number of prefix

codeword bits $\text{Np} = 1 + \left\lceil log_2 \binom{\text{Na}}{\text{Pmax}} \right\rceil - \left\lceil log_2 \binom{\text{Na}}{P} \right\rceil = 1 + \left\lceil log_2 \binom{7}{3} \right\rceil - \left\lceil log_2 \binom{7}{1} \right\rceil = 1 + 6 - 3 = 4$.

Based on the number of prefix codeword bits Np = 4, the base station sets the first Np - 1 = 4 - 1 = 3 bits of the prefix codeword as "1" and the last bit as "0", i.e., the prefix codeword $[p_1, p_2, p_3, p_4]$ = [1, 1, 1, 0].

The base station determines the compressed codeword by performing compression encoding on the set of correct transport block identifiers according to a following method.

The base station determines the length of the compressed codeword Nc as $\left\lceil log_2 \binom{\text{Na}}{P} \right\rceil = \left\lceil log_2 \binom{7}{1} \right\rceil = 3$ based on P = 1 and the set of correct transport block identifiers BI = {2}.

According to the length of the compressed codeword Nc = 3 and the set of correct transport block identifiers BI = {2}, the base station maps $\binom{\text{Na}}{P} = \binom{7}{1} = 7$ possible sets of correct transport block identifiers with size 1 to the arithmetic coding of a $\left\lceil log_2 \binom{\text{Na}}{P} \right\rceil = \left\lceil log_2 \binom{7}{1} \right\rceil = 3$ -long bit sequence to obtain the compressed codeword c = $[c_1, c_2, \cdots, c_{Nc}]$ = $[c_1, c_2, c_3]$ = [1, 1, 0], following the algorithm flowchart in Fig. 7.

As shown in Fig. 10(e), the base station concatenates the prefix codeword $[p_1, p_2, p_3, p_4]$ = [1, 1, 1, 0] and the compressed codeword c = $[c_1, c_2, \cdots, c_{Nc}]$ = $[c_1, c_2, c_3]$ = [1, 1, 0] to form the feedback information f = $[p_1, p_2, p_3, p_4, c_1, c_2, c_3]$ = [1, 1, 1, 0, 1, 1, 0], where the length of the feedback information f is

$\text{Nf} = 1 + \left\lceil log_2 \binom{\text{Na}}{\text{Pmax}} \right\rceil = 1 + \left\lceil log_2 \binom{7}{3} \right\rceil = 1 + 6 = 7$.

Table 2 Correspondence between the Number of Correct Transport Blocks P and the Length of the Compressed Codeword Nc

| the Number of Correct Transport Blocks P | the Length of the Compressed Codeword Nc = $\left\lceil log_2 \binom{\text{Na}}{P} \right\rceil$ |
|---|---|
|  |  |

(continued)

| 0 | $\left\lceil log_2 \binom{7}{0} \right\rceil = 0$ |
|---|---|
| 1 | $\left\lceil log_2 \binom{7}{1} \right\rceil = 3$ |
| 2 | $\left\lceil log_2 \binom{7}{2} \right\rceil = 5$ |
| 3 | $\left\lceil log_2 \binom{7}{3} \right\rceil = 6$ |

Another difference between this example and Example 5 lies in that, in this example, the base station transmits a signal containing feedback information f = [1, 1, 1, 0, 1, 1, 0] to the terminal sequence <SN(1), SN(2), SN(3), SN(4)>. The terminal sequence <SN(1), SN(2), SN(3), SN(4)> receives the signal containing feedback information f. Terminal devices SN(1), SN(2), SN(3), and SN(4) decode the signal containing feedback information f respectively and determine the acknowledgment for transport blocks b(1), b(2), b(3), and b(4) using a following method.

If terminal SN(1) fails in decoding, then terminal SN(1) determines the acknowledgment for transport block b(1) as a negative acknowledgment (NACK). If terminal SN(1) succeeds in decoding and obtains feedback information f, terminal SN(1) counts the number of consecutive "1" bits starting from the first bit in the decoded feedback information f as N1 = 3, with the length of feedback information f Nf = 7, determines the length of the compressed codeword Nc = Nf - N1 - 1 = 7 - 3 - 1 = 3, then looks up Table 2 based on the length of the compressed codeword Nc to determine the number of correct transport blocks P = 1, subsequently extracts the last Nc bits of feedback information f along with the number of correct transport blocks P and the size of ordered set of transport block identifiers Na = 7 as inputs for arithmetic decoding to obtain the set of correct transport block identifiers BI. Since the set of correct transport block identifiers BI does not include the signature index 1 of the random access signature included in transport block b(1), terminal SN(1) determines the acknowledgment for transport block b(1) as a negative acknowledgment (NACK).

If terminal SN(2) experiences a decoding failure, then terminal SN(2) determines the acknowledgment for transport block b(2) as a negative acknowledgment (NACK). If terminal SN(2) decodes successfully to obtain feedback information f, terminal SN(2) counts the number of consecutive "1" bits starting from the first bit in the decoded feedback information f as N1 = 3, with the length of feedback information f Nf = 7, determines the length of the compressed codeword Nc = Nf - N1 - 1 = 7 - 3 - 1 = 3, then based on the length of the compressed codeword Nc, consults Table 2 to determine the number of correct transport blocks P = 1, subsequently extracts the last Nc bits of feedback information f along with the number of correct transport blocks P and the size of ordered set of transport block identifiers Na = 7 as inputs for arithmetic decoding to obtain the set of correct transport block identifiers BI. Since the set of correct transport block identifiers BI does not include the signature index 5 of the random access signature contained in transport block b(2), terminal SN(2) determines the acknowledgment for transport block b(2) as a negative acknowledgment (NACK).

If terminal SN(3) experiences a decoding failure, then terminal SN(3) determines the acknowledgment for transport block b(3) as a negative acknowledgment (NACK). If terminal SN(3) decodes successfully to obtain feedback information f, terminal SN(3) counts the number of consecutive "1" bits starting from the first bit in the decoded feedback information f as N1 = 3, with the length of feedback information f Nf = 7, determines the length of the compressed codeword Nc = Nf - N1 - 1 = 7 - 3 - 1 = 3, then based on the length of the compressed codeword Nc, consults Table 2 to determine the number of correct transport blocks P = 1, subsequently extracts the last Nc bits of feedback information f along with the number of correct transport blocks P and the size of ordered set of transport block identifiers Na = 7 as inputs for arithmetic decoding to obtain the set of correct transport block identifiers B1. Since the set of correct transport block identifiers BI does not include the signature index 3 of the random access signature contained in transport block b(3), terminal SN(3) determines the acknowledgment for transport block b(3) as a negative acknowledgment (NACK).

If terminal SN(4) experiences a decoding failure, then terminal SN(4) determines the acknowledgment for transport block b(4) as a negative acknowledgment (NACK). If terminal SN(4) decodes successfully to obtain feedback information f, terminal SN(4) counts the number of consecutive "1" bits starting from the first bit in the decoded feedback information f as N1 = 3, with the length of feedback information f Nf = 7, determines the length of the compressed codeword Nc = Nf - N1 - 1 = 7 - 3 - 1 = 3, then based on the length of the compressed codeword Nc, consults Table 2 to determine the number of correct transport blocks P = 1, subsequently extracts the last Nc bits of feedback information f along with the number of correct transport blocks P and the size of ordered set of transport block identifiers Na = 7 as inputs for arithmetic decoding to obtain the set of correct transport block identifiers BI. Since the set of correct transport block identifiers BI includes the signature index 2 of the random access signature contained in transport block b(4), terminal SN(4) determines the acknowledgment for transport block b(4) as a positive acknowledgment (ACK).

Example 13:

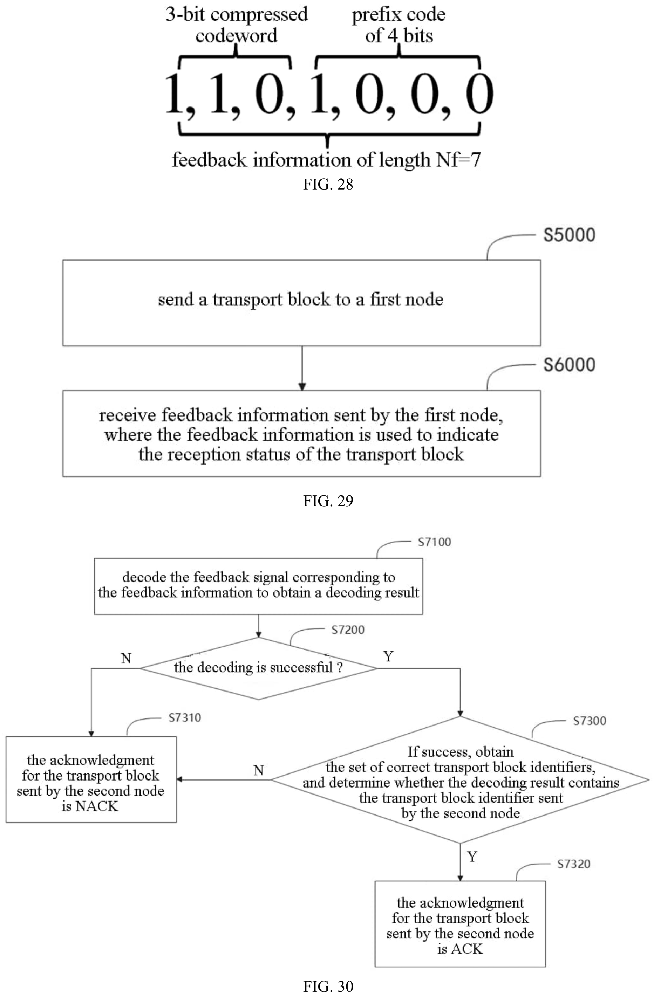

The difference between this example and Example 5 lies in that, in this example, the feedback information includes the prefix code and the compressed codeword. Fig. 28 is a schematic diagram of the feedback information, the prefix code, and the compressed codeword provided by an example of the present disclosure. The method for determining the feedback information f is as follows.

The base station encodes the information of the set of correct transport blocks according to a following method to obtain the feedback information.

Based on the number of correct transport blocks P = 1, the maximum number of correct transport blocks Pmax = 3, and the size of the ordered set of transport block identifiers Na = 7, the base station determines the number of prefix codeword bits

$$\mathrm{Np} = \max_{x=0,1,\cdots,\mathrm{Pmax}} \left( \mathrm{Pmax}\text{-}x + 1 + \left\lceil log_2 \binom{\mathrm{Na}}{x} \right\rceil \right) - \left\lceil log_2 \binom{\mathrm{Na}}{P} \right\rceil = \max_{x=0,1,\cdots,\mathrm{Pmax}} \left( 3\text{-}x + 1 + \left\lceil log_2 \binom{7}{x} \right\rceil \right) - \left\lceil log_2 \binom{7}{1} \right\rceil = 7 - 3 = 4$$

. Based on the number of prefix codeword bits Np = 4, the base station determines the first bit of the prefix codeword as "1" and the remaining Np - 1 = 4 - 1 = 3 bits of the prefix codeword as "0", i.e., the prefix codeword is $[p_1, p_2, p_3, p_4] = [1, 0, 0, 0]$.

The base station determines the compressed codeword by performing compression encoding on the set of correct transport block identifiers according to a following method.

The base station determines the length of the compressed codeword Nc as $\left\lceil log_2 \binom{\mathrm{Na}}{P} \right\rceil = \left\lceil log_2 \binom{7}{1} \right\rceil = 3$ based on P = 1 and the set of correct transport block identifiers BI = {2}.

According to the length of the compressed codeword Nc = 3 and the set of correct transport block identifiers BI = {2}, the base station maps $\binom{\mathrm{Na}}{P} = \binom{7}{1} = 7$ possible sets of correct transport block identifiers with size 1 to the arithmetic coding of a $\left\lceil log_2 \binom{\mathrm{Na}}{P} \right\rceil = \left\lceil log_2 \binom{7}{1} \right\rceil = 3$ -long bit sequence to obtain the compressed codeword c = $[c_1, c_2, \cdots, c_{Nc}] = [c_1, c_2, c_3] = [1, 1, 0]$, following the algorithm flowchart in Fig. 7.

As shown in Fig. 10(f), the base station concatenates the prefix codeword $[p_1, p_2, p_3, p_4] = [1, 0, 0, 0]$ and the compressed codeword c = $[c_1, c_2, \cdots, c_{Nc}] = [c_1, c_2, c_3] = [1, 1, 0]$ to obtain the feedback information f = $[c_1, c_2, c_3, p_1, p_2, p_3, p_4]$ = [1, 1, 0, 1, 0, 0, 0], where the length of feedback information f is Nf = $\max_{x=0,1,\cdots,\mathrm{Pmax}} \left( 3\text{-}x + 1 + \left\lceil log_2 \binom{7}{x} \right\rceil \right) = 7$.

Another difference between this example and Example 5 lies in that, in this example, the base station transmits a signal containing feedback information f = [1, 1, 0, 1, 0, 0, 0] to the terminal sequence <SN(1), SN(2), SN(3), SN(4)>. The terminal sequence <SN(1), SN(2), SN(3), SN(4)> receives the signal containing feedback information f. Terminal devices SN(1), SN(2), SN(3), and SN(4) decode the signal containing feedback information f respectively and determine the acknowledgment for transport blocks b(1), b(2), b(3), and b(4) using a following method.

If terminal SN(1) fails in decoding, it determines the acknowledgment for transport block b(1) as a negative acknowledgment (NACK). If terminal SN(1) succeeds in decoding and obtains feedback information f, it counts the number of consecutive "0" bits starting from the last bit of the decoded feedback information f as N0 = 3, with the length of feedback information f Nf = 7. It then determines the length of the compressed codeword Nc = Nf - N0 - 1 = 7 - 3 - 1 = 3. Based on the length of the compressed codeword Nc, it refers to Table 2 to determine the number of correct transport blocks P = 1. Subsequently, it extracts the first Nc bits of feedback information f, along with the number of correct transport blocks P and the size of ordered set of transport block identifiers Na = 7, as inputs for arithmetic decoding to obtain the set of correct transport block identifiers BI. Since the set of correct transport block identifiers BI does not include the signature index 1 of the random access signature contained in transport block b(1), terminal SN(1) determines the acknowledgment for transport block b(1) as a negative acknowledgment (NACK).

If terminal SN(2) fails in decoding, it determines the acknowledgment for transport block b(2) as a negative acknowledgment (NACK). If terminal SN(2) succeeds in decoding and obtains feedback information f, it counts the number of consecutive "0" bits starting from the last bit of the decoded feedback information f as N0 = 3, with the length of feedback information f Nf = 7. It then determines the length of the compressed codeword Nc = Nf - N0 - 1 = 7 - 3 - 1 = 3. Based on the length of the compressed codeword Nc, it refers to Table 2 to determine the number of correct transport blocks P = 1. Subsequently, it extracts the first Nc bits of feedback information f, along with the number of correct transport blocks P and the size of ordered set of transport block identifiers Na = 7, as inputs for arithmetic decoding to obtain the set of correct transport block identifiers BI. Since the set of correct transport block identifiers BI does not include the signature index 5 of the random access signature contained in transport block b(2), terminal SN(2) determines the acknowledgment for transport block b(2) as a negative acknowledgment (NACK).

If terminal SN(3) fails in decoding, it determines the acknowledgment for transport block b(3) as a negative acknowledgment (NACK). If terminal SN(3) succeeds in decoding and obtains feedback information f, it counts the number of consecutive "0" bits starting from the last bit of the decoded feedback information f as N0 = 3, with the length of feedback information f Nf = 7. It then determines the length of the compressed codeword Nc = Nf - N0 - 1 = 7 - 3 - 1 = 3. Based on the length of the compressed codeword Nc, it refers to Table 2 to determine the number of correct transport blocks P = 1. Subsequently, it extracts the first Nc bits of feedback information f, along with the number of correct transport blocks P and the size of ordered set of transport block identifiers Na = 7, as inputs for arithmetic decoding to obtain the set of correct transport block identifiers BI. Since the set of correct transport block identifiers BI does not include the signature index 3 of the random access signature contained in transport block b(3), terminal SN(3) determines the acknowledgment for transport block b(3) as a negative acknowledgment (NACK).

If terminal SN(4) fails in decoding, it determines the acknowledgment for transport block b(4) as a negative acknowledgment (NACK). If terminal SN(4) succeeds in decoding and obtains feedback information f, it counts the number of consecutive "0" bits starting from the last bit of the decoded feedback information f as N0 = 3, with the length of feedback information f Nf = 7. It then determines the length of the compressed codeword Nc = Nf - N0 - 1 = 7 - 3 - 1 = 3. Based on the length of the compressed codeword Nc, it refers to Table 2 to determine the number of correct transport blocks P = 1. Subsequently, it extracts the first Nc bits of feedback information f, along with the number of correct transport blocks P and the size of ordered set of transport block identifiers Na = 7, as inputs for arithmetic decoding to obtain the set of correct transport block identifiers BI. Since the set of correct transport block identifiers BI includes the signature index 2 of the random access signature contained in transport block b(4), terminal SN(4) determines the acknowledgment for transport block b(4) as a positive acknowledgment (ACK).

Example 14:

The difference between this example and Example 12 lies in that the feedback information in this example includes the prefix code and the compressed codeword. Fig. 27 is a schematic diagram of the feedback information, the prefix code, and the compressed codeword provided in the example of the present disclosure. The method for determining the feedback information f is as follows.

The base station encodes the information of the set of correct transport blocks according to a following method to obtain the feedback information.

Based on the number of correct transport blocks P = 1, the maximum number of correct transport blocks Pmax = 3, and the size of the transport block identifier ordered set Na = 7, the base station determines the number of prefix codeword bits

$$Np = Pmax - \left\lfloor \frac{Na+1}{3} \right\rfloor + 1 + \left\lceil log_2\left( \left\lfloor \frac{Na}{\left\lfloor \frac{Na+1}{3} \right\rfloor} \right\rfloor \right) \right\rceil - \left\lceil log_2\binom{Na}{P} \right\rceil = 3 -$$

$$\left\lfloor \frac{7+1}{3} \right\rfloor + 1 + \left\lceil log_2\left( \left\lfloor \frac{7}{\left\lfloor \frac{7+1}{3} \right\rfloor} \right\rfloor \right) \right\rceil - \left\lceil log_2\binom{7}{1} \right\rceil = 3 - 2 + 1 + 5 - 3 = 4.$$ According to the number of prefix codeword bits Np = 4, the base station determines that the first Np - 1 = 4 - 1 = 3 bits of the prefix codeword are "1 ", and the last 1 bit of the prefix codeword is "0", i.e., the prefix codeword is [$p_1$, $p_2$, $p_3$, $p_4$] =[1, 1, 1, 0].

Fig. 29 illustrates the information transmission method provided by the embodiments of the present disclosure, specifically including a step S5000 and a step S6000.

At the step S5000, transport blocks are sent to the first node.

At the step S6000, feedback information sent by the first node is received, where the feedback information is used to characterize the reception status of the transport blocks.

In some embodiments, a second node sends a signal containing one or more transport blocks to the first node, and the one or more transport blocks form a transport block set at the first node. In other embodiments, two or more second nodes may transmit one or more transport blocks to the first node, where these transport blocks form a transport block set.

In some embodiments, when multiple second nodes transmit transport blocks to the first node, these second nodes sending the transport block set constitute a second node sequence. The second node sequence includes Nu second nodes, and the transport block set includes NT transport blocks. Nu and NT are positive integers, and Nu is less than or equal to NT.

In some embodiments, a transport block in the transport block set includes a transport block identifier which is an element of the ordered set of transport block identifiers. The ordered set of transport block identifiers includes Na transport block identifiers I(1), I(2), ..., I(Na), where Na is the size of the ordered set of transport block identifiers. For i = 1, 2, ..., Na, the i-th element of the ordered set of transport block identifiers is I(i). The i-th element I(i) of the ordered set of transport block identifiers is an integer. In some examples, the i-th element I(i) of the ordered set of transport block identifiers may be the integer i or the integer i-1.

In some embodiments, the transport block is indicated by the transport block identifier.

In some embodiments, the transport block identifier may be one of the following: a UE identifier, an index value of the UE identifier, or a signature index.

In some embodiments, the UE identifier is the UE identifier of a second node in a second node sequence, where the UE identifiers of two different second nodes in the second node sequence are distinct. The UE identifier may be used by the first node to distinguish different transport blocks within a transport block set in a signal containing the transport block set, where the UE identifier is an integer.

It should be noted that the UE identifier may be a Subscription Permanent Identifier (SUPI), Generic Public Subscription Identifier (GPSI), Permanent Equipment Identifier (PEI), Network Access Identifier (NAI), Subscription Concealed Identifier (SUCI), Globally Unique Temporary Identity (GUTI), Radio Network Temporary Identifier (RNTI), System Information RNTI (SI-RNTI), Paging RNTI (P-RNTI), Random Access RNTI (RA-RNTI), Temporary Cell RNTI (TC-RNTI), Cell RNTI (C-RNTI), Transmit Power Control-PUCCH RNTI (TPC-PUCCH-RNTI), Transmit Power Control-PUSCH RNTI (TPC-PUSCH-RNTI), Transmit Power Control-Sounding Reference Symbols RNTI (TPC-SRS-RNTI), Interruption RNTI (INT-RNTI), Modulation Coding Scheme Cell RNTI (MCS-C-RNTI), Configured Scheduling RNTI (CS-RNTI), Slot Format Indication RNTI (SFI-RNTI), Semi-Persistent CSI RNTI (SP-CSI-RNTI), etc.

In some embodiments, the transport block identifier is the UE identifier, and the element of the ordered set of transport block identifiers is the UE identifier.

In some examples, the ordered set of transport block identifiers I = <I(1), I(2), I(3), I(4), I(5)> = <0, 1, 2, 3, 4>; where the size of the ordered set of transport block identifiers is Na = 5, and the UE identifier corresponding to the second element I(2) in the ordered set of transport block identifiers is 1. In some examples, the ordered set of transport block identifiers I = <1(1), 1(2), 1(3), 1(4), 1(5)> = <1, 2, 3, 4, 5>; where the size of the ordered set of transport block identifiers is Na = 5, and the UE identifier corresponding to the second element I(2) in the ordered set of transport block identifiers is 2. In some examples, the ordered set of transport block identifiers I = <I(1), 1(2), I(3), I(4)> = <0, 11, 20, 30>; where the size of the ordered set of transport block identifiers is Na = 4, and the UE identifier corresponding to the second element I(2) in the ordered set of transport block identifiers is 11.

In some embodiments, the index value of the UE identifier refers to the index k of the element I(k) in the ordered set of transport block identifiers I = <1(1), I(2), ..., I(Na)>, where k = 1, 2, ..., Na, and the index value of the UE identifier is an integer.

In some embodiments, the transport block identifier is the index value of the UE identifier which is an element in the ordered set of UE identifiers, and the ordered set of UE identifiers includes Na UE identifiers ID(1), ID(2), ..., ID(Na); where, Na is the size of the ordered set of UE identifiers and also the size of the ordered set of transport block identifiers, k = 1, 2, ..., Na, and the index value of the k-th UE identifier ID(k) in the ordered set of UE identifiers corresponds to the k-th element I(k) in the ordered set of transport block identifiers. In some examples, the ordered set of UE identifiers ID = <ID(1), ID(2), ID(3), ID(4)> = <0, 11, 20, 30>, and the corresponding ordered set of transport block identifiers I = <I(1), 1(2), I(3), I(4)> = <0, 1, 2, 3>; where, the size of the ordered set of UE identifiers and the size of the ordered set of transport block identifiers are both Na = 4, and the index value of the UE identifier for the element ID(2) = 11 in the ordered set of UE identifiers is the element I(2) = 1 in the ordered set of transport block identifiers. In some examples, the ordered set of UE identifiers ID = <ID(1), ID(2), ID(3), ID(4)> = <11, 0, 20, 30>, and the corresponding ordered set of transport block identifiers I = <1(1), 1(2), 1(3), 1(4)> = <0, 1, 2, 3>; where, the size of the ordered set of UE identifiers and the size of the ordered set of transport block identifiers are both Na = 4, and the index value of the UE identifier for the element ID(2) = 0 in the ordered set of UE identifiers is the element I(2) = 1 in the ordered set of transport block identifiers. In some examples, the ordered set of UE identifiers ID = <ID(1), ID(2), ID(3), ID(4)> = <11, 0, 20, 30>, and the corresponding ordered set of transport block identifiers I = <I(1), I(2), I(3), I(4)> = <1, 2, 3, 4>; where, the size of the ordered set of UE identifiers and the size of the ordered set of transport block identifiers are both Na = 4, and the index value of the UE identifier for the element ID(2) = 0 in the ordered set of UE identifiers is the element I(2) = 2 in the ordered set of transport block identifiers.

In some embodiments, the transport block identifier is a signature index, and the signature index is the signature index of a random access signature, i.e., a transport block in the transport block set includes a random access signature which is an element in the ordered set of random access signatures, and the ordered set of random access signatures includes Na random access signatures r(1), r(2), ..., r(Na); where, Na is the size of the ordered set of random access signatures and also the size of the ordered set of transport block identifiers, i = 1, 2, ..., Na, and the signature index of the i-th random access signature r(i) in the ordered set of random access signatures is the i-th element I(i) in the ordered set of transport block identifiers. The i-th element I(i) in the ordered set of transport block identifiers may be the integer i or the integer i-1.

It should be noted that the random access signature may be a Pilot, Reference Signal, Preamble, Spread Spectrum Sequence, Interleaver, Interleaver Pattern, Interleaver Sequence, Scrambling Sequence, or Sparse Code Sequence, etc.

In some embodiments, the second node determines the random access signature of the transport block based on its UE identifier as the random access signature included in a transport block within the transport block set. These random access signatures can be used by the first node to distinguish different transport blocks within the transport block set in a signal containing the transport block set.

In some embodiments, the second node determines the random access signature included in a transport block based on higher layer parameters as the random access signature included in a transport block within the transport block set. These random access signatures can be used by the first node to distinguish different transport blocks within the transport block set in a signal containing the transport block set.

It should be noted that the first node and the second node can be any network elements with data reception and signaling transmission capabilities, such as base stations, relays, or terminal devices.

It should be noted that the transport block subset is a set composed of correct transport blocks or erroneous transport blocks within the transport block set. The information of the transport block subset includes the set of transport block identifiers of the transport block subset, the maximum number of transport blocks Pmax of the transport block subset, the number of transport blocks P of the transport block subset, the ordered set of transport block identifiers, the size of ordered set of transport block identifiers Na, the length of feedback information Nf, and the transport block error pattern a. It should be noted that the feedback information can be obtained based on one or more of the aforementioned information of the transport block subset, i.e., not all the above information is necessarily required to generate the feedback information.

In some embodiments, when the transport block subset is a set composed of correct transport blocks from the transport block set, the set of transport block identifiers of the transport block subset is the set of correct transport block identifiers. The maximum number of transport blocks of the transport block subset is the maximum number of correct transport blocks Pmax, and the number of transport blocks of the transport block subset is the number of correct transport blocks P.

In some examples, when the transport block subset is a set composed of correct transport blocks from the transport block set, the information of the transport block subset is the information of the set of correct transport blocks. Here, the information of the set of correct transport blocks includes the maximum number of correct transport blocks Pmax, the ordered set of transport block identifiers, the size of ordered set of transport block identifiers Na, the set of correct transport block identifiers, the number of correct transport blocks P, the transport block error pattern a, and the length of feedback information f Nf. It should be noted that the feedback information can be obtained based on the information of one or more correct transport blocks mentioned above, i.e., the generation of feedback information does not necessarily require all the aforementioned information.

In some embodiments, when the transport block subset is a set composed of erroneous transport blocks from the transport block set, the transport block identifier set of the transport block subset is the set of erroneous transport block identifiers. The maximum number of transport blocks in the transport block subset is the maximum number of erroneous transport blocks Pmax, and the number of transport blocks in the transport block subset is the number of erroneous transport blocks P.

In some examples, when the transport block subset is a set composed of erroneous transport blocks from the transport block set, the information of the transport block subset is the information of the set of erroneous transport blocks. Here, the information of the set of erroneous transport blocks includes the maximum number of erroneous transport blocks Pmax, the ordered set of transport block identifiers, the size of the ordered set of transport block identifiers Na, the set of erroneous transport block identifiers, the number of erroneous transport blocks P, the transport block error pattern a, and the length of feedback information f Nf. It should be noted that the feedback information can be obtained based on one or more pieces of information about the erroneous transport blocks mentioned above, i.e., the generation of feedback information does not necessarily require all the aforementioned information.

In some embodiments, the maximum number of transport blocks Pmax of the transport block subset equals the size of ordered set of transport block identifiers Na. In other embodiments, the maximum number of transport blocks Pmax of the transport block subset is configured by the first node. In yet other embodiments, the maximum number of transport blocks Pmax of the transport block subset is preconfigured by higher layer parameters.

In some embodiments, the transport block subset is a set of correct transport blocks, and the information of the set of correct transport blocks includes a set of correct transport block identifiers, which is the set of UE identifiers included in the correctly received transport blocks within the transport block set. A correctly received transport block refers to a transport block whose acknowledgment status is a positive acknowledgment (ACK). A UE identifier belonging to the set of correct transport block identifiers indicates that the acknowledgment status of the transport block corresponding to that UE identifier is a positive acknowledgment (ACK), while a UE identifier not belonging to the set of correct transport block identifiers indicates that the acknowledgment status of the transport block corresponding to that UE identifier is a negative acknowledgment (NACK).

In other embodiments, the transport block subset is a set of erroneous transport blocks, and the information of the set of erroneous transport blocks includes a set of erroneous transport block identifiers, which is the set of UE identifiers included in the erroneously received transport blocks within the transport block set. An erroneously received transport block refers to a transport block whose acknowledgment status is a negative acknowledgment (NACK). A UE identifier belonging to the set of erroneous transport block identifiers indicates that the acknowledgment status of the transport block corresponding to that UE identifier is a negative acknowledgment (NACK), while a UE identifier not belonging to the set of erroneous transport block identifiers indicates that the acknowledgment status of the transport block corresponding to that UE identifier is a positive acknowledgment (ACK).

In some embodiments, the transport block subset is a set of correct transport blocks, where the information of the correct transport block set includes a set of correct transport block identifiers. The set of correct transport block identifiers is a collection of index values of UE identifiers included in the correctly received transport blocks within the transport block set. A correctly received transport block refers to a transport block whose acknowledgment status is a positive acknowledgment (ACK). An index value of a UE identifier belonging to the set of correct transport block identifiers is used to indicate that the acknowledgment status of the transport block corresponding to that index value of the UE identifier is ACK. Conversely, an index value of a UE identifier not belonging to the set of correct transport block identifiers is used to indicate that the acknowledgment status of the transport block corresponding to that index value of the UE identifier is NACK.

In other embodiments, the transport block subset is a set of erroneous transport blocks, where the information of the erroneous transport block set includes a set of erroneous transport block identifiers. The set of erroneous transport block identifiers is a collection of index values of UE identifiers included in the erroneously received transport blocks within the transport block set. An erroneously received transport block refers to a transport block whose acknowledgment status is a negative acknowledgment (NACK). An index value of a UE identifier belonging to the set of erroneous transport block identifiers is used to indicate that the acknowledgment status of the transport block corresponding to that index value of the UE identifier is NACK. Conversely, an index value of a UE identifier not belonging to the set of erroneous transport block identifiers is used to indicate that the acknowledgment status of the transport block corresponding to that index value of the UE identifier is ACK.

In some embodiments, the transport block subset is a set of correct transport blocks, where the information of the correct transport block set includes a set of correct transport block identifiers. The set of correct transport block identifiers is a collection of signature indices of random access signatures corresponding to the correctly received transport blocks within the transport block set. A correctly received transport block refers to a transport block whose acknowledgment status is positive acknowledgment (ACK). A signature index of a random access signature belonging to the set of correct transport block identifiers indicates that the acknowledgment status of the transport block corresponding to that random access signature is positive acknowledgment (ACK). A signature index of a random access signature not belonging to the set of correct transport block identifiers indicates that the acknowledgment status of the transport block corresponding to that random access signature is negative acknowledgment (NACK).

In other embodiments, the transport block subset is a set of erroneous transport blocks, and the information of the erroneous transport block set includes the set of erroneous transport block identifiers. The set of erroneous transport block identifiers is the collection of signature indices of random access signatures corresponding to erroneously received transport blocks in the transport block set. An erroneously received transport block refers to a transport block whose acknowledgment status is negative acknowledgment (NACK). A signature index of a random access signature belonging to the set of erroneous transport block identifiers indicates that the acknowledgment status of the transport block corresponding to that random access signature is negative acknowledgment (NACK). A signature index of a random access signature not belonging to the set of erroneous transport block identifiers indicates that the acknowledgment status of the transport block corresponding to that random access signature is positive acknowledgment (ACK).

In this example, the process of obtaining feedback information f is described from the perspective of the terminal device.

As shown in Fig. 24, the difference between this example and Example 11 lies in that the terminal sequence includes Nu = 3 terminal SNs: SN(1), SN(2), and SN(3), each receiving a signal containing feedback information f transmitted by the base station. Here, feedback information f represents the feedback information for the transport block set B. The feedback information f is a bit sequence of length $Nf = 1 + \left\lceil log_2 \binom{Na}{Pmax} \right\rceil = 1 + \left\lceil log_2 \binom{6}{2} \right\rceil = 5$. The transport block set B includes NT = 4 transport blocks: b(1), b(2), b(3), and b(4), which are transmitted to the base station by terminal devices SN(1), SN(2), SN(3), and SN(1), respectively. The feedback information f is determined by the base station based on the signal containing the transport block set B transmitted in the terminal sequence.

Fig. 30 illustrates a flowchart of the decoding result determination method provided by embodiments of the present disclosure, specifically including steps S7100, S7200, S7300, S7310, and S7320.

At the step S7100, the feedback signal corresponding to the feedback information is decoded to obtain a decoding result.

At the step S7200, it is determined whether the decoding is successful based on the decoding result.

At the step S7300, if the decoding is successful, it is determined whether the decoding result contains the transport block identifier of the transport block transmitted by the second node, based on the set of correct transport block identifiers.

At the step S7310, if the decoding result does not include the transport block identifier of the transport block sent by the second node, it is determined that the acknowledgment for the transport block sent by the second node is a negative acknowledgment (NACK).

At the step S7320, if the decoding result includes the transport block identifier of the transport block sent by the second node, it is determined that the acknowledgment for the transport block sent by the second node is a positive acknowledgment (ACK).

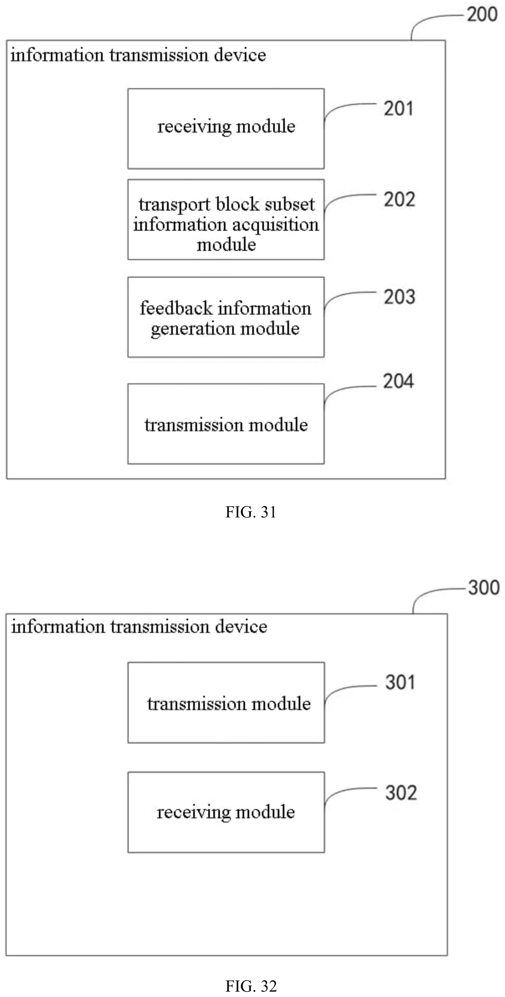

Fig. 31 is a structural schematic diagram of an information transmission device provided by an embodiment of the present disclosure. As shown in Fig. 31, the information transmission device 200 provided by the embodiment of the present disclosure is applied to a base station and can execute the information transmission method provided by the embodiment of the present disclosure. The terminal has corresponding functional modules and technical effects for executing the method. The device can be implemented through software, hardware, or a combination of both, and includes:

- a receiving module 201, configured to receive transport blocks sent by at least one second node; where the transport blocks form a transport block set;
- a transport block subset information acquisition module 202, configured to obtain information of a transport block subset from the transport block set based on the transport block set.
- a feedback information generation module 203, configured to generate feedback information based on the information of the transport block subset; where the feedback information is used to characterize the reception status of transport blocks sent by the second node;
- a transmission module 204, configured to send the feedback information to at least one second node.

Fig. 32 is a structural schematic diagram of an information transmission device provided by an embodiment of the present disclosure. As shown in Fig. 32, the information transmission device 300 provided by the embodiment of the present disclosure is applied to user equipment and can execute the information transmission method provided by the embodiment of the present disclosure. The terminal has corresponding functional modules and technical effects for executing the method. The device can be implemented through software, hardware, or a combination thereof, including:

- a transmission module 301, configured to send a transport block to a first node; where the transport block forms a transport block set at the first node;
- a receiving module 302, configured to receive feedback information sent by the first node; where the feedback information is used to characterize the reception status of the transport block.

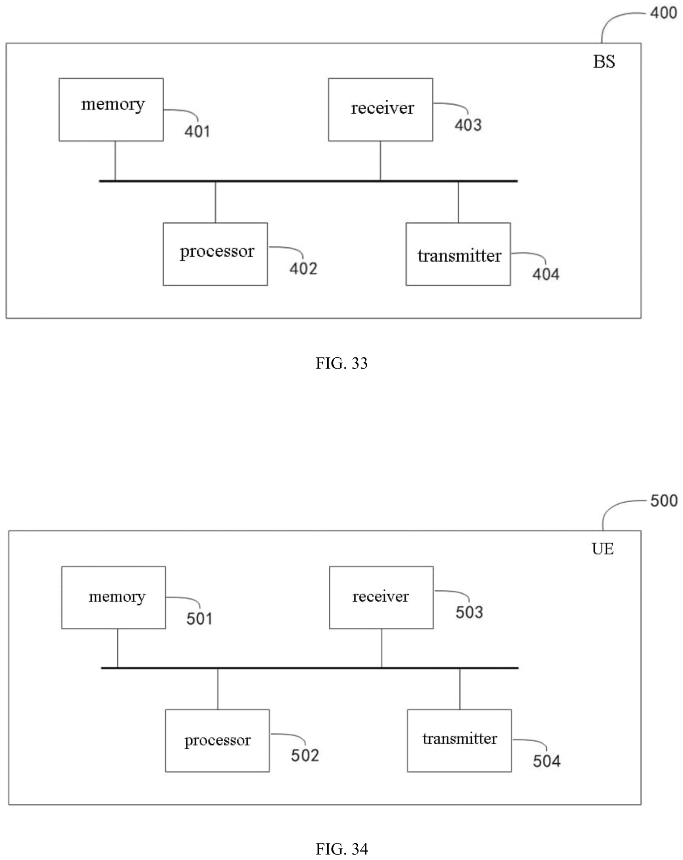

Fig. 33 is a schematic diagram of a base station structure provided by an embodiment of the present disclosure. As shown in Fig. 33, the base station 400 includes a memory 401, a processor 402, a receiver 403, and a transmitter 404. The number of the memory 401 and the processor 402 may be one or more, with Fig. 33 exemplifying one memory 401 and one processor 402; the memory 401 and the processor 402 in the base station may be connected via a bus or other means, with Fig. 33 exemplifying connection via a bus.

The memory 401, as a computer-readable storage medium, may be used to store software programs, computer-executable programs, and modules, such as program instructions/modules corresponding to the information transmission method provided in any embodiment of the present disclosure. The processor 402 executes the aforementioned information transmission method by running the software programs, instructions, and modules stored in the memory 401.

The memory 401 may primarily include a program storage area and a data storage area, where the program storage area may store an operating system and application programs required for at least one function. In addition, the memory 401 may include high-speed random-access memory and may also include non-volatile memory, such as at least one disk storage device, flash memory device, or other non-volatile solid-state storage devices. In some instances, the memory 401 further includes memory remotely located relative to the processor 402, and these remote memories may be connected to the device via a network. Examples of the aforementioned networks include, but are not limited to, the Internet, intranets, local area networks, mobile communication networks, and combinations thereof.

The receiver 403 is configured to receive transport blocks; the transmitter 404 is configured to transmit feedback information under the control of the processor 402.

Fig. 34 is a schematic diagram of the structure of a user equipment provided by an embodiment of the present disclosure. As shown in Fig. 34, the user equipment 500 includes a memory 501, a processor 502, a receiver 503, and a transmitter 504. The number of the memory 501 and the processor 502 may be one or more, with one memory 501 and one processor 502 illustrated in Fig. 34 as an example. The memory 501 and the processor 502 in the user equipment may be connected via a bus or other means, with connection via a bus illustrated in Fig. 34 as an example.

The memory 501, as a computer-readable storage medium, may be used to store software programs, computer-executable programs, and modules, such as program instructions/modules corresponding to the information transmission method provided by any embodiment of the present disclosure. The processor 502 implements the aforementioned information transmission method by executing software programs, instructions, and modules stored in the memory 501.

The memory 501 may primarily include a program storage area and a data storage area, where the program storage area can store the operating system and applications required for at least one function. Additionally, the memory 501 may include high-speed random access memory as well as non-volatile memory, such as at least one disk storage device, flash memory device, or other non-volatile solid-state storage devices. In some instances, the memory 501 further includes memory remotely located relative to the processor 502, which can be connected to the device via a network. Examples of the aforementioned network include, but are not limited to, the Internet, intranets, local area networks, mobile communication networks, and combinations thereof.

The receiver 503 is configured to receive feedback information; the transmitter 504 is configured to transmit transport blocks under the control of the processor 502.

An embodiment of the present application further provides a computer-readable storage medium storing computer-executable instructions, which are used to execute the information transmission method provided in any embodiment of the present application.

An embodiment of the present application further provides a computer program product, including a computer program or computer instructions stored in a computer-readable storage medium. The processor of a computer device reads the computer program or computer instructions from the computer-readable storage medium and executes them, enabling the computer device to perform the information transmission method provided in any embodiment of the present application.

The system architecture and application scenarios described in the embodiments of the present disclosure are intended to clarify the technical scheme of the embodiments and do not limit the scope of the technical scheme provided. Those skilled in the art will recognize that as system architectures evolve and new application scenarios emerge, the technical scheme provided in the embodiments remains applicable to similar technical problems.

Those skilled in the art will understand that all or some of the steps in the methods disclosed above, as well as the functional modules/units in the systems or devices, can be implemented as software, firmware, hardware, or appropriate combinations thereof.

In hardware implementations, the division between functional modules/units as described above does not necessarily correspond to the division of physical components; for instance, a single physical component may encompass multiple functions, or a function or step may be executed through the collaboration of several physical components. Certain physical components or all physical components may be implemented as software executed by a processor, such as a central processing unit, digital signal processor, or microprocessor, or as hardware, or as an integrated circuit, such as an application-specific integrated circuit. Such software may be distributed on computer-readable media, which may include computer storage media (or non-transitory media) and communication media (or transitory media). As is well known to those of ordinary skill in the art, the term computer storage media includes volatile and non-volatile, removable and non-removable media implemented in any method or technology for storing information, such as computer-readable instructions, data structures, program modules, or other data. computer storage media include, but are not limited to, RAM, ROM, EEPROM, flash memory or other memory technologies, CD-ROM, digital versatile discs (DVD) or other optical storage, magnetic cassettes, magnetic tapes, magnetic disk storage or other magnetic storage devices, or any other medium that can be used to store desired information and can be accessed by a computer. Furthermore, as is well known to those of ordinary skill in the art, communication media typically embody computer-readable instructions, data structures, program modules, or other data in a modulated data signal, such as a carrier wave or other transmission mechanism, and may include any information delivery medium.

The terms "component," "module," "system," and the like used in this specification refer to computer-related entities, hardware, firmware, combinations of hardware and software, software, or software in execution. For example, a component may be, but is not limited to, a process running on a processor, a processor, an object, an executable file, an execution thread, a program, or a computer. By way of illustration, both an application running on a computing device and the computing device itself can be components. One or more components may reside within a process or execution thread, and a component may be located on one computer or distributed across two or more computers. Additionally, these components can be executed from various computer-readable media that store diverse data structures. For instance, components may communicate via local or remote processes based on signals carrying one or more data packets (e.g., data from interactions between components within a local system, distributed system, or network, such as the internet, which interacts with other systems through signals).

The above description with reference to the accompanying drawings illustrates some embodiments of the present disclosure, but does not thereby limit the scope of the present disclosure. Any modifications, equivalent replacements, and improvements made by those skilled in the art without departing from the scope and essence of the present disclosure shall fall within the claims of the present disclosure.

Claims

1. An information transmission method, comprising:

receiving a plurality of transport blocks sent by at least one second node, wherein the plurality of transport blocks form a transport block set;
sending feedback information of the transport block set to the at least one second node;
wherein the feedback information represents a reception status of the transport blocks sent by the at least one second node, and comprises at least two of: a prefix codeword, a padding bit sequence, or a compressed codeword.

2. The method according to claim 1, wherein the feedback information further comprises information of plurality of transport blocks in a transport block subset of the transport block set, and the method further comprises:
determining, based on the information of the transport block subset, at least two of: the prefix codeword, the padding bit sequence, or the compressed codeword.

3. The method according to claim 2, wherein the information of the transport block subset comprises at least one of: a set of transport block identifiers of the transport block subset, a maximum number of transport blocks in the transport block subset, a number of transport blocks in the transport block subset, a size of an ordered set of transport block identifiers, or a length of the feedback information;
in response to the content determined based on the information of the transport block subset comprising the prefix codeword, the prefix codeword is determined according to the number of prefix codeword bits, and the number of prefix codeword bits is determined based on at least one of: the size of the set of transport block identifiers of the transport block subset, the maximum number of transport blocks in the transport block subset, the number of transport blocks in the transport block subset, the size of the ordered set of transport block identifiers, and the length of the feedback information.

4. The method according to claim 3, wherein the information of the transport block subset comprises the set of transport block identifiers of the transport block subset, the maximum number of transport blocks in the transport block subset, and the number of transport blocks in the transport block subset; the number of prefix codeword bits is determined according to one of the following formulas:

Np = Pmax - P + 1, where Np is the number of prefix codeword bits, Pmax is the maximum number of transport blocks in the transport block subset, and P is the number of transport blocks in the transport block subset; and
Np = Pmax - $P_{ACK}$ + 1, where Np is the number of prefix codeword bits, Pmax is the maximum number of transport blocks in the transport block subset, and $P_{ACK}$ is the size of the set of transport block identifiers of the transport block subset.

5. The method according to claim 3, wherein the information of the transport block subset comprises the maximum number of transport blocks in the transport block subset, the number of transport blocks in the transport block subset, and the size of the ordered set of transport block identifiers; the number of prefix codeword bits is determined according to one of the following formulas:

$$\text{Np} = 1 + \left\lceil log_2 \binom{\text{Na}}{\text{Pmax}} \right\rceil - \left\lceil log_2 \binom{\text{Na}}{P} \right\rceil$$ , where Np is the number of prefix codeword bits, Pmax is the maximum number of transport blocks in the transport block subset, P is the number of transport blocks in the transport block subset, and Na is the size of the ordered set of transport block identifiers;

$$\text{Np} = \max_{x=0,1,\cdots,\text{Pmax}} \left( \text{Pmax-}x + 1 + \left\lceil log_2 \binom{\text{Na}}{x} \right\rceil \right) - \left\lceil log_2 \binom{\text{Na}}{P} \right\rceil$$ , where Np is the number of prefix codeword bits, Pmax is the maximum number of transport blocks in the transport block subset, P is the number of transport blocks in the transport block subset, and Na is the size of the ordered set of transport block identifiers; and

$$\text{Np} = \text{Pmax} - \left\lceil \frac{\text{Na+1}}{3} \right\rceil + 1 + \left\lceil log_2 \binom{\text{Na}}{\left\lceil \frac{\text{Na+1}}{3} \right\rceil} \right\rceil - \left\lceil log_2 \binom{\text{Na}}{P} \right\rceil$$ , where Np is the number of prefix codeword bits, Pmax is the maximum number of transport blocks in the transport block subset, P is the number of transport blocks in the transport block subset, and Na is the size of the ordered set of transport block identifiers.

6. The method according to claim 3, wherein the information of the transport block subset comprises the number of transport blocks in the transport block subset, the size of the ordered set of transport block identifiers, and the length of the feedback information; the number of prefix codeword bits is determined according to the following formula:

$$\mathrm{Np} = \mathrm{Nf} - \left\lceil log_2 \binom{\mathrm{Na}}{P} \right\rceil ;$$

where Np is the number of prefix codeword bits, Nf is the length of feedback information, P is the number of transport blocks in the transport block subset, and Na is the size of the ordered set of transport block identifiers.

7. The method according to claim 1, wherein the feedback information comprises the prefix codeword, and the content of the prefix codeword comprises one of:

the first Np-1 bits are set to 0, and the last bit is set to 1;
the first Np-1 bits are set to 1, and the last bit is set to 0;
the first bit is set to 1, and the remaining Np-1 bits are set to 0; and
the first bit is set to 0, and the remaining Np-1 bits are set to 1;
where Np is the length of the prefix codeword.

8. The method according to claim 2, wherein the information of the transport block subset comprises at least one of: a set of transport block identifiers of the transport block subset, a maximum number of transport blocks in the transport block subset, a number of transport blocks in the transport block subset, a size of the ordered set of transport block identifiers, and a length of the feedback information;
in response to the content determined based on the information of the transport block subset comprising the padding bit sequence, the padding bit sequence is determined according to a length of the padding bit sequence, and the length of the padding bit sequence is determined based on at least one of: the size of the set of transport block identifiers of the transport block subset, the maximum number of transport blocks in the transport block subset, the number of transport blocks in the transport block subset, the size of the ordered set of transport block identifiers, or the length of the feedback information.

9. The method according to claim 1, wherein a length of the padding bit sequence is non-zero, and the padding bit sequence is one of:

all-zero sequence;
all-one sequence; and
pseudo-random sequence.

10. The method according to claim 1, wherein the information transmission method is applied to the first node, a length of the padding bit sequence is not zero, and the padding bit sequence is a preset sequence predetermined through negotiation between the first node and the second node.

11. The method according to claim 1, wherein a length of the padding bit sequence is zero, and the padding bit sequence is a Null sequence.

12. The method according to claim 2, wherein the information of the transport block subset comprises at least one of: a set of transport block identifiers of the transport block subset, a maximum number of transport blocks in the transport block subset, a number of transport blocks in the transport block subset, a size of an ordered set of transport block identifiers, or a transport block error pattern;
in response to the content determined based on the information of the transport block subset comprising the compressed codeword, the compressed codeword is determined according to at least one of: a size of the set of transport block identifiers of the transport block subset, the maximum number of transport blocks in the transport block subset, the number of transport blocks in the transport block subset, the size of the ordered set of transport block identifiers, or the transport block error pattern.

13. The method according to claim 2, wherein the information of the transport block subset comprises a number of transport blocks in the transport block subset and a size of an ordered set of transport block identifiers; in response to the content determined based on the information of the transport block subset comprising the compressed codeword, a length of the compressed codeword is determined according to the following formula:

$$\mathrm{Nc} = \left\lceil log_2 \binom{\mathrm{Na}}{P} \right\rceil;$$

where Nc is the length of the compressed codeword, P is the number of transport blocks in the transport block subset, and Na is the size of the ordered set of transport block identifiers.

14. The method according to claim 1, wherein the feedback information is obtained by concatenating at least two of: the prefix codeword, the padding bit sequence, or the compressed codeword.

15. The method according to any one of claims 2 to 6, 8, 12, and 13, wherein the transport block subset is a set composed of correct transport blocks or erroneous transport blocks in the transport block set.

16. The method according to claim 1, wherein the transport block is indicated by a transport block identifier, and the transport block identifier comprises at least one of:
a user equipment, UE, identifier, an index value of the UE identifier, a signature index.

17. The method according to claim 16, wherein in response to the transport block identifier comprising the UE identifier, the UE identifier comprises at least one of:
subscription permanent identifier, generic public subscription identifier, permanent equipment identifier, network access identifier, subscription concealed identifier, globally unique temporary identity, radio network temporary identifier, RNTI, system information RNTI, paging RNTI, random access RNTI, temporary cell RNTI, cell RNTI, transmit power control-PUCCH RNTI, transmit power control-PUSCH RNTI, transmit power control-sounding reference symbols RNTI, interruption RNTI, modulation coding scheme cell RNTI, configured scheduling RNTI, slot format indication RNTI, or semi-persistent CSI RNTI.

18. The method according to claim 16, wherein in response to the transport block identifier comprising the signature index which is a signature index of a random access signature, the random access signature comprises at least one of:
a pilot, a reference signal, a preamble, a spread spectrum sequence, an interleaver, an interleaver pattern, an interleaver sequence, a scrambling sequence, or a sparse code sequence.

19. The method according to claim 1, wherein sending feedback information of the transport block set to the at least one second node comprises:

performing channel coding on the feedback information of the transport block set to obtain channel-coded feedback information; and
transmitting the channel-coded feedback information to the at least one second node.

20. The method according to claim 19, wherein the channel coding comprises at least one of:
polar coding, low-density parity-check, LDPC, coding, convolutional coding, turbo coding, Reed-Muller, RM, coding, Reed-Solomon, RS, coding, Bose-Chaudhuri-Hocquenghem, BCH, coding, concatenated coding, cyclic coding, block coding, Hamming coding, Golay coding, repetition coding, single parity-check coding, cyclic redundancy check coding, superposition coding, sparse superposition coding, sparse regression coding, lattice coding, algebraic geometry coding, Goppa coding, Polarization-adjusted convolutional coding, pre-transformed polar coding, or parity-check polar coding.

21. An information transmission method, comprising:

sending a transport block to a first node; and
receiving feedback information sent by the first node according to the transport block, wherein the feedback information represents a reception status of the transport block, and comprises at least two of: a prefix codeword, a padding bit sequence, or a compressed codeword.

22. The method according to claim 21, wherein the transport block is indicated by a transport block identifier which comprises at least one of:
a user equipment, UE, identifier, an index value of the UE identifier, or a signature index.

23. The method according to claim 21, further comprising:

   decoding the feedback information to obtain a decoding result; and
   determining, based on the decoding result, the reception status of the transport block by the first node.

24. A communication device, comprising:

   at least one processor; and
   at least one memory, configured to store at least one program;
   wherein the at least one program, when executed by the at least one processor, performs the information transmission method according to any one of claims 1 to 23.

25. A computer-readable storage medium storing a processor-executable program, wherein the processor-executable program, when executed by a processor, causes the processor to perform the information transmission method according to any one of claims 1 to 23.

26. A computer program product comprising a computer program or computer instructions, wherein the computer program or the computer instructions are stored in a computer-readable storage medium, and a processor of a communication device reads the computer program or the computer instructions from the computer-readable storage medium, and the processor executes the computer program or the computer instructions, causing the communication device to perform the information transmission method according to any one of claims 1 to 23.

100

110

120

140

130

FIG. 1

S1000

receive transport blocks sent by at least one second node, where the transport blocks form a transport block set

S2000

obtain information about a transport block subset of the transport block set based on the transport block set.

S3000

perform encoding processing on the information of the transport block subset to obtain feedback information, where the feedback information is used to indicate the reception status of transport blocks sent by the at least one second node; the encoding processing includes compression encoding of the information of the transport block subset

S4000

send the feedback information to the at least one second node

FIG. 2

S3100

determine a prefix codeword based on the information of the transport
block subset; determine a padding bit sequence based on the information
of the transport block subset; determine a compressed codeword
based on the information of the transport block subset

S3200

concatenate at least two of the prefix codeword, the padding bit sequence,
and the compressed codeword to obtain the feedback information

FIG. 3

S3140

determine whether
each element in the ordered set of transport
block identifiers belongs to the set of correct
transport block identifiers

Y

N

S3141

the i-th bit of
the transport block error pattern
a(i)=ack

S3142

the i-th bit of
the transport block error pattern
a(i)=nack

FIG. 4

S3150

according to a preset length of the transport block error pattern, obtain an initial transport block error pattern corresponding to the preset length, where each element in the initial transport block error pattern corresponds to a NACK bit

S3151

according to the set of correct transport blocks, set the bits whose indices are equal to the elements in the set of correct transport blocks to ACK bits within the initial transport block error pattern

S3152

determine the initial transport block error pattern as the transport block error pattern

FIG. 5

Start

j=0, i=1, x=0, y=1,
z=0, n1=P, n=Na

i > Na? — True

False

I(i) ∈ BI? — False

True

x   = x + (n-n1)/n*y;
y   = n1/n*y;
n1 = n1 - 1;

y = (n-n1)/n*y

i   = i + 1;
n = n - 1;
z = x + y;

z ≤ 0.5? — False

True

j       = j + 1;
c(j) = 0;
x      = 2*x;
y      = 2*y;
z      = x + y;

z ≤ 0.5? — True

False

x ≥ 0.5? — False

True

j       = j + 1;
c(j)  = 1;
x      = 2*x - 1;
y      = 2*y;

z = x + y

j < Nc? — False

True

z    = 2*z;
j     = j + 1;
c(j) = 0;

z < 1? — True

False

c(j) = 1;
z     = z - 1;

End

FIG. 6

| | Input: BI, <I(1), I(2), …, I(Na)>, Na, P | | |
|---|---|---|---|
| | Output: c = [c(1), c(2), …, c(Nc)] | | |
| 1 | w = 30, k = 1, j = -1; | 28 | end if |
| 2 | x = 0, y = $2^w$, rl = 0, nb = 0; | 29 | c(j) = nb; j = j + 1; |
| 3 | n = Na, n0 = Na - P; | 30 | nb = e; |
| 4 | Nc = $\left\lceil \log_2 \begin{pmatrix} Na \\ P \end{pmatrix} \right\rceil$; | 31 | while rl > 0 do |
| 5 | c = zeros(1, Nc); | 32 | c(j)=rb; j=j+1; |
| 6 | while k $\leq$ Na do | 33 | rl = rl - 1; |
| 7 | z = $\left\lfloor \dfrac{2 \cdot y \cdot n0 + n}{2 \cdot n} \right\rfloor$; | 34 | end while |
| 8 | if I(k) $\in$ BI then | 35 | end if |
| 9 | y = z; | 36 | end while |
| 10 | n0 = n0 - 1; | 37 | end while |
| 11 | else | 38 | e = $\left\lfloor x / 2^w \right\rfloor$; |
| 12 | x = x + z; y = y - z; | 39 | if e > 1 then |
| 13 | end if | 40 | nb = nb + 1; |
| 14 | n = n - 1; k = k + 1; | 41 | rb = 0; |
| 15 | while y < $2^w$ do | 42 | e = e - 2; |
| 16 | y = 2·y; | 43 | else |
| 17 | e = $\left\lfloor x / 2^w \right\rfloor$; | 44 | rb = 1; |
| 18 | x = 2·(x mod $2^w$); | 47 | end if |
| 19 | if e = = 1 then | 48 | c(j) = nb; |
| 20 | rl = rl + 1; | 49 | j = j + 1; |
| 21 | else | 50 | nb = e; |
| 22 | if e > 1 then | 51 | while rl > 0 do |
| 23 | nb = nb + 1; | 52 | c(j) = rb; j = j + 1; |
| 24 | rb = 0; | 53 | rl = rl - 1; |
| 25 | e = e - 2; | 54 | end while |
| 26 | else | 55 | $c_j$ = nb; |
| 27 | rb = 1; | 56 | return c = [c(1), c(2), …, c(Nc)]; |

FIG. 7

FIG. 8

| | | | |
|---|---|---|---|
| | Input: [a(1), a(2), ..., a(Na)], Na, P | | |
| | Output: c = [c(1), c(2), ..., c(Nc)] | | |
| 1 | w = 30, k = 1, j = -1; | 28 | end if |
| 2 | x = 0, y = $2^w$, rl = 0, nb = 0; | 29 | $c_j$ = nb; j = j + 1; |
| 3 | n = Na, n0 = Na - P; | 30 | nb = e; |
| 4 | Nc = $\left\lceil \log_2 \begin{pmatrix} Na \\ P \end{pmatrix} \right\rceil$; | 31 | while rl > 0 do |
| 5 | c = zeros(1, Nc); | 32 | $c_j$ = rb; j = j+1; |
| 6 | while k ≤ Na do | 33 | rl = rl - 1; |
| 7 | z = $\left\lfloor \dfrac{2 \cdot y \cdot n0 + n}{2 \cdot n} \right\rfloor$; | 34 | end while |
| 8 | if a(k) = = nack then | 35 | end if |
| 9 | y = z; | 36 | end while |
| 10 | n0 = n0 - 1; | 37 | end while |
| 11 | else | 38 | e = $\left\lfloor x / 2^w \right\rfloor$; |
| 12 | x = x + z; y = y - z; | 39 | if e > 1 then |
| 13 | end if | 40 | nb = nb + 1; |
| 14 | n = n - 1; k = k + 1; | 41 | rb = 0; |
| 15 | while y < $2^w$ do | 42 | e = e - 2; |
| 16 | y = 2·y; | 43 | else |
| 17 | e = $\left\lfloor x / 2^w \right\rfloor$; | 44 | rb = 1; |
| 18 | x = 2·(x mod $2^w$); | 47 | end if |
| 19 | if e = = 1 then | 48 | $c_j$ = nb; |
| 20 | rl = rl + 1; | 49 | j = j + 1; |
| 21 | else | 50 | nb = e; |
| 22 | if e > 1 then | 51 | while rl > 0 do |
| 23 | nb = nb + 1; | 52 | $c_j$ = rb; |
| 24 | rb = 0; | 53 | j = j + 1; rl = rl - 1; |
| 25 | e = e - 2; | 54 | end while |
| 26 | else | 55 | $c_j$ = nb; |
| 27 | rb = 1; | 56 | return c = [c(1), c(2), ..., c(Nc)]; |

FIG. 9

(a)

(b)

(c)

(d)

(e)

(f)

(g)

(h)

prefix codeword bit(s)    compressed codeword bit(s)    padding bit(s)

FIG. 10

| Second Node (Terminal) | Transport Block | Transport Block Identifier (UE Identifier) |
|---|---|---|
| SN(1) | b(1) | 4 |
| SN(2) | b(2) | 3 |
| SN(3) | b(3) | 2 |
| SN(4) | b(4) | 5 |

FIG. 11

| Second Node (Terminal) | Transport Block | Random Access Signature (Preamble) | Transport Block Identifier (Signature Index) |
|---|---|---|---|
| SN(1) | b(1) | r(4) | 3 |
| SN(2) | b(2) | r(3) | 2 |
| SN(3) | b(3) | r(2) | 1 |
| SN(4) | b(4) | r(1) | 0 |

FIG. 12

FIG. 13

| Second node | Transport Block | Random Access Signature (Reference Signal) | Transport Block Identifier (Signature Index) |
|---|---|---|---|
| SN(1) | b(1) | r(1) | 1 |
| SN(2) | b(2) | r(5) | 5 |
| SN(3) | b(3) | r(3) | 3 |
| SN(4) | b(4) | r(2) | 2 |

FIG. 14

compressed codeword of 3 bits | padding bit sequence of 1 bit | prefix codeword of 3 bits

$$1, 1, 0, 1, 0, 1, 1$$

feedback information of length Nf=7

FIG. 15

| Second node (Terminal) | Transport Block | Transport Block Identifier (UE Identifier) | Random Access Signature (Reference Signal) | Signature Index |
|---|---|---|---|---|
| SN(1) | b(1) | 4 | r(5) | 4 |
| SN(2) | b(2) | 3 | r(4) | 3 |
| SN(3) | b(3) | 2 | r(5) | 4 |
| SN(4) | b(4) | 0 | r(1) | 0 |

FIG. 16

padding bit sequence of 1 bit | compressed codeword of 3 bits | prefix codeword of 3 bits

$$0, 1, 1, 1, 1, 0, 0$$

feedback information of length Nf=7

FIG. 17

| Second node (Terminal) | Transport Block | UE Identifier (MCS-C-RNTI) | Random Access Signature (Scrambling Sequence) | Transport Block Identifier (Signature Index) |
|---|---|---|---|---|
| SN(1) | b(1) | 4 | r(5) | 4 |
| SN(2) | b(2) | 3 | r(4) | 3 |
| SN(3) | b(3) | 2 | r(2) | 1 |
| SN(4) | b(4) | 0 | r(1) | 0 |

FIG. 18(a)

prefix codeword of 4 bits     padding bit sequence of 2 bit

$$1, 1, 1, 0, 1, 0$$

feedback information of length Nf=7

FIG. 18(b)

prefix code of Pmax–P+1=2 bits     transport block error pattern a of 5-bit compressed codeword c

$$1, 0, 1, 0, 0, 0, 1$$

feedback information of length Nf=7

FIG. 19

| Transport block error pattern a | | | | | | | | Compressed codeword c | | | | |
|---|---|---|---|---|---|---|---|---|---|---|---|---|
| 1 | 1 | 0 | 0 | 0 | 0 | 0 | 0 | 1 | 1 | 1 | 1 | 1 |
| 1 | 0 | 1 | 0 | 0 | 0 | 0 | 0 | 1 | 1 | 1 | 1 | 0 |
| 1 | 0 | 0 | 1 | 0 | 0 | 0 | 0 | 1 | 1 | 1 | 0 | 1 |
| 1 | 0 | 0 | 0 | 1 | 0 | 0 | 0 | 1 | 1 | 1 | 0 | 0 |
| 1 | 0 | 0 | 0 | 0 | 1 | 0 | 0 | 1 | 1 | 0 | 1 | 1 |
| 1 | 0 | 0 | 0 | 0 | 0 | 1 | 0 | 1 | 1 | 0 | 1 | 0 |
| 1 | 0 | 0 | 0 | 0 | 0 | 0 | 1 | 1 | 1 | 0 | 0 | 1 |
| 0 | 1 | 1 | 0 | 0 | 0 | 0 | 0 | 1 | 0 | 1 | 1 | 1 |
| 0 | 1 | 0 | 1 | 0 | 0 | 0 | 0 | 1 | 0 | 1 | 1 | 0 |
| 0 | 1 | 0 | 0 | 1 | 0 | 0 | 0 | 1 | 0 | 1 | 0 | 1 |
| 0 | 1 | 0 | 0 | 0 | 1 | 0 | 0 | 1 | 0 | 1 | 0 | 0 |
| 0 | 1 | 0 | 0 | 0 | 0 | 1 | 0 | 1 | 0 | 0 | 1 | 1 |
| 0 | 1 | 0 | 0 | 0 | 0 | 0 | 1 | 1 | 0 | 0 | 1 | 0 |
| 0 | 0 | 1 | 1 | 0 | 0 | 0 | 0 | 1 | 0 | 0 | 0 | 1 |
| 0 | 0 | 1 | 0 | 1 | 0 | 0 | 0 | 0 | 1 | 1 | 1 | 1 |
| 0 | 0 | 1 | 0 | 0 | 1 | 0 | 0 | 0 | 1 | 1 | 1 | 0 |
| 0 | 0 | 1 | 0 | 0 | 0 | 1 | 0 | 0 | 1 | 1 | 0 | 1 |
| 0 | 0 | 1 | 0 | 0 | 0 | 0 | 1 | 0 | 1 | 1 | 0 | 0 |
| 0 | 0 | 0 | 1 | 1 | 0 | 0 | 0 | 0 | 1 | 0 | 1 | 1 |
| 0 | 0 | 0 | 1 | 0 | 1 | 0 | 0 | 0 | 1 | 0 | 1 | 0 |
| 0 | 0 | 0 | 1 | 0 | 0 | 1 | 0 | 0 | 1 | 0 | 0 | 1 |
| 0 | 0 | 0 | 1 | 0 | 0 | 0 | 1 | 0 | 0 | 1 | 1 | 1 |
| 0 | 0 | 0 | 0 | 1 | 1 | 0 | 0 | 0 | 0 | 1 | 1 | 0 |
| 0 | 0 | 0 | 0 | 1 | 0 | 1 | 0 | 0 | 0 | 1 | 0 | 1 |
| 0 | 0 | 0 | 0 | 1 | 0 | 0 | 1 | 0 | 0 | 1 | 0 | 0 |
| 0 | 0 | 0 | 0 | 0 | 1 | 1 | 0 | 0 | 0 | 0 | 1 | 1 |
| 0 | 0 | 0 | 0 | 0 | 1 | 0 | 1 | 0 | 0 | 0 | 1 | 0 |
| 0 | 0 | 0 | 0 | 0 | 0 | 1 | 1 | 0 | 0 | 0 | 0 | 1 |

FIG. 20

transport block error pattern a of
5-bit compressed codeword c

prefix code of
Pmax–P+1=3 bits

$$1, 0, 0, 0, 1, 0, 1, 1$$

feedback information of length Nf=8

FIG. 21

prefix code of
Pmax–P+1=2 bits

transport block error pattern a
of 5-bit compressed codeword c

$$1, 0, 0, 1, 1, 1, 1$$

feedback information of length Nf=7

FIG. 22

| Transport block error pattern a | | | | | | | | Compressed codeword c | | | | |
|---|---|---|---|---|---|---|---|---|---|---|---|---|
| 1 | 1 | 1 | 1 | 1 | 1 | 0 | 0 | 1 | 1 | 1 | 1 | 1 |
| 1 | 1 | 1 | 1 | 1 | 0 | 1 | 0 | 1 | 1 | 1 | 1 | 0 |
| 1 | 1 | 1 | 1 | 1 | 0 | 0 | 1 | 1 | 1 | 1 | 0 | 1 |
| 1 | 1 | 1 | 1 | 0 | 1 | 1 | 0 | 1 | 1 | 1 | 0 | 0 |
| 1 | 1 | 1 | 1 | 0 | 1 | 0 | 1 | 1 | 1 | 0 | 1 | 1 |
| 1 | 1 | 1 | 1 | 0 | 0 | 1 | 1 | 1 | 1 | 0 | 1 | 0 |
| 1 | 1 | 1 | 0 | 1 | 1 | 1 | 0 | 1 | 1 | 0 | 0 | 1 |
| 1 | 1 | 1 | 0 | 1 | 1 | 0 | 1 | 1 | 0 | 1 | 1 | 1 |
| 1 | 1 | 1 | 0 | 1 | 0 | 1 | 1 | 1 | 0 | 1 | 1 | 0 |
| 1 | 1 | 1 | 0 | 0 | 1 | 1 | 1 | 1 | 0 | 1 | 0 | 1 |
| 1 | 1 | 0 | 1 | 1 | 1 | 1 | 0 | 1 | 0 | 1 | 0 | 0 |
| 1 | 1 | 0 | 1 | 1 | 1 | 0 | 1 | 1 | 0 | 0 | 1 | 1 |
| 1 | 1 | 0 | 1 | 1 | 0 | 1 | 1 | 1 | 0 | 0 | 1 | 0 |
| 1 | 1 | 0 | 1 | 0 | 1 | 1 | 1 | 1 | 0 | 0 | 0 | 1 |
| 1 | 1 | 0 | 0 | 1 | 1 | 1 | 1 | 0 | 1 | 1 | 1 | 1 |
| 1 | 0 | 1 | 1 | 1 | 1 | 1 | 0 | 0 | 1 | 1 | 1 | 0 |
| 1 | 0 | 1 | 1 | 1 | 1 | 0 | 1 | 0 | 1 | 1 | 0 | 1 |
| 1 | 0 | 1 | 1 | 1 | 0 | 1 | 1 | 0 | 1 | 1 | 0 | 0 |
| 1 | 0 | 1 | 1 | 0 | 1 | 1 | 1 | 0 | 1 | 0 | 1 | 1 |
| 1 | 0 | 1 | 0 | 1 | 1 | 1 | 1 | 0 | 1 | 0 | 1 | 0 |
| 1 | 0 | 0 | 1 | 1 | 1 | 1 | 1 | 0 | 1 | 0 | 0 | 1 |
| 0 | 1 | 1 | 1 | 1 | 1 | 1 | 0 | 0 | 0 | 1 | 1 | 1 |
| 0 | 1 | 1 | 1 | 1 | 1 | 0 | 1 | 0 | 0 | 1 | 1 | 0 |
| 0 | 1 | 1 | 1 | 1 | 0 | 1 | 1 | 0 | 0 | 1 | 0 | 1 |
| 0 | 1 | 1 | 1 | 0 | 1 | 1 | 1 | 0 | 0 | 1 | 0 | 0 |
| 0 | 1 | 1 | 0 | 1 | 1 | 1 | 1 | 0 | 0 | 0 | 1 | 1 |
| 0 | 1 | 0 | 1 | 1 | 1 | 1 | 1 | 0 | 0 | 0 | 1 | 0 |
| 0 | 0 | 1 | 1 | 1 | 1 | 1 | 1 | 0 | 0 | 0 | 0 | 1 |

FIG. 23

| Second node (Terminal) | Transport Block | Random Access Signature (Interleaver) | Transport Block Identifier (Signature Index) |
|---|---|---|---|
| SN(1) | b(1) | r(2) | 2 |
| SN(2) | b(2) | r(3) | 3 |
| SN(3) | b(3) | r(4) | 4 |
| SN(1) | b(4) | r(1) | 1 |

FIG. 24

prefix code of Pmax–P+1=1 bit

transport block error pattern a of 5-bit compressed codeword c

0, 1, 0, 1, 0

feedback information of length Nf=7

FIG. 25

| Transport block error pattern a | | | | | | Compressed codeword c | | | |
|---|---|---|---|---|---|---|---|---|---|
| 1 | 1 | 0 | 0 | 0 | 0 | 1 | 1 | 1 | 1 |
| 1 | 0 | 1 | 0 | 0 | 0 | 1 | 1 | 1 | 0 |
| 1 | 0 | 0 | 1 | 0 | 0 | 1 | 1 | 0 | 1 |
| 1 | 0 | 0 | 0 | 1 | 0 | 1 | 1 | 0 | 0 |
| 1 | 0 | 0 | 0 | 0 | 1 | 1 | 0 | 1 | 1 |
| 0 | 1 | 1 | 0 | 0 | 0 | 1 | 0 | 1 | 0 |
| 0 | 1 | 0 | 1 | 0 | 0 | 1 | 0 | 0 | 1 |
| 0 | 1 | 0 | 0 | 1 | 0 | 1 | 0 | 0 | 0 |
| 0 | 1 | 0 | 0 | 0 | 1 | 0 | 1 | 1 | 1 |
| 0 | 0 | 1 | 1 | 0 | 0 | 0 | 1 | 1 | 0 |
| 0 | 0 | 1 | 0 | 1 | 0 | 0 | 1 | 0 | 1 |
| 0 | 0 | 1 | 0 | 0 | 1 | 0 | 1 | 0 | 0 |
| 0 | 0 | 0 | 1 | 1 | 0 | 0 | 0 | 1 | 1 |
| 0 | 0 | 0 | 1 | 0 | 1 | 0 | 0 | 1 | 0 |
| 0 | 0 | 0 | 0 | 1 | 1 | 0 | 0 | 0 | 1 |

FIG. 26

prefix code of 4 bits   5-bit compressed odeword

$$1, 1, 1, 0, 1, 1, 0$$

feedback information of length Nf=7

FIG. 27

3-bit compressed codeword    prefix code of 4 bits

1, 1, 0, 1, 0, 0, 0

feedback information of length Nf=7

FIG. 28

S5000

send a transport block to a first node

S6000

receive feedback information sent by the first node, where the feedback information is used to indicate the reception status of the transport block

FIG. 29

S7100

decode the feedback signal corresponding to the feedback information to obtain a decoding result

S7200

the decoding is successful ?

N → 

Y → 

S7310

the acknowledgment for the transport block sent by the second node is NACK

S7300

If success, obtain the set of correct transport block identifiers, and determine whether the decoding result contains the transport block identifier sent by the second node

N

Y

S7320

the acknowledgment for the transport block sent by the second node is ACK

FIG. 30

FIG. 31

FIG. 32

FIG. 33

FIG. 34

## INTERNATIONAL SEARCH REPORT

| International application No. |
| --- |
| **PCT/CN2024/070834** |

| A. | CLASSIFICATION OF SUBJECT MATTER |
| --- | --- |

H04L1/16(2023.01)i; H04W28/04(2009.01)i

According to International Patent Classification (IPC) or to both national classification and IPC

| B. | FIELDS SEARCHED |
| --- | --- |

Minimum documentation searched (classification system followed by classification symbols)

IPC: H04L1/-, H04W28/-

Documentation searched other than minimum documentation to the extent that such documents are included in the fields searched

Electronic data base consulted during the international search (name of data base and, where practicable, search terms used)

CNABS; CNTXT; CNKI; BAIDU; VEN; USTXT; WOTXT; EPTXT; IEEE; 3GPP; BING: 标识, 传输块, 码块, 反馈, 集合, 接收, 码字, 免调度, 前缀, 填充, 响应, 压缩, 序列, ACK, block, coding, feedback, NACK, recive, response, set, TB, transmission, transport, transmi+, cod+, compress+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108282247 A (HUAWEI TECHNOLOGIES CO., LTD.) 13 July 2018 (2018-07-13) description, paragraphs [0147]-[0161] | 1-3, 7-12, 14-26 |
| A | CN 106301703 A (ZTE CORP.) 04 January 2017 (2017-01-04) entire document | 1-26 |
| A | CN 108631956 A (NTT DOCOMO INC.) 09 October 2018 (2018-10-09) entire document | 1-26 |
| A | CN 108809524 A (HUAWEI TECHNOLOGIES CO., LTD.) 13 November 2018 (2018-11-13) entire document | 1-26 |
| A | WO 2020244599 A1 (HUAWEI TECHNOLOGIES CO., LTD.) 10 December 2020 (2020-12-10) entire document | 1-26 |
| A | US 2021111740 A1 (AT & T INTELLECTUAL PROPERTY I, L.P.) 15 April 2021 (2021-04-15) entire document | 1-26 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **01 March 2024** | **07 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/070834**

### C. DOCUMENTS CONSIDERED TO BE RELEVANT

| Category* | Citation of document, with indication, where appropriate, of the relevant passages | Relevant to claim No. |
|---|---|---|
| A | QUALCOMM INC. "R1-1705618, Multi-bit HARQ-ACK feedback HARQ design principle" *3GPP TSG RA WG1 #88bis*, 25 March 2017 (2017-03-25), entire document | 1-26 |

Form PCT/ISA/210 (second sheet) (July 2022)

International application No.

**PCT/CN2024/070834**

| Patent document cited in search report | | | Publication date (day/month/year) | Patent family member(s) | | | Publication date (day/month/year) |
|---|---|---|---|---|---|---|---|
| CN | 108282247 | A | 13 July 2018 | EP | 3565151 | A1 | 06 November 2019 |
| | | | | EP | 3565151 | A4 | 22 January 2020 |
| | | | | EP | 3565151 | B1 | 24 May 2023 |
| | | | | WO | 2018127064 | A1 | 12 July 2018 |
| | | | | US | 2019335431 | A1 | 31 October 2019 |
| | | | | US | 11197281 | B2 | 07 December 2021 |
| | | | | IN | 201937031492 | A | 11 October 2019 |
| | | | | CN | 108282247 | B | 19 November 2021 |
| CN | 106301703 | A | 04 January 2017 | WO | 2016184289 | A1 | 24 November 2016 |
| | | | | EP | 3297199 | A1 | 21 March 2018 |
| | | | | EP | 3297199 | A4 | 23 May 2018 |
| | | | | EP | 3297199 | B1 | 19 August 2020 |
| | | | | US | 2018287741 | A1 | 04 October 2018 |
| | | | | US | 10749636 | B2 | 18 August 2020 |
| | | | | CN | 106301703 | B | 07 April 2020 |
| CN | 108631956 | A | 09 October 2018 | WO | 2018171649 | A1 | 27 September 2018 |
| | | | | US | 2020084004 | A1 | 12 March 2020 |
| | | | | CN | 110337791 | A | 15 October 2019 |
| | | | | CN | 110337791 | B | 30 August 2022 |
| CN | 108809524 | A | 13 November 2018 | WO | 2018196550 | A1 | 01 November 2018 |
| | | | | US | 2020036489 | A1 | 30 January 2020 |
| | | | | US | 11128416 | B2 | 21 September 2021 |
| | | | | EP | 3588825 | A1 | 01 January 2020 |
| | | | | EP | 3588825 | A4 | 18 March 2020 |
| | | | | EP | 3588825 | B1 | 10 May 2023 |
| | | | | IN | 201947037633 | A | 04 October 2019 |
| | | | | IN | 403587 | B | 19 August 2022 |
| | | | | CN | 108809524 | B | 09 April 2021 |
| WO | 2020244599 | A1 | 10 December 2020 | EP | 3958633 | A1 | 23 February 2022 |
| | | | | EP | 3958633 | A4 | 15 June 2022 |
| | | | | US | 2022094480 | A1 | 24 March 2022 |
| | | | | CN | 112039639 | A | 04 December 2020 |
| | | | | CN | 112039639 | B | 05 April 2022 |
| US | 2021111740 | A1 | 15 April 2021 | US | 11025279 | B2 | 01 June 2021 |
| | | | | US | 2021273656 | A1 | 02 September 2021 |
| | | | | US | 11533065 | B2 | 20 December 2022 |
| | | | | US | 2023140205 | A1 | 04 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023104978046